# EUROPEAN PATENT SPECIFICATION

(11) **EP 3 759 682 B1**
(45) Date of publication and mention of the grant of the patent: **03.12.2025**
(21) Application number: 19760534.8
(22) Date of filing: 01.03.2019
(51) Int. Cl.: G09B 5/12, G09B 5/06, G09B 7/04, G09B 7/08

(54) **SYSTEMS AND METHODS FOR AUTOMATED CONTENT EVALUATION AND DELIVERY**
SYSTEME UND VERFAHREN ZUR AUTOMATISIERTEN INHALTSAUSWERTUNG UND -AUSGABE
SYSTÈMES ET PROCÉDÉS D'ÉVALUATION ET DE DISTRIBUTION AUTOMATISÉES DE CONTENUS

(30) Priority: 02.03.2018 US 201862637933 P; 30.03.2018 US 201862651004 P; 15.10.2018 US 201862745941 P
(43) Date of publication of application: 06.01.2021
(73) Proprietor: Pearson Education, Inc., Hoboken NJ 07030 (US)
(72) Inventor: NOBLE, Jacob, Bloomington, Minnesota 55437 (US); KORTAN, Victoria, Bloomington, Minnesota 55437 (US); LAPINA, Kateryna, Bloomington, Minnesota 55437 (US); STRONG, David, Bloomington, Minnesota 55437 (US); KATTWINKEL, Eric, Bloomington, Minnesota 55437 (US); OROS, Luis, Bloomington, Minnesota 55437 (US); LATHROP, Quinn, Bloomington, Minnesota 55437 (US); SWEETEN, Matthew, Bloomington, Minnesota 55437 (US); MCTAVISH, Thomas, Bloomington, Minnesota 55437 (US); KING, David, Bloomington, Minnesota 55437 (US); LARUSSON, Johann, Bloomington, Minnesota 55437 (US); STEWART, Timothy, Bloomington, Minnesota 55437 (US); SHAMSI, Nina, Bloomington, Minnesota 55437 (US); CORBIN, James David, Bloomington, Minnesota 55437 (US); NICKEL, Alex, Bloomington, Minnesota 55437 (US); ITELMAN, Ronald, Bloomington, Minnesota 55437 (US)
(74) Representative: Mewburn Ellis LLP
(86) International application number: PCT/US2019/020412
(87) International publication number: WO 2019/169338

(56) References cited:
- KR-A- 20100 087 563
- KR-A- 20120 006 154
- US-A1- 2006 105 314
- US-A1- 2015 206 440
- US-A1- 2017 180 504

## Description

### CROSS-REFERENCES TO RELATED APPLICATIONS

This application claims the benefit of U.S. Provisional Application No. 62/637,933, filed on March 2, 2018, and entitled "AUTOGENERATION OF MATH EXERCISES WITH STEP-LEVEL EXPRESSION TREES AND LEARNING OBJECTIVES TAGGED FOR USE WITH MOBILE OCR TECHNOLOGIES IN INNER LOOP ADAPTIVE LEARNING MODELS", and this application claims the benefit of U.S. Provisional Application No. 62/651,004, filed on March 30, 2018, and entitled "AUTOGENERATION OF MATH EXERCISES WITH STEP-LEVEL EXPRESSION TREES AND LEARNING OBJECTIVES TAGGED FOR USE WITH MOBILE OCR TECHNOLOGIES IN INNER LOOP ADAPTIVE LEARNING MODELS", and this application claims the benefit of U.S. Provisional Application No. 62/745,941, filed on October 15, 2018, and entitled "SYSTEM AND METHOD FOR AUTOMATED CONTENT DELIVERY AND EVALUATION", .

### BACKGROUND

A computer network or data network is a telecommunications network which allows computers to exchange data. In computer networks, networked computing devices exchange data with each other along network links (data connections). The connections between nodes are established using either cable media or wireless media. The best-known computer network is the Internet. **(**US 2017/0180504).

Network computer devices that originate, route, and terminate the data are called network nodes. Nodes can include hosts such as personal computers, phones, servers, as well as networking hardware. Two such devices can be said to be networked together when one device is able to exchange information with the other device, whether or not they have a direct connection to each other.

Computer networks differ in the transmission media used to carry their signals, the communications protocols to organize network traffic, the network's size, topology and organizational intent. In most cases, communications protocols are layered on (i.e. work using) other more specific or more general communications protocols, except for the physical layer that directly deals with the transmission media.

### BRIEF SUMMARY OF THE INVENTION

One aspect of the present disclosure relates to a system for automated content delivery and evaluation. according to the sole independent claim 1. The system includes memory including a content library database that includes a plurality of content items and data for stepwise evaluation of each of the plurality of content items. The system includes at least one server that can: automatically decompose a content item into a plurality of potential steps; associate attributes with the potential steps; receive a response from a user for the content item; identify steps in the received response; and select a next action based the identified steps of the received response.

In some embodiments, the received response includes an answer. In some embodiments, the at least one server can evaluate the received response, which evaluating the received response includes evaluating the answer. In some embodiments, evaluating the received response includes evaluating the identified steps of the received response. In some embodiments, the at least one server can update a student model in a student profile based on the evaluation of the received response. In some embodiments, the student model contains inferences regarding the student's mastery of at least one of: an attribute; a skill; or a concept.

In some embodiments, updating the student model includes updating a plurality of attributes. In some embodiments, each of the plurality of attributes is associated with at least one of the steps in the received response. In some embodiments, updating the plurality of attributes includes identifying some of the plurality of attributes as mastered and some of the plurality of attributes as unmastered.

In some embodiments, the next action includes: selecting an intervention; and delivering an intervention. In some embodiments, the intervention is selected for one of the plurality of attributes. In some embodiments, the one of the plurality of attributes is identified as unmastered. In some embodiments, the at least one server can select a next content item for providing to the user. In some embodiments, the next content item is selected based on the attributes associated with the next content item, and the expected contribution of the attributes of the next content item to mastery of a plurality of unmastered attributes of the user.

One aspect of the present disclosure relates to a method of automated content evaluation and delivery. The method includes: automatically decomposing a content item into a plurality of potential steps; associating attributes with the potential steps; receiving a response from a user for the content item; identifying steps in the received response; and selecting a next action based the identified steps of the received response.

In some embodiments, the received response includes an answer. In some embodiments, the method includes: evaluating the received response. In some embodiments, evaluating the received response includes evaluating the answer. In some embodiments, evaluating the received response includes evaluating the identified steps of the received response.

In some embodiments, the method includes: updating a student model in a student profile based on the evaluation of the received response. In some embodiments, the student model contains inferences regarding the student's mastery of at least one of: an attribute; a skill; or a concept. In some embodiments, updating the student model includes updating a plurality of attributes. In some embodiments, each of the plurality of attributes is associated with at least one of the steps in the received response.

In some embodiments, updating the plurality of attributes includes identifying some of the plurality of attributes as mastered and some of the plurality of attributes as unmastered. In some embodiments, the next action includes: selecting an intervention; and delivering an intervention. In some embodiments, the intervention is selected for one of the plurality of attributes. In some embodiments, the one of the plurality of attributes is identified as unmastered. In some embodiments, the method includes selecting a next content item for providing to the user. In some embodiments, the next content item is selected based on the attributes associated with the next content item, and the expected contribution of the attributes of the next content item to mastery of a plurality of unmastered attributes of the user.

One aspect of the present disclosure relates to a method of automated content delivery and evaluation. In some embodiments, the method includes delivering a problem to a recipient user with a user interface of a user device. The method includes receiving data including a response to a problem from the recipient user with the user device, the response including a plurality of response steps; updating a mastery level for each of a plurality of objectives; and delivering remediation when the master level of at least one of the plurality of objectives is below a threshold value. In some embodiments, each of the plurality of objectives is associated with at least one response step.

In some embodiments, the method includes: identifying the response steps in the received response; and evaluating the response steps. In some embodiments, the data including the response includes at least one of: photo data; or data entered via a user interface to the user device. In some embodiments, evaluating the response steps includes: selecting one of the response steps; determining correctness of the response step; associating an indicator of the correctness of the response step with the selected one of the response steps; and providing an indicator of the correctness of the selected response step. In some embodiments, determining the correctness of the response step includes determining if the response step is present in the solution graph for the problem.

In some embodiments, evaluating the response steps in the received response includes categorizing each of the steps as at least one of: correct; incorrect; or assisted. In some embodiments, determining the correctness of the response step includes: determining for each step if: (1) math embodied in the step is accurate; and (2) if the step is relevant. In some embodiments determining if the step is relevant includes determining if the step in the response corresponds to a step in the solution graph for the problem In some embodiments, determining the correctness of the response step includes determining a match between the selected response step and a database of correct response steps. In some embodiments, the database of response steps includes a tree of operations.

In some embodiments, the method includes creating an association of each of the response steps with at least one of a plurality of objective subsequent to receipt of the response. In some embodiments, the method includes identifying at least one objective associated with each of the received response steps. In some embodiments, the remediation includes at least one of: additional content; a worked example; and a hint. In some embodiments, step-level intervention is provided in response to identifying a step as incorrect. In some embodiments, the problem includes a math problem.

In some embodiments, the method includes selecting and delivering a next problem subsequent to delivering the remediation. In some embodiments, the next problem is selected from a set of potential next problems based on the updated mastery levels of the plurality of objectives and objectives of the potential next problems. In some embodiments, the method includes: receiving a plurality of problems; and automatically generating a domain graph with the received content items.

One aspect of the present disclosure relates to a system for automated content delivery and evaluation. The system includes memory including a content library database that includes a plurality of problems and data for stepwise evaluation of each of the plurality of problems. The system includes at least one server that can, in some embodiments, deliver a problem to a recipient user. The at least one server can: receive data including a response to a problem from the recipient user, the response including a plurality of response steps; update a mastery level for each of a plurality of objectives; and deliver remediation when the master level of at least one of the plurality of objectives is below a threshold value. In some embodiments, each of the plurality of objectives is associated with at least one response step.

In some embodiments, the data including the response includes at least one of: photo data; or data entered via a user interface to the user device. In some embodiments, the at least one server can: extract and identify the response steps from the received response; and evaluate the response steps. In some embodiments, evaluating the response steps includes: selecting one of the response steps; determining correctness of the response step; associating an indicator of the correctness of the response step with the selected one of the response steps; and providing an indicator of the correctness of the selected response step.

In some embodiments, determining the correctness of the response step includes at least one of: determining if the response step is present in the solution graph for the problem; and categorizing each of the steps as at least one of: correct; incorrect; or assisted. In some embodiments, determining the correctness of the response step comprises: determining for each step if: (1) math embodied in the step is accurate; and (2) if the step is relevant. In some embodiments, the at least one server can identify at least one objective associated with each of the received response steps, and wherein the remediation includes at least one of: additional content; and a hint. In some embodiments, step-level intervention is provided in response to identifying a step as incorrect.

In some embodiments, the at least one server can select and deliver a next problem subsequent to delivering the remediation. In some embodiments, the next problem is selected from a set of potential next problems based on the updated mastery levels of the plurality of objectives and objectives of the potential next problems.

One aspect of the present disclosure relates to a method of automated content provisioning and evaluation. The method includes: receiving content items; automatically generating a domain graph with the received content items; providing at least one content item to a user; identifying and evaluating solution steps in a received response to the provided content item; and providing individual feedback to at least some of the solution steps.

In some embodiments, generating the domain graph includes curating the received content items. In some embodiments, curating the received content includes associating each of the received content items with at least one of : a tag identifying an attribute; and a tree identifying a structure.

One aspect of the present disclosures relates to a method of automated education content delivery. The method includes: conducting an intake assessment; generating a user profile; retrieving a learning map; selecting and present next item; providing step-level intervention; determining mastery of learning objectives at step level; updating user profile according to step-level mastery determination; and selecting next content based on updated profile.

In some embodiments, conducting the intake assessment includes: selecting and providing a plurality of content items to a user; receiving responses to the provided content items; and determining mastery of at least one attribute based on at least one of: the response to the content item; and a step in reaching the response to the content item. In some embodiments, the step-level intervention includes at least one of: additional content; and a hint.

In some embodiments, the step-level intervention is provided in response to identifying a step as incorrect. In some embodiments, the method includes identifying steps within the received response and evaluating the steps in the received response. In some embodiments, evaluating the steps in the received response results in categorizing steps as at least one of: correct; incorrect; or assisted. In some embodiments, a step is categorized as assisted when a user received a hint to perform the step. In some embodiments, the user profile is updated according to the categorizing of each of the evaluated steps.

One aspect of the present disclosure relates to a method of automated domain graph-based content provisioning. The method includes: receiving a plurality of content items; decomposing each of the plurality of content items into constituent parts; matching constituent parts of each of the decomposed content items with attributes; generating a domain graph from the matched attributes; and providing content to a user based on the domain graph.

In some embodiments, generating the domain graph includes: generating for each of the matched attributes a node; and generating edges linking the generated nodes. In some embodiments, each of the edges connects a pair of nodes and identifies a hierarchical relationship between the nodes in the pair of nodes. In some embodiments, providing content to a user based on the domain graph includes selecting next content based on connections between nodes in the domain graph.

One aspect of the present disclosure relates to a method of contents-based domain graph generation. The method includes: receiving a plurality of content items; selecting a table of contents; creating groups based on the table of contents; generating tags identifying at least one attribute for each of the content items; linking the tags to the created groups; and generating edges between the tags.

In some embodiments, the method includes: decomposing each of the plurality of content items into at least one solution step; and linking at least one tag to each of the solution steps. In some embodiments, the method includes curating the generated edges. In some embodiments, wherein curating the generated edges includes removing redundant edges.

In some embodiments, generating the edges includes: selecting a first group; identifying attributes of the first group; selecting a next group, which next group is a child of the first group; identifying attributes of the next group; creating a sub-set of new attributes from the attributes of the next group; and generating edges between the attributes of the first group and the new attributes of the next group. In some embodiments, the new attributes are not associated with any previous parent group, and wherein the first group is a parent group to the next group.

One aspect of the present disclosure relates to a method cluster-based content curation. The method includes: retrieving a plurality of content items; decomposing each of the content items into at least one solution step; identifying attributes of the at least one solution step for each of the content items; generating attribute clusters based on similarity between attributes of the at least one solution step for each of the content items; and generating edges between attribute clusters.

One aspect of the present disclosure relates to a method for automated generation of a directed acyclic graph. The method includes: retrieving a plurality of content items; decomposing each of the content items into at least one solution step; generating tree structure for each of the content items; generating at least one tree structure for each solution step of each content item; applying tags to each of the content items and to each of the solution steps; generating a plurality of clusters based on a combination of tags and tree structure; and generating edges linking the clusters.

In some embodiments, each of the edges connects a pair of clusters and identifies a hierarchical relationship between the clusters in the pair of clusters. In some embodiments, the tags identify an attribute of the associated content item or solution step. In some embodiments, generating edges includes: selecting a cluster; selecting a content item associated with the selected cluster; identifying at least one solution step to the selected content item; identifying at least one cluster associated with the at least one solution step of the selected content item; and generating an edge between the at least one cluster associated with the at least one solution step of the selected content item and the cluster of the selected content item.

One aspect of the present disclosure relates to a method of automated content generation. The method includes: receiving inputs identifying attributes of desired content; generating a tensor from the received inputs; inputting the tensor into a machine-learning model trained for content generation; receiving an output from the machine-learning model; determining correspondence between the output and the received inputs; and storing the output when correspondence between the output and the received inputs is determined.

One aspect of the present disclosure relates to a method for closed-loop unsupervised model training. The method includes: receiving a content item; generating a set of trees for the content item; generating at least one tag for the content item; generating a tensor characterizing attributes of the content item; inputting the tensor into a machine-learning model; receiving an output from the machine-learning model,; determining the functionality of the received output; determining attributes of the received output; automatically generating an evaluation tensor based on the determination of functionality of the output and of the attributes of output; and updating training of machine-learning model based on evaluation tensor.

In some embodiments, the output is generated in response to the inputted tensor. In some embodiments, the at least one tag identifies an attribute of the content item. In some embodiments, updating the training of the machine-learning model based on the evaluation tensor includes inputting the evaluation tensor into the machine-learning model; and automatically updating weighting values within the machine-learning model based on the received evaluation tensor.

One aspect of the present disclosure relates to a method of vertical specific content customization. The method including: receiving a content request; identifying next content; retrieving user profile information for the source of the content request; identifying a domain specific language based on the retrieved user profile; generating a tensor indicative of the next content and the domain specific language; inputting the tensor into a customization machine-learning model; receiving an output including a customized item from the machine-learning model; and providing a customized item to the user.

One aspect of the present disclosure relates to a method of multimodal authentic expression input. The method including: providing a content item; receiving a response to the provided content item; identifying steps in the received response; evaluating each of the identified steps in the received response; evaluating the solution in the received response; and generating a score for the response based on a combination of evaluation of both the solution and the steps.

In some embodiments, the response is received via at least one of: handwriting on a touchscreen; equation editor; OCR; voice; eye movement; handwriting; brainwave interpretation; brain coupling; scanning; a biological response; and a photo.

One aspect of the present disclosure relates to a method of automated response-step extraction. The method including: receiving a response image; determining attributes of the response image; identifying a color scheme of the response image; changing the color scheme of the response image; blurring at least a portion of the image; identifying boxes in the image; and extracting text from the boxes in the image.

In some embodiments, the method includes: identifying a channel of writing in the image; and copying the channel of writing to other channels in the image. In some embodiments, copying the channel of writing to other channels in the image creates a white background. In some embodiments, blurring of at least a portion of the image includes horizontally blurring the at least a portion of the image. In some embodiments, the method includes aligning the image. In some embodiments, the image is aligned based on a slope of at least one blur in the image. In some embodiments, the method includes step-wise evaluating text extracted from the boxes. In some embodiments, the text extracted from one box corresponds to a single step.

One aspect of the present disclosure relates to a method of automated scoring. The method including: providing a content item to a user via a user device; receiving a response to the provided content item; identifying steps in the received response; devolving the steps to a simplified form; and evaluating each of the steps based on the simplified form.

In some embodiments, evaluating each of the steps includes: selecting a step; identifying the simplified form of the step; retrieving the content item solution; comparing the simplified form of the step to the content item solution; and indicating the step as correct when the simplified form of the step matches the content item solution.

One aspect of the present disclosure relates to a method of automated hybrid scoring. The method including: providing a content item to a user via a user device; receiving a response to the provided content item; identifying steps in the received response; evaluating the received answer to the content item; generating a tree for each of the identified steps; retrieving a content item tree family; and evaluating each of the steps based on a comparison of the trees for the identified steps and the content item tree family.

In some embodiments, the content item tree family includes a plurality of trees representing the content item and steps to solving the content item. In some embodiments, the method includes generating a score for the content item based on the evaluation of the received answer and on the evaluation of each of the steps in the response.

In some embodiments, evaluating each of the steps based on a comparison of the trees for the identified steps and the content item tree family includes: selecting a step; retrieving the tree for the selected step; comparing the tree for the selected step to the content item tree family; and identifying the step as correct when the tree for the selected step matches one of the trees from the content item tree family. In some embodiments, the method includes: devolving the step to a simplest form when the tree associated with the selected step does not match any tree from the content item family tree; retrieving the content item solution; comparing the simplest form of the step to the content item solution; and identifying the step as correct when the simplified form of the step matches the content item solution.

One aspect of the present disclosure relates to a method of automated misconception identification. The method includes: providing a content item to a user via a user device; receiving a response to the provided content item; identifying steps in the received response; identifying an incorrect step; comparing an attribute of the incorrect step to attributes of common misconceptions; updating the user profile when a common misconception is indicated; and providing intervention when a frequency of the common misconception exceeds a threshold value.

One aspect of the present disclosure relates to a method of automatically generating profiles. The method including: receiving a domain graph; identifying entry and exit nodes in the domain graph; identifying paths through the domain graph; generate a plurality of simulated students; and generating a plurality of profiles from the plurality of simulated students.

In some embodiments, each of the profiles characterizes a simulated student path through the domain graph and progress along that path. In some embodiments, a path through includes a sequence of edges and nodes arranged in a hierarchical order that extends from an entry node to an exit node.

One aspect of the present disclosure relates to a method of automated next content recommendation. The method including: retrieving a domain graph; retrieving student information; retrieving profiles identifying student state in the domain graph; determining probabilities associated with each of profile based on the student information; determining mastery probabilities for attributes based on the profile probability and attribute inclusion in the profiles; determining mastery of concepts for student based on attribute probabilities in the domain graph; for an unmastered concept, identifying content items relevant to mastery of the concept; identifying attributes of content items relevant to mastery of concept; and selecting and present content item having largest contribution potential to mastery of the concept.

One aspect of the present disclosure relates to a method of customized domain graph creation. The method including: retrieving domain graph information; receiving teacher inputs identifying one or several skills for mastery; identifying attributes associated with the skills; identifying content items of selected sub-nodes of the nodes of the domain graph; identifying and applying solution-based content item customization; and providing content to the user.

In some embodiments, each of the attributes corresponds to a node within the domain graph. In some embodiments, each node within the domain graph includes a plurality of sub-nodes each associated with a content item.

One aspect of the present disclosure relates to a method for diagnostic pools question selection. The method including: loading an item; loading possible profiles; calculating item information for all items in all profiles; specifying a shape of a population distribution of possible profiles; generating a weighted sum of item information and the shape of the population distribution of possible profiles; identifying concepts and associated items; and selecting the top items for each concept.

One aspect of the present disclosure relates to a method of step-wise response evaluation and remediation. The method including: receiving content input containing a problem in a first state; generating an expression tree from the received content input; identifying operations within the received content input; retrieving attributes associated with the identified operations; receiving a response input for a step in solving the problem of the received content input; determining mastery of attributes based on the result of the evaluating of the response input; and providing an evaluation result to the user based on the evaluating of the response input.

In some embodiments, the content input identifies content for step-wise response evaluation. In some embodiments, the content input is received from a user. In some embodiments, the response input is associated with a performed operation transforming the problem to a subsequent state. In some embodiments, the response input is received from the user; evaluating the response input.

In some embodiments, the attributes are retrieved from a database of attributes. In some embodiments, the attributes are linked with the operation. In some embodiments, the attributes are retrieved by querying the database of attributes for attributes linked with operations included in the expression tree. In some embodiments, the expression tree is generated based on the received content input. In some embodiments, the expression tree is not pre-generated. In some embodiments, the expression tree includes a plurality of nodes and a plurality of leaves.

In some embodiments, the method includes linking the nodes of the expression tree with the attributes. In some embodiments, at least some of the nodes identify operations within the received content input. In some embodiments, evaluating the response input includes identifying the performed operation transforming the problem to the subsequent state, and identifying the attributes of the performed operation. In some embodiments, evaluating the response input includes ingesting the response input into a mathematical solver, receiving an output from the mathematical solver, and determining whether the received output is indicative of a correct response input or an incorrect response input.

In some embodiments, the method includes updating a user profile of the user based on the attributes of the performed operation and the determination of the correctness or incorrectness of the response input. In some embodiments, the method includes selecting and providing remedial content when at least one of: the received response input is incorrect; or a request for remedial content is received from the student. In some embodiments, the method includes: selecting remedial content for providing to the student based on the attributes associated with the received step input; and a determined remedial content tier level.

Further areas of applicability of the present disclosure will become apparent from the detailed description provided hereinafter. It should be understood that the detailed description and specific examples, while indicating various embodiments, are intended for purposes of illustration only and are not intended to necessarily limit the scope of the disclosure.

### BRIEF DESCRIPTION OF THE DRAWINGS

FIG. 1 is a block diagram illustrating an example of a content distribution network.
FIG. 2 is a block diagram illustrating a computer server and computing environment within a content distribution network.
FIG. 3 is a block diagram illustrating an embodiment of one or more data store servers within a content distribution network.
FIG. 4 is a block diagram illustrating an embodiment of one or more content management servers within a content distribution network.
FIG. 5 is a block diagram illustrating the physical and logical components of a special-purpose computer device within a content distribution network.
FIG. 6 is a block diagram illustrating one embodiment of the communication network.
FIG. 7 is a block diagram illustrating one embodiment of user device and supervisor device communication.
FIG. 8 is a schematic illustration of one embodiment of a computing stack.
FIG. 9 is a schematic illustration of one embodiment of communication and processing flow of modules within the content distribution network.
FIG. 10 is a schematic illustration of one embodiment of communication and processing flow of modules within the content distribution network.
FIG. 11 is a schematic illustration of one embodiment of communication and processing flow of modules within the content distribution network.
FIG. 12 is a schematic illustration of one embodiment of communication and processing flow of modules within the content distribution network.
FIG. 13 is a flowchart illustrating one embodiment of a process for data management.
FIG. 14 is a flowchart illustrating one embodiment of a process for evaluating a response.
FIG. 15 is a flowchart illustrating one embodiment of a process for automated content delivery.
FIG. 16 is a flowchart illustrating one embodiment of a process for step-based next content presentation.
FIG. 17 is a flowchart illustrating one embodiment of a process automated curation and/or generation of content.
FIG. 18 is a flowchart illustrating one embodiment of a process for content-based automated content provisioning.
FIG. 19 a flowchart illustrating one embodiment of the process for automated contents-based content curation and/or creation.
FIG. 20 is a flowchart illustrating one embodiment of a process for generating edges within a domain graph.
FIG. 21 is a flowchart illustrating one embodiment of a process for automated generation of a cluster-based domain model.
FIG. 22 is a flowchart illustrating one embodiment of a process for generating an item clusters.
FIG. 23 is flowchart illustrating one embodiment of a process for automated generation of a directed graph.
FIG. 24 is a flowchart illustrating one embodiment of a process for generating edges.
FIG. 25 is a flowchart illustrating one embodiment of a process for automated generation of a directed graph.
FIG. 26 is a flowchart illustrating one embodiment of a process for automated content generation.
FIG. 27 is a flowchart illustrating one embodiment of a process for model output validation and content provisioning.
FIG. 28 is a flowchart illustrating one embodiment of a process for closed-loop unsupervised model training.
FIG. 29 is a flowchart illustrating one embodiment of a process for generating a vertical specific content customization.
FIG. 30 is a flowchart illustrating one embodiment of a process for multimodal input.
FIG. 31 is a flowchart illustrating one embodiment of a process for step extraction.
FIG. 32 is a flowchart illustrating one embodiment of a process for image alignment.
FIG. 33 is a flowchart illustrating one embodiment of a process for identifying boxes in the image.
FIG. 34 is a flowchart illustrating one embodiment of a process for automated scoring.
FIG. 35 is, a flowchart illustrating one embodiment of a process for structure-based response evaluation and/or scoring.
FIG. 36 is a flowchart illustrating one embodiment of a process for automated misconception identification.
FIG. 37 is a flowchart illustrating one embodiment of a process for automated next content recommendation.
FIG. 38 is a flowchart illustrating one embodiment of a process for customized next content recommendation
FIG. 39 is a flowchart illustrating one embodiment of a process for customized directed graph creation based on teacher inputs.
FIG. 40 is a flowchart illustrating one embodiment of a process for selecting the most informative items in a diagnostic pool for a diagnostic test with no historical data.
FIG. 41 is a schematic illustration of a software stack.
FIG. 42 is a flowchart illustrating a first portion of one embodiment of a process for step-wise response evaluation and remediation.
FIG. 43 is a flowchart illustrating a second portion of one embodiment of a process for step-wise response evaluation and remediation.
FIG. 44 is a flowchart illustrating one embodiment of a process for identifying and/or providing remedial content.
FIGS. 45-53 are illustrations of one embodiment of a user interface for stepwise response evaluation and remediation
FIGS. 54-60 are illustrations of one embodiment of a teacher interface.
FIGS. 61-73 are illustrations of one embodiment of user interface created during content delivery.
FIG. 74 is a flowchart illustrating one embodiment of a process for automated content evaluation.
FIG. 75 is a flowchart illustrating one embodiment of a process for automated tutoring.
FIG. 76 is a flowchart illustrating one embodiment of a process for content recommendation and evaluation.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides illustrative embodiment(s) only and is not intended to limit the scope, applicability, or configuration of the disclosure. Rather, the ensuing description of the illustrative embodiment(s) will provide those skilled in the art with an enabling description for implementing a preferred exemplary embodiment. It is understood that various changes can be made in the function and arrangement of elements without departing from the scope as set forth in the appended claims.

Current machine learning models for grading are large and cumbersome models. These are trained with large sets of training data and are not customized to the tendencies of a single specific grader. Due to the reliance of these models on large sets of training data, these models can be used in circumstances with smaller set of data. Specifically, as the size of the set of training data decreases, the accuracy of the model diminishes.

While these models are, in some aspects, satisfactory for grading large numbers of responses to the same question or prompt, they can be unsatisfactory in other circumstances. Limitations of these models are particularly apparent in their inability to be used in grading and/or evaluating small numbers of responses to unique questions and/or according to unique or customized criteria. Thus, while grading technology has improved for large-scale testing, grading for small-scale testing still relies on human graders.

The present disclosure relates to systems and methods for providing customizable machine learning grading. This can include the customizing of a model according to one or several attributes of the teacher and/or the teachers grading preference. In some embodiments, this can include the generating and/or customizing of one or several models for grading custom prompts. The training and/or customization of the models can include identification and use of pre-existing data to perform a portion of the training. The use of the pre-existing data can effectively increase the size of the set of training data. In some embodiments, training can be further accelerated by the identification of one or several responses for manual grading, which one or several responses can be identified as representative of some or all of the received responses. Due to the representativeness of these identified one or several responses, their manual grading and inclusion in the training set can accelerate the completion training.

The training and customization of the models can include iterative retraining of the model and/or iterative generation of new piece of training data based on inputs received from a user such as the customizer the model. In some embodiments, for example, after the model has been trained, evaluation output of the model can be provided to the user. The user can provide feedback, which can include acceptance of the results indicated in the evaluation output and/or a request for further training of the model.

Systems and methods according to the disclosure herein accelerate training of machine learning models and improve performance of machine learning models trained with small data sets. Further, systems and methods according to the disclosure herein provide for automated grading of custom and/or customized prompts

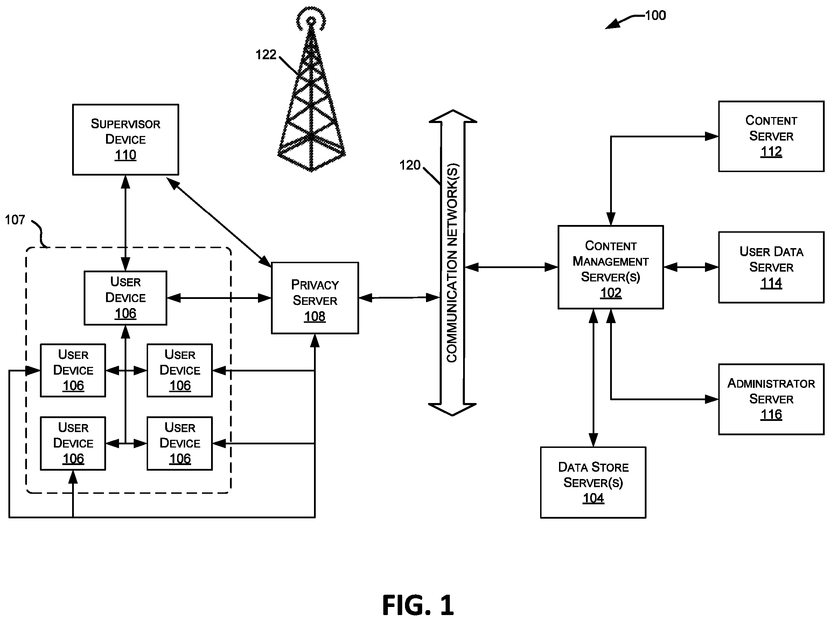

With reference now to **Figure 1****,** a block diagram is shown illustrating various components of a content distribution network (CDN) 100 which implements and supports certain embodiments and features described herein. In some embodiments, the content distribution network 100 can comprise one or several physical components and/or one or several virtual components such as, for example, one or several cloud computing components. In some embodiments, the content distribution network 100 can comprise a mixture of physical and cloud computing components.

Content distribution network 100 may include one or more content management servers 102. As discussed below in more detail, content management servers 102 may be any desired type of server including, for example, a rack server, a tower server, a miniature server, a blade server, a mini rack server, a mobile server, an ultra-dense server, a super server, or the like, and may include various hardware components, for example, a motherboard, a processing unit, memory systems, hard drives, network interfaces, power supplies, etc. Content management server 102 may include one or more server farms, clusters, or any other appropriate arrangement and/or combination or computer servers. Content management server 102 may act according to stored instructions located in a memory subsystem of the server 102, and may run an operating system, including any commercially available server operating system and/or any other operating systems discussed herein.

The content distribution network 100 may include one or more data store servers 104, such as database servers and file-based storage systems. The database servers 104 can access data that can be stored on a variety of hardware components. These hardware components can include, for example, components forming tier 0 storage, components forming tier 1 storage, components forming tier 2 storage, and/or any other tier of storage. In some embodiments, tier 0 storage refers to storage that is the fastest tier of storage in the database server 104, and particularly, the tier 0 storage is the fastest storage that is not RAM or cache memory. In some embodiments, the tier 0 memory can be embodied in solid state memory such as, for example, a solid-state drive (SSD) and/or flash memory.

In some embodiments, the tier 1 storage refers to storage that is one or several higher performing systems in the memory management system, and that is relatively slower than tier 0 memory, and relatively faster than other tiers of memory. The tier 1 memory can be one or several hard disks that can be, for example, high-performance hard disks. These hard disks can be one or both of physically or communicatively connected such as, for example, by one or several fiber channels. In some embodiments, the one or several disks can be arranged into a disk storage system, and specifically can be arranged into an enterprise class disk storage system. The disk storage system can include any desired level of redundancy to protect data stored therein, and in one embodiment, the disk storage system can be made with grid architecture that creates parallelism for uniform allocation of system resources and balanced data distribution.

In some embodiments, the tier 2 storage refers to storage that includes one or several relatively lower performing systems in the memory management system, as compared to the tier 1 and tier 2 storages. Thus, tier 2 memory is relatively slower than tier 1 and tier 0 memories. Tier 2 memory can include one or several SATA-drives (e.g., Serial AT Attachment drives) or one or several NL-SATA drives.

In some embodiments, the one or several hardware and/or software components of the database server 104 can be arranged into one or several storage area networks (SAN), which one or several storage area networks can be one or several dedicated networks that provide access to data storage, and particularly that provides access to consolidated, block level data storage. A SAN typically has its own network of storage devices that are generally not accessible through the local area network (LAN) by other devices. The SAN allows access to these devices in a manner such that these devices appear to be locally attached to the user device.

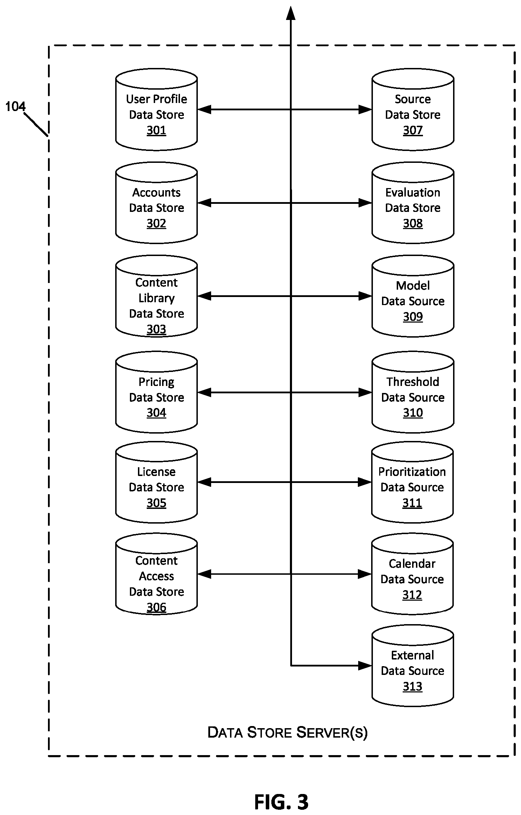

Data stores 104 may comprise stored data relevant to the functions of the content distribution network 100. Illustrative examples of data stores 104 that may be maintained in certain embodiments of the content distribution network 100 are described below in reference to Figure 3. In some embodiments, multiple data stores may reside on a single server 104, either using the same storage components of server 104 or using different physical storage components to assure data security and integrity between data stores. In other embodiments, each data store may have a separate dedicated data store server 104.

Content distribution network 100 also may include one or more user devices 106 and/or supervisor devices 110. User devices 106 and supervisor devices 110 may display content received via the content distribution network 100, and may support various types of user interactions with the content. User devices 106 and supervisor devices 110 may include mobile devices such as smartphones, tablet computers, personal digital assistants, and wearable computing devices. Such mobile devices may run a variety of mobile operating systems and may be enabled for Internet, e-mail, short message service (SMS), Bluetooth^{®}, mobile radio-frequency identification (M-RFID), and/or other communication protocols. Other user devices 106 and supervisor devices 110 may be general purpose personal computers or special-purpose computing devices including, by way of example, personal computers, laptop computers, workstation computers, projection devices, and interactive room display systems. Additionally, user devices 106 and supervisor devices 110 may be any other electronic devices, such as a thin-client computers, an Internet-enabled gaming systems, business or home appliances, and/or a personal messaging devices, capable of communicating over network(s) 120.

In different contexts of content distribution networks 100, user devices 106 and supervisor devices 110 may correspond to different types of specialized devices, for example, student devices and teacher devices in an educational network, employee devices and presentation devices in a company network, different gaming devices in a gaming network, etc. In some embodiments, user devices 106 and supervisor devices 110 may operate in the same physical location 107, such as a classroom or conference room. In such cases, the devices may contain components that support direct communications with other nearby devices, such as wireless transceivers and wireless communications interfaces, Ethernet sockets or other Local Area Network (LAN) interfaces, etc. In other implementations, the user devices 106 and supervisor devices 110 need not be used at the same location 107, but may be used in remote geographic locations in which each user device 106 and supervisor device 110 may use security features and/or specialized hardware (e.g., hardware-accelerated SSL and HTTPS, WS-Security, firewalls, etc.) to communicate with the content management server 102 and/or other remotely located user devices 106. Additionally, different user devices 106 and supervisor devices 110 may be assigned different designated roles, such as presenter devices, teacher devices, administrator devices, or the like, and in such cases the different devices may be provided with additional hardware and/or software components to provide content and support user capabilities not available to the other devices.

The content distribution network 100 also may include a privacy server 108 that maintains private user information at the privacy server 108 while using applications or services hosted on other servers. For example, the privacy server 108 may be used to maintain private data of a user within one jurisdiction even though the user is accessing an application hosted on a server (e.g., the content management server 102) located outside the jurisdiction. In such cases, the privacy server 108 may intercept communications between a user device 106 or supervisor device 110 and other devices that include private user information. The privacy server 108 may create a token or identifier that does not disclose the private information and may use the token or identifier when communicating with the other servers and systems, instead of using the user's private information.

As illustrated in Figure 1, the content management server 102 may be in communication with one or more additional servers, such as a content server 112, a user data server 114, and/or an administrator server 116. Each of these servers may include some or all of the same physical and logical components as the content management server(s) 102, and in some cases, the hardware and software components of these servers 112-116 may be incorporated into the content management server(s) 102, rather than being implemented as separate computer servers.

Content server 112 may include hardware and software components to generate, store, and maintain the content resources for distribution to user devices 106 and other devices in the network 100. For example, in content distribution networks 100 used for professional training and educational purposes, content server 112 may include data stores of training materials, presentations, plans, syllabi, reviews, evaluations, interactive programs and simulations, course models, course outlines, and various training interfaces that correspond to different materials and/or different types of user devices 106. In content distribution networks 100 used for media distribution, interactive gaming, and the like, a content server 112 may include media content files such as music, movies, television programming, games, and advertisements.

User data server 114 may include hardware and software components that store and process data for multiple users relating to each user's activities and usage of the content distribution network 100. For example, the content management server 102 may record and track each user's system usage, including their user device 106, content resources accessed, and interactions with other user devices 106. This data may be stored and processed by the user data server 114, to support user tracking and analysis features. For instance, in the professional training and educational contexts, the user data server 114 may store and analyze each user's training materials viewed, presentations attended, courses completed, interactions, evaluation results, and the like. The user data server 114 may also include a repository for user-generated material, such as evaluations and tests completed by users, and documents and assignments prepared by users. In the context of media distribution and interactive gaming, the user data server 114 may store and process resource access data for multiple users (e.g., content titles accessed, access times, data usage amounts, gaming histories, user devices and device types, etc.).

Administrator server 116 may include hardware and software components to initiate various administrative functions at the content management server 102 and other components within the content distribution network 100. For example, the administrator server 116 may monitor device status and performance for the various servers, data stores, and/or user devices 106 in the content distribution network 100. When necessary, the administrator server 116 may add or remove devices from the network 100, and perform device maintenance such as providing software updates to the devices in the network 100. Various administrative tools on the administrator server 116 may allow authorized users to set user access permissions to various content resources, monitor resource usage by users and devices 106, and perform analyses and generate reports on specific network users and/or devices (e.g., resource usage tracking reports, training evaluations, etc.).

The content distribution network 100 may include one or more communication networks 120. Although only a single network 120 is identified in Figure 1, the content distribution network 100 may include any number of different communication networks between any of the computer servers and devices shown in Figure 1 and/or other devices described herein. Communication networks 120 may enable communication between the various computing devices, servers, and other components of the content distribution network 100. As discussed below, various implementations of content distribution networks 100 may employ different types of networks 120, for example, computer networks, telecommunications networks, wireless networks, and/or any combination of these and/or other networks.

The content distribution network 100 may include one or several navigation systems or features including, for example, the Global Positioning System ("GPS"), GALILEO (e.g., Europe's global positioning system), or the like, or location systems or features including, for example, one or several transceivers that can determine location of the one or several components of the content distribution network 100 via, for example, triangulation. All of these are depicted as navigation system 122.

In some embodiments, navigation system 122 can include or several features that can communicate with one or several components of the content distribution network 100 including, for example, with one or several of the user devices 106 and/or with one or several of the supervisor devices 110. In some embodiments, this communication can include the transmission of a signal from the navigation system 122 which signal is received by one or several components of the content distribution network 100 and can be used to determine the location of the one or several components of the content distribution network 100.

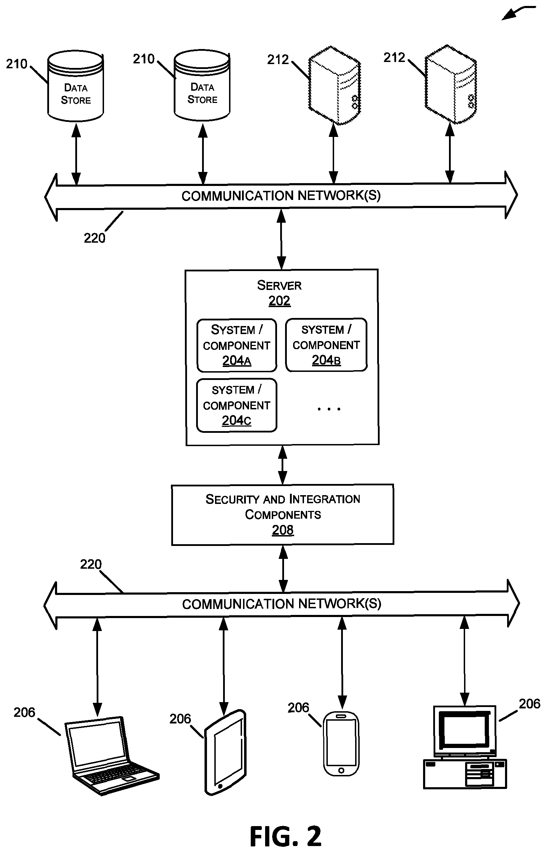

With reference to **Figure 2****,** an illustrative distributed computing environment 200 is shown including a computer server 202, four client computing devices 206, and other components that may implement certain embodiments and features described herein. In some embodiments, the server 202 may correspond to the content management server 102 discussed above in Figure 1, and the client computing devices 206 may correspond to the user devices 106. However, the computing environment 200 illustrated in Figure 2 may correspond to any other combination of devices and servers configured to implement a client-server model or other distributed computing architecture.

Client devices 206 may be configured to receive and execute client applications over one or more networks 220. Such client applications may be web browser based applications and/or standalone software applications, such as mobile device applications. Server 202 may be communicatively coupled with the client devices 206 via one or more communication networks 220. Client devices 206 may receive client applications from server 202 or from other application providers (e.g., public or private application stores). Server 202 may be configured to run one or more server software applications or services, for example, web-based or cloud-based services, to support content distribution and interaction with client devices 206. Users operating client devices 206 may in turn utilize one or more client applications (e.g., virtual client applications) to interact with server 202 to utilize the services provided by these components.

Various different subsystems and/or components 204 may be implemented on server 202. Users operating the client devices 206 may initiate one or more client applications to use services provided by these subsystems and components. The subsystems and components within the server 202 and client devices 206 may be implemented in hardware, firmware, software, or combinations thereof. Various different system configurations are possible in different distributed computing systems 200 and content distribution networks 100. The embodiment shown in Figure 2 is thus one example of a distributed computing system and is not intended to be limiting.

Although exemplary computing environment 200 is shown with four client computing devices 206, any number of client computing devices may be supported. Other devices, such as specialized sensor devices, etc., may interact with client devices 206 and/or server 202.

As shown in Figure 2, various security and integration components 208 may be used to send and manage communications between the server 202 and user devices 206 over one or more communication networks 220. The security and integration components 208 may include separate servers, such as web servers and/or authentication servers, and/or specialized networking components, such as firewalls, routers, gateways, load balancers, and the like. In some cases, the security and integration components 208 may correspond to a set of dedicated hardware and/or software operating at the same physical location and under the control of the same entities as server 202. For example, components 208 may include one or more dedicated web servers and network hardware in a datacenter or a cloud infrastructure. In other examples, the security and integration components 208 may correspond to separate hardware and software components which may be operated at a separate physical location and/or by a separate entity.

Security and integration components 208 may implement various security features for data transmission and storage, such as authenticating users and restricting access to unknown or unauthorized users. In various implementations, security and integration components 208 may provide, for example, a file-based integration scheme or a service-based integration scheme for transmitting data between the various devices in the content distribution network 100. Security and integration components 208 also may use secure data transmission protocols and/or encryption for data transfers, for example, File Transfer Protocol (FTP), Secure File Transfer Protocol (SFTP), and/or Pretty Good Privacy (PGP) encryption.

In some embodiments, one or more web services may be implemented within the security and integration components 208 and/or elsewhere within the content distribution network 100. Such web services, including cross-domain and/or cross-platform web services, may be developed for enterprise use in accordance with various web service standards, such as RESTful web services (i.e., services based on the Representation State Transfer (REST) architectural style and constraints), and/or web services designed in accordance with the Web Service Interoperability (WS-I) guidelines. Some web services may use the Secure Sockets Layer (SSL) or Transport Layer Security (TLS) protocol to provide secure connections between the server 202 and user devices 206. SSL or TLS may use HTTP or HTTPS to provide authentication and confidentiality. In other examples, web services may be implemented using REST over HTTPS with the OAuth open standard for authentication, or using the WS-Security standard which provides for secure SOAP (e.g., Simple Object Access Protocol) messages using Extensible Markup Language (XML) encryption. In other examples, the security and integration components 208 may include specialized hardware for providing secure web services. For example, security and integration components 208 may include secure network appliances having built-in features such as hardware-accelerated SSL and HTTPS, WS-Security, and firewalls. Such specialized hardware may be installed and configured in front of any web servers, so that any external devices may communicate directly with the specialized hardware.

Communication network(s) 220 may be any type of network familiar to those skilled in the art that can support data communications using any of a variety of commercially-available protocols, including without limitation, TCP/IP (transmission control protocol/Internet protocol), SNA (systems network architecture), IPX (Internet packet exchange), Secure Sockets Layer (SSL) or Transport Layer Security (TLS) protocols, Hyper Text Transfer Protocol (HTTP) and Secure Hyper Text Transfer Protocol (HTTPS), Bluetooth^{®}, Near Field Communication (NFC), and the like. Merely by way of example, network(s) 220 may be local area networks (LAN), such as one based on Ethernet, Token-Ring, and/or the like. Network(s) 220 also may be wide-area networks, such as the Internet. Networks 220 may include telecommunication networks such as a public switched telephone networks (PSTNs), or virtual networks such as an intranet or an extranet. Infrared and wireless networks (e.g., using the Institute of Electrical and Electronics (IEEE) 802.11 protocol suite or other wireless protocols) also may be included in networks 220.

Computing environment 200 also may include one or more data stores 210 and/or back-end servers 212. In certain examples, the data stores 210 may correspond to data store server(s) 104 discussed above in Figure 1, and back-end servers 212 may correspond to the various back-end servers 112-116. Data stores 210 and servers 212 may reside in the same datacenter or may operate at a remote location from server 202. In some cases, one or more data stores 210 may reside on a non-transitory storage medium within the server 202. Other data stores 210 and back-end servers 212 may be remote from server 202 and configured to communicate with server 202 via one or more networks 220. In certain embodiments, data stores 210 and back-end servers 212 may reside in a storage-area network (SAN), or may use storage-as-a-service (STaaS) architectural model.

With reference to **Figure 3****,** an illustrative set of data stores and/or data store servers is shown, corresponding to the data store servers 104 of the content distribution network 100 discussed above in Figure 1. One or more individual data stores 301-313 may reside in storage on a single computer server 104 (or a single server farm or cluster) under the control of a single entity, may be virtually implemented, or may reside on separate servers operated by different entities and/or at remote locations. In some embodiments, data stores 301-313 may be accessed by the content management server 102 and/or other devices and servers within the network 100 (e.g., user devices 106, supervisor devices 110, administrator servers 116, etc.). Access to one or more of the data stores 301-313 may be limited or denied based on the processes, user credentials, and/or devices attempting to interact with the data store.

The paragraphs below describe examples of specific data stores that may be implemented within some embodiments of a content distribution network 100. It should be understood that the below descriptions of data stores 301-313, including their functionality and types of data stored therein, are illustrative and non-limiting. Data stores server architecture, design, and the execution of specific data stores 301-313 may depend on the context, size, and functional requirements of a content distribution network 100. For example, in content distribution systems 100 used for professional training and educational purposes, separate databases or file-based storage systems may be implemented in data store server(s) 104 to store trainee and/or student data, trainer and/or professor data, training module data and content descriptions, training results, evaluation data, and the like. In contrast, in content distribution systems 100 used for media distribution from content providers to subscribers, separate data stores may be implemented in data stores server(s) 104 to store listings of available content titles and descriptions, content title usage statistics, subscriber profiles, account data, payment data, network usage statistics, etc.

A user profile data store 301, also referred to herein as a user profile database 301, may include information relating to the end users within the content distribution network 100. This information may include user characteristics such as the user names, access credentials (e.g., logins and passwords), user preferences, and information relating to any previous user interactions within the content distribution network 100 (e.g., requested content, posted content, content modules completed, training scores or evaluations, other associated users, etc.). In some embodiments, this information can relate to one or several individual end users such as, for example, one or several students, teachers, administrators, or the like, and in some embodiments, this information can relate to one or several institutional end users such as, for example, one or several schools, groups of schools such as one or several school districts, one or several colleges, one or several universities, one or several training providers, or the like. In some embodiments, this information can identify one or several user memberships in one or several groups such as, for example, a student's membership in a university, school, program, grade, course, class, or the like.

The user profile database 301 can include information relating to a user's status, location, or the like. This information can identify, for example, a device a user is using, the location of that device, or the like. In some embodiments, this information can be generated based on any location detection technology including, for example, a navigation system 122, or the like.

Information relating to the user's status can identify, for example, logged-in status information that can indicate whether the user is presently logged-in to the content distribution network 100 and/or whether the log-in is active. In some embodiments, the information relating to the user's status can identify whether the user is currently accessing content and/or participating in an activity from the content distribution network 100.

In some embodiments, information relating to the user's status can identify, for example, one or several attributes of the user's interaction with the content distribution network 100, and/or content distributed by the content distribution network 100. This can include data identifying the user's interactions with the content distribution network 100, the content consumed by the user through the content distribution network 100, or the like. In some embodiments, this can include data identifying the type of information accessed through the content distribution network 100 and/or the type of activity performed by the user via the content distribution network 100, the lapsed time since the last time the user accessed content and/or participated in an activity from the content distribution network 100, or the like. In some embodiments, this information can relate to a content program comprising an aggregate of data, content, and/or activities, and can identify, for example, progress through the content program, or through the aggregate of data, content, and/or activities forming the content program. In some embodiments, this information can track, for example, the amount of time since participation in and/or completion of one or several types of activities, the amount of time since communication with one or several supervisors and/or supervisor devices 110, or the like.

In some embodiments in which the one or several end users are individuals, and specifically are students, the user profile database 301 can further include information relating to these students' academic and/or educational history. This information can identify one or several courses of study that the student has initiated, completed, and/or partially completed, as well as grades received in those courses of study. In some embodiments, the student's academic and/or educational history can further include information identifying student performance on one or several tests, quizzes, and/or assignments. In some embodiments, this information can be stored in a tier of memory that is not the fastest memory in the content delivery network 100. In some embodiments, this can comprise response information such as, for example, information identifying one or several questions or pieces of content and responses provided to the same. In some embodiments, this response information can be formed into one or several matrices "D" containing information for *n* users responding to *p* items, these one or several matrices D are also referred to herein as the matrix D, the D matrix, the user matrix, and/or the response matrix. Thus, the matrix D can have n x p dimensions, and in some embodiments, the matrix D can identify whether user responses to items were correct or incorrect. In some embodiments, for example, the matrix D can include an entry "1" for an item when a user response to that item is correct and can otherwise include and entry "0".

The user profile database 301 can include information relating to one or several student learning preferences. In some embodiments, for example, the user, also referred to herein as the student or the student-user, may have one or several preferred learning styles, one or several most effective learning styles, and/or the like. In some embodiments, the user's learning style can be any learning style describing how the user best learns or how the user prefers to learn. In one embodiment, these learning styles can include, for example, identification of the user as an auditory learner, as a visual learner, and/or as a tactile learner. In some embodiments, the data identifying one or several user learning styles can include data identifying a learning style based on the user's educational history such as, for example, identifying a user as an auditory learner when the user has received significantly higher grades and/or scores on assignments and/or in courses favorable to auditory learners. In some embodiments, this information can be stored in a tier of memory that is not the fastest memory in the content delivery network 100.

In some embodiments, the user profile data store 301 can further include information identifying one or several user skill levels. In some embodiments, these one or several user skill levels can identify a skill level determined based on past performance by the user interacting with the content delivery network 100, and in some embodiments, these one or several user skill levels can identify a predicted skill level determined based on past performance by the user interacting with the content delivery network 100 and one or several predictive models.

The user profile database 301 can further include information relating to one or several teachers and/or instructors who are responsible for organizing, presenting, and/or managing the presentation of information to the user. In some embodiments, user profile database 301 can include information identifying courses and/or subjects that have been taught by the teacher, data identifying courses and/or subjects currently taught by the teacher, and/or data identifying courses and/or subjects that will be taught by the teacher. In some embodiments, this can include information relating to one or several teaching styles of one or several teachers. In some embodiments, the user profile database 301 can further include information indicating past evaluations and/or evaluation reports received by the teacher. In some embodiments, the user profile database 301 can further include information relating to improvement suggestions received by the teacher, training received by the teacher, continuing education received by the teacher, and/or the like. In some embodiments, this information can be stored in a tier of memory that is not the fastest memory in the content delivery network 100.

An accounts data store 302, also referred to herein as an accounts database 302, may generate and store account data for different users in various roles within the content distribution network 100. For example, accounts may be created in an accounts data store 302 for individual end users, supervisors, administrator users, and entities such as companies or educational institutions. Account data may include account types, current account status, account characteristics, and any parameters, limits, restrictions associated with the accounts.

A content library data store 303, also referred to herein as a content library database 303, may include information describing the individual content items (or content resources or data packets or problems or questions) available via the content distribution network 100. In some embodiments, these data packets in the content library database 303 can be linked to from an object network, or specifically to form a Bayes Net content network or learning graph. In some embodiments, these data packets can be linked in the object network according to one or several prerequisite relationships that can, for example, identify the relative hierarchy and/or difficulty of the data objects. In some embodiments, this hierarchy of data objects can be generated by the content distribution network 100 according to user experience with the object network, and in some embodiments, this hierarchy of data objects can be generated based on one or several existing and/or external hierarchies such as, for example, a syllabus, a table of contents, or the like. In some embodiments, for example, the object network can correspond to a syllabus such that content for the syllabus is embodied in the object network.

In some embodiments, the content library data store 303 can comprise a syllabus, a schedule, or the like. In some embodiments, the syllabus or schedule can identify one or several tasks and/or events relevant to the user. In some embodiments, for example, when the user is a member of a group such as, a section or a class, these tasks and/or events relevant to the user can identify one or several assignments, quizzes, exams, or the like.

In some embodiments, the library data store 303 may include metadata, properties, and other characteristics associated with the content resources stored in the content server 112. Such data may identify one or more aspects or content attributes of the associated content resources, for example, subject matter, access level, or skill level of the content resources, license attributes of the content resources (e.g., any limitations and/or restrictions on the licensable use and/or distribution of the content resource), price attributes of the content resources (e.g., a price and/or price structure for determining a payment amount for use or distribution of the content resource), rating attributes for the content resources (e.g., data indicating the evaluation or effectiveness of the content resource), and the like. In some embodiments, the library data store 303 may be configured to allow updating of content metadata or properties, and to allow the addition and/or removal of information relating to the content resources. For example, content relationships may be implemented as graph structures, which may be stored in the library data store 303 or in an additional store for use by selection algorithms along with the other metadata.

In some embodiments, the content library data store 303 can contain information used in evaluating responses received from users. In some embodiments, for example, a user can receive content from the content distribution network 100 and can, subsequent to receiving that content, provide a response to the received content. In some embodiments, for example, the received content can comprise one or several questions, prompts, or the like, and the response to the received content can comprise an answer to those one or several questions, prompts, or the like. In some embodiments, information, referred to herein as "comparative data," from the content library data store 303 can be used to determine whether the responses are the correct and/or desired responses.

In some embodiments, the content library database 303 and/or the user profile database 301 can comprise an aggregation network also referred to herein as a content network or content aggregation network. The aggregation network can comprise a plurality of content aggregations that can be linked together by, for example: creation by common user; relation to a common subject, topic, skill, or the like; creation from a common set of source material such as source data packets; or the like. In some embodiments, the content aggregation can comprise a grouping of content comprising the presentation portion that can be provided to the user in the form of, for example, a flash card and an extraction portion that can comprise the desired response to the presentation portion such as for example, an answer to a flash card. In some embodiments, one or several content aggregations can be generated by the content distribution network 100 and can be related to one or several data packets they can be, for example, organized in object network. In some embodiments, the one or several content aggregations can be each created from content stored in one or several of the data packets.

In some embodiments, the content aggregations located in the content library database 303 and/or the user profile database 301 can be associated with a user-creator of those content aggregations. In some embodiments, access to content aggregations can vary based on, for example, whether a user created the content aggregations. In some embodiments, the content library database 303 and/or the user profile database 301 can comprise a database of content aggregations associated with a specific user, and in some embodiments, the content library database 303 and/or the user profile database 301 can comprise a plurality of databases of content aggregations that are each associated with a specific user. In some embodiments, these databases of content aggregations can include content aggregations created by their specific user and in some embodiments, these databases of content aggregations can further include content aggregations selected for inclusion by their specific user and/or a supervisor of that specific user. In some embodiments, these content aggregations can be arranged and/or linked in a hierarchical relationship similar to the data packets in the object network and/or linked to the object network in the object network or the tasks or skills associated with the data packets in the object network or the syllabus or schedule.

In some embodiments, the content aggregation network, and the content aggregations forming the content aggregation network, can be organized according to the object network and/or the hierarchical relationships embodied in the object network. In some embodiments, the content aggregation network, and/or the content aggregations forming the content aggregation network, can be organized according to one or several tasks identified in the syllabus, schedule or the like.

A pricing data store 304 may include pricing information and/or pricing structures for determining payment amounts for providing access to the content distribution network 100 and/or the individual content resources within the network 100. In some cases, pricing may be determined based on a user's access to the content distribution network 100, for example, a time-based subscription fee or pricing based on network usage. In other cases, pricing may be tied to specific content resources. Certain content resources may have associated pricing information, whereas other pricing determinations may be based on the resources accessed, the profiles and/or accounts of the user, and the desired level of access (e.g., duration of access, network speed, etc.). Additionally, the pricing data store 304 may include information relating to compilation pricing for groups of content resources, such as group prices and/or price structures for groupings of resources.

A license data store 305 may include information relating to licenses and/or licensing of the content resources within the content distribution network 100. For example, the license data store 305 may identify licenses and licensing terms for individual content resources and/or compilations of content resources in the content server 112, the rights holders for the content resources, and/or common or large-scale right holder information such as contact information for rights holders of content not included in the content server 112.

A content access data store 306 may include access rights and security information for the content distribution network 100 and specific content resources. For example, the content access data store 306 may include login information (e.g., user identifiers, logins, passwords, etc.) that can be verified during user login attempts to the network 100. The content access data store 306 also may be used to store assigned user roles and/or user levels of access. For example, a user's access level may correspond to the sets of content resources and/or the client or server applications that the user is permitted to access. Certain users may be permitted or denied access to certain applications and resources based on their subscription level, training program, course/grade level, etc. Certain users may have supervisory access over one or more end users, allowing the supervisor to access all or portions of the end user's content, activities, evaluations, etc. Additionally, certain users may have administrative access over some users and/or some applications in the content management network 100, allowing such users to add and remove user accounts, modify user access permissions, perform maintenance updates on software and servers, etc.

A source data store 307 may include information relating to the source of the content resources available via the content distribution network. For example, a source data store 307 may identify the authors and originating devices of content resources, previous pieces of data and/or groups of data originating from the same authors or originating devices and the like.

An evaluation data store 308 may include information used to direct the evaluation of users and content resources in the content management network 100. In some embodiments, the evaluation data store 308 may contain, for example, the analysis criteria and the analysis guidelines for evaluating users (e.g., trainees/students, gaming users, media content consumers, etc.) and/or for evaluating the content resources in the network 100. The evaluation data store 308 also may include information relating to evaluation processing tasks, for example, the identification of users and user devices 106 that have received certain content resources or accessed certain applications, the status of evaluations or evaluation histories for content resources, users, or applications, and the like. Evaluation criteria may be stored in the evaluation data store 308 including data and/or instructions in the form of one or several electronic rubrics or scoring guides for use in the evaluation of the content, users, or applications. The evaluation data store 308 also may include past evaluations and/or evaluation analyses for users, content, and applications, including relative rankings, characterizations, explanations, and the like.

A model data store 309, also referred to herein as a model database 309 can store information relating to one or several predictive models. In some embodiments, these can include one or several evidence models, risk models, skill models, or the like. In some embodiments, an evidence model can be a mathematically-based statistical model. The evidence model can be based on, for example, Item Response Theory (IRT), Bayesian Network (Bayes net), Performance Factor Analysis (PFA), or the like. The evidence model can, in some embodiments, be customizable to a user and/or to one or several content items. Specifically, one or several inputs relating to the user and/or to one or several content items can be inserted into the evidence model. These inputs can include, for example, one or several measures of user skill level, one or several measures of content item difficulty and/or skill level, or the like. The customized evidence model can then be used to predict the likelihood of the user providing desired or undesired responses to one or several of the content items.

In some embodiments, the risk models can include one or several models that can be used to calculate one or several model function values. In some embodiments, these one or several model function values can be used to calculate a risk probability, which risk probability can characterize the risk of a student-user failing to achieve a desired outcome such as, for example, failing to correctly respond to one or several data packets, failure to achieve a desired level of completion of a program, for example in a pre-defined time period, failure to achieve a desired learning outcome, or the like. In some embodiments, the risk probability can identify the risk of the student-user failing to complete 60% of the program.

In some embodiments, these models can include a plurality of model functions including, for example, a first model function, a second model function, a third model function, and a fourth model function. In some embodiments, some or all of the model functions can be associated with a portion of the program such as, for example a completion stage and/or completion status of the program. In one embodiment, for example, the first model function can be associated with a first completion status, the second model function can be associated with a second completion status, the third model function can be associated with a third completion status, and the fourth model function can be associated with a fourth completion status. In some embodiments, these completion statuses can be selected such that some or all of these completion statuses are less than the desired level of completion of the program. Specifically, in some embodiments, these completion statuses can be selected to all be at less than 60% completion of the program, and more specifically, in some embodiments, the first completion status can be at 20% completion of the program, the second completion status can be at 30% completion of the program, the third completion status can be at 40% completion of the program, and the fourth completion status can be at 50% completion of the program. Similarly, any desired number of model functions can be associated with any desired number of completion statuses.

In some embodiments, a model function can be selected from the plurality of model functions based on a user's progress through a program. In some embodiments, the user's progress can be compared to one or several status trigger thresholds, each of which status trigger thresholds can be associated with one or more of the model functions. If one of the status triggers is triggered by the user's progress, the corresponding one or several model functions can be selected.

The model functions can comprise a variety of types of models and/or functions. In some embodiments, each of the model functions outputs a function value that can be used in calculating a risk probability. This function value can be calculated by performing one or several mathematical operations on one or several values indicative of one or several user attributes and/or user parameters, also referred to herein as program status parameters. In some embodiments, each of the model functions can use the same program status parameters, and in some embodiments, the model functions can use different program status parameters. In some embodiments, the model functions use different program status parameters when at least one of the model functions uses at least one program status parameter that is not used by others of the model functions.

In some embodiments, a skill model can comprise a statistical model identifying a predictive skill level of one or several users. In some embodiments, this model can identify a single skill level of a user and/or a range of possible skill levels of a user. In some embodiments, this statistical model can identify a skill level of a student-user and an error value or error range associated with that skill level. In some embodiments, the error value can be associated with a confidence interval determined based on a confidence level. Thus, in some embodiments, as the number of user interactions with the content distribution network increases, the confidence level can increase and the error value can decrease such that the range identified by the error value about the predicted skill level is smaller.

In some embodiments, the model database 309, can further include data characterizing one or several attributes of one or several of the model stored in the model database. In some embodiments, this data can characterize aspects of the training of one or several of the model stored in the model database including, for example, identification of one or several sets of training data, identification of attributes of one or several sets of training data, such as, for example, the size of the sets of training data, or the like. In some embodiments, this data can further include data characterizing the confidence of one or several models stored in the model database 309.

A threshold database 310 can store one or several threshold values. These one or several threshold values can delineate between states or conditions. In one exemplary embodiment, for example, a threshold value can delineate between an acceptable user performance and an unacceptable user performance, between content appropriate for a user and content that is inappropriate for a user, between risk levels, or the like.

A prioritization database 311 can include data relating to one or several tasks and the prioritization of those one or several tasks with respect to each other. In some embodiments, the prioritization database 311 can be unique to a specific user, and in some embodiments, the prioritization database 311 can be applicable to a plurality of users. In some embodiments in which the prioritization database 311 is unique to a specific user, the prioritization database 311 can be a sub-database of the user profile database 301. In some embodiments, the prioritization database 311 can include information identifying a plurality of tasks and a relative prioritization amongst that plurality of tasks. In some embodiments, this prioritization can be static and in some embodiments, this prioritization can be dynamic in that the prioritization can change based on updates, for example, one or several of the tasks, the user profile database 301, or the like. In some embodiments, the prioritization database 311 can include information relating to tasks associated with a single course, group, class, or the like, and in some embodiments, the prioritization database 311 can include information relating to tasks associated with a plurality of courses, groups, classes, or the like.

A task can define an objective and/or outcome and can be associated with one or several data packets that can, for example, contribute to user attainment of the objective and/or outcome. In some embodiments, some or all of the data packets contained in the content library database 303 can be linked with one or several tasks stored in the prioritization database 311 such that a single task can be linked and/or associated with one or several data packets.

The prioritization database 311 can further include information relevant to the prioritization of one or several tasks and/or the prioritization database 311 can include information that can be used in determining the prioritization of one or several tasks. In some embodiments, this can include weight data which can identify a relative and/or absolute weight of a task. In some embodiments, for example, the weight data can identify the degree to which a task contributes to an outcome such as, for example, a score or a grade. In some embodiments, this weight data can specify the portion and/or percent of a grade of a class, section, course, or study that results from, and/or that is associated with the task.

The prioritization database 311 can further include information relevant to the composition of the task. In some embodiments, for example, this information, also referred to herein as a composition value, can identify one or several sub-tasks and/or content categories forming the tasks, as well as a contribution of each of those sub-tasks and/or content categories to the task. In some embodiments, the application of the weight data to the composition value can result in the identification of a contribution value for the task and/or for the one or several sub-tasks and/or content categories forming the task. This contribution value can identify the contribution of one, some, or all of the sub-tasks and/or content categories to the outcome such as, for example, the score or the grade.

The calendar data source 312, also referred to herein as the calendar database 312 can include timing information relevant to the tasks contained in the prioritization database 311. In some embodiments, this timing information can identify one or several dates by which the tasks should be completed, one or several event dates associated with the task such as, for example, one or several due dates, test dates, or the like, holiday information, or the like. In some embodiments, the calendar database 312 can further include any information provided to the user relating to other goals, commitments, or the like.

In addition to the illustrative data stores described above, data store server(s) 104 (e.g., database servers, file-based storage servers, etc.) may include one or more external data aggregators 313. External data aggregators 313 may include third-party data sources accessible to the content management network 100, but not maintained by the content management network 100. External data aggregators 313 may include any electronic information source relating to the users, content resources, or applications of the content distribution network 100. For example, external data aggregators 313 may be third-party data stores containing demographic data, education related data, consumer sales data, health related data, and the like. Illustrative external data aggregators 313 may include, for example, social networking web servers, public records data stores, learning management systems, educational institution servers, business servers, consumer sales data stores, medical record data stores, etc. Data retrieved from various external data aggregators 313 may be used to verify and update user account information, suggest user content, and perform user and content evaluations.

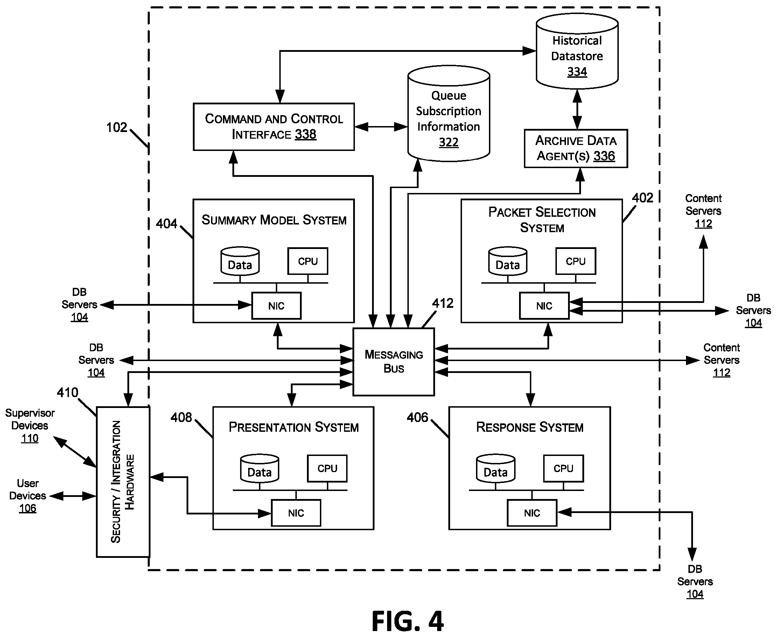

With reference now to **Figure 4****,** a block diagram is shown illustrating an embodiment of one or more content management servers 102 within a content distribution network 100. In such an embodiment, content management server 102 performs internal data gathering and processing of streamed content along with external data gathering and processing. Other embodiments could have either all external or all internal data gathering. This embodiment allows reporting timely information that might be of interest to the reporting party or other parties. In this embodiment, the content management server 102 can monitor gathered information from several sources to allow it to make timely business and/or processing decisions based upon that information. For example, reports of user actions and/or responses, as well as the status and/or results of one or several processing tasks could be gathered and reported to the content management server 102 from a number of sources.

Internally, the content management server 102 gathers information from one or more internal components 402-408. The internal components 402-408 gather and/or process information relating to such things as: content provided to users; content consumed by users; responses provided by users; user skill levels; content difficulty levels; next content for providing to users; etc. The internal components 402-408 can report the gathered and/or generated information in real-time, near real-time or along another time line. To account for any delay in reporting information, a time stamp or staleness indicator can inform others of how timely the information was sampled. The content management server 102 can opt to allow third parties to use internally or externally gathered information that is aggregated within the server 102 by subscription to the content distribution network 100.

A command and control (CC) interface 338 configures the gathered input information to an output of data streams, also referred to herein as content streams. APIs for accepting gathered information and providing data streams are provided to third parties external to the server 102 who want to subscribe to data streams. The server 102 or a third party can design as yet undefined APIs using the CC interface 338. The server 102 can also define authorization and authentication parameters using the CC interface 338 such as authentication, authorization, login, and/or data encryption. CC information is passed to the internal components 402-408 and/or other components of the content distribution network 100 through a channel separate from the gathered information or data stream in this embodiment, but other embodiments could embed CC information in these communication channels. The CC information allows throttling information reporting frequency, specifying formats for information and data streams, deactivation of one or several internal components 402-408 and/or other components of the content distribution network 100, updating authentication and authorization, etc.

The various data streams that are available can be researched and explored through the CC interface 338. Those data stream selections for a particular subscriber, which can be one or several of the internal components 402-408 and/or other components of the content distribution network 100, are stored in the queue subscription information database 322. The server 102 and/or the CC interface 338 then routes selected data streams to processing subscribers that have selected delivery of a given data stream. Additionally, the server 102 also supports historical queries of the various data streams that are stored in an historical data store 334 as gathered by an archive data agent 336. Through the CC interface 338 various data streams can be selected for archiving into the historical data store 334.

Components of the content distribution network 100 outside of the server 102 can also gather information that is reported to the server 102 in real-time, near real-time, or along another time line. There is a defined API between those components and the server 102. Each type of information or variable collected by server 102 falls within a defined API or multiple APIs. In some cases, the CC interface 338 is used to define additional variables to modify an API that might be of use to processing subscribers. The additional variables can be passed to all processing subscribes or just a subset. For example, a component of the content distribution network 100 outside of the server 102 may report a user response, but define an identifier of that user as a private variable that would not be passed to processing subscribers lacking access to that user and/or authorization to receive that user data. Processing subscribers having access to that user and/or authorization to receive that user data would receive the subscriber identifier along with the response reported to that component. Encryption and/or unique addressing of data streams or substreams can be used to hide the private variables within the messaging queues.

The user devices 106 and/or supervisor devices 110 communicate with the server 102 through security and/or integration hardware 410. The communication with security and/or integration hardware 410 can be encrypted or not. For example, a socket using a TCP connection could be used. In addition to TCP, other transport layer protocols like Control Transmission Protocol (SCTP) and User Datagram Protocol (UDP) could be used in some embodiments to intake the gathered information. A protocol such as SSL could be used to protect the information over the TCP connection. Authentication and authorization can be performed to any user devices 106 and/or supervisor device interfacing to the server 102. The security and/or integration hardware 410 receives the information from one or several of the user devices 106 and/or the supervisor devices 110 by providing the API and any encryption, authorization, and/or authentication. In some cases, the security and/or integration hardware 410 reformats or rearranges this received information

The messaging bus 412, also referred to herein as a messaging queue or a messaging channel, can receive information from the internal components of the server 102 and/or components of the content distribution network 100 outside of the server 102 and distribute the gathered information as a data stream to any processing subscribers that have requested the data stream from the messaging queue 412. As indicated in Figure 4, processing subscribers are indicated by a connector to the messaging bus 412, the connector having an arrow head pointing away from the messaging bus 412. In some examples, only data streams within the messaging queue 412 that a particular processing subscriber has subscribed to may be read by that processing subscriber if received at all. Gathered information sent to the messaging queue 412 is processed and returned in a data stream in a fraction of a second by the messaging queue 412. Various multicasting and routing techniques can be used to distribute a data stream from the messaging queue 412 that a number of processing subscribers have requested. Protocols such as Multicast or multiple Unicast could be used to distributed streams within the messaging queue 412. Additionally, transport layer protocols like TCP, SCTP and UDP could be used in various embodiments.

Through the CC interface 338, an external or internal processing subscriber can be assigned one or more data streams within the messaging queue 412. A data stream is a particular type of messages in a particular category. For example, a data stream can comprise all of the data reported to the messaging bus 412 by a designated set of components. One or more processing subscribers could subscribe and receive the data stream to process the information and make a decision and/or feed the output from the processing as gathered information fed back into the messaging queue 412. Through the CC interface 338 a developer can search the available data streams or specify a new data stream and its API. The new data stream might be determined by processing a number of existing data streams with a processing subscriber.

The CDN 110 has internal processing subscribers 402-408 that process assigned data streams to perform functions within the server 102. Internal processing subscribers 402-408 could perform functions such as providing content to a user, receiving a response from a user, determining the correctness of the received response, updating one or several models based on the correctness of the response, recommending new content for providing to one or several users, or the like. The internal processing subscribers 402-408 can decide filtering and weighting of records from the data stream. To the extent that decisions are made based upon analysis of the data stream, each data record is time stamped to reflect when the information was gathered such that additional credibility could be given to more recent results, for example. Other embodiments may filter out records in the data stream that are from an unreliable source or stale. For example, a particular contributor of information may prove to have less than optimal gathered information and that could be weighted very low or removed altogether.

Internal processing subscribers 402-408 may additionally process one or more data streams to provide different information to feed back into the messaging queue 412 to be part of a different data stream. For example, hundreds of user devices 106 could provide responses that are put into a data stream on the messaging queue 412. An internal processing subscriber 402-408 could receive the data stream and process it to determine the difficulty of one or several data packets provided to one or several users and supply this information back onto the messaging queue 412 for possible use by other internal and external processing subscribers.

As mentioned above, the CC interface 338 allows the CDN 110 to query historical messaging queue 412 information. An archive data agent 336 listens to the messaging queue 412 to store data streams in a historical database 334. The historical database 334 may store data streams for varying amounts of time and may not store all data streams. Different data streams may be stored for different amounts of time.

With regards to the components 402-408, the content management server(s) 102 may include various server hardware and software components that manage the content resources within the content distribution network 100 and provide interactive and adaptive content to users on various user devices 106. For example, content management server(s) 102 may provide instructions to and receive information from the other devices within the content distribution network 100, in order to manage and transmit content resources, user data, and server or client applications executing within the network 100.

A content management server 102 may include a packet selection system 402. The packet selection system 402 may be implemented using dedicated hardware within the content distribution network 100 (e.g., a packet selection server 402), or using designated hardware and software resources within a shared content management server 102. In some embodiments, the packet selection system 402 may adjust the selection and adaptive capabilities of content resources to match the needs and desires of the users receiving the content. For example, the packet selection system 402 may query various data stores and servers 104 to retrieve user information, such as user preferences and characteristics (e.g., from a user profile data store 301), user access restrictions to content recourses (e.g., from a content access data store 306), previous user results and content evaluations (e.g., from an evaluation data store 308), and the like. Based on the retrieved information from data stores 104 and other data sources, the packet selection system 402 may modify content resources for individual users.

In some embodiments, the packet selection system 402 can include a recommendation engine, also referred to herein as an adaptive recommendation engine. In some embodiments, the recommendation engine can select one or several pieces of content, also referred to herein as data packets, for providing to a user. These data packets can be selected based on, for example, the information retrieved from the database server 104 including, for example, the user profile database 301, the content library database 303, the model database 309, or the like. In some embodiments, these one or several data packets can be adaptively selected and/or selected according to one or several selection rules. In one embodiment, for example, the recommendation engine can retrieve information from the user profile database 301 identifying, for example, a skill level of the user. The recommendation engine can further retrieve information from the content library database 303 identifying, for example, potential data packets for providing to the user and the difficulty of those data packets and/or the skill level associated with those data packets.

The recommendation engine can identify one or several potential data packets for providing and/or one or several data packets for providing to the user based on, for example, one or several rules, models, predictions, or the like. The recommendation engine can use the skill level of the user to generate a prediction of the likelihood of one or several users providing a desired response to some or all of the potential data packets. In some embodiments, the recommendation engine can pair one or several data packets with selection criteria that may be used to determine which packet should be delivered to a user based on one or several received responses from that student-user. In some embodiments, one or several data packets can be eliminated from the pool of potential data packets if the prediction indicates either too high a likelihood of a desired response or too low a likelihood of a desired response. In some embodiments, the recommendation engine can then apply one or several selection criteria to the remaining potential data packets to select a data packet for providing to the user. These one or several selection criteria can be based on, for example, criteria relating to a desired estimated time for receipt of response to the data packet, one or several content parameters, one or several assignment parameters, or the like.

A content management server 102 also may include a summary model system 404. The summary model system 404 may be implemented using dedicated hardware within the content distribution network 100 (e.g., a summary model server 404), or using designated hardware and software resources within a shared content management server 102. In some embodiments, the summary model system 404 may monitor the progress of users through various types of content resources and groups, such as media compilations, courses, or curriculums in training or educational contexts, interactive gaming environments, and the like. For example, the summary model system 404 may query one or more databases and/or data store servers 104 to retrieve user data such as associated content compilations or programs, content completion status, user goals, results, and the like.

A content management server 102 also may include a response system 406, which can include, in some embodiments, a response processor. The response system 406 may be implemented using dedicated hardware within the content distribution network 100 (e.g., a response server 406), or using designated hardware and software resources within a shared content management server 102. The response system 406 may be configured to receive and analyze information from user devices 106. For example, various ratings of content resources submitted by users may be compiled and analyzed, and then stored in a data store (e.g., a content library data store 303 and/or evaluation data store 308) associated with the content. In some embodiments, the response server 406 may analyze the information to determine the effectiveness or appropriateness of content resources with, for example, a subject matter, an age group, a skill level, or the like. In some embodiments, the response system 406 may provide updates to the packet selection system 402 or the summary model system 404, with the attributes of one or more content resources or groups of resources within the network 100. The response system 406 also may receive and analyze user evaluation data from user devices 106, supervisor devices 110, and administrator servers 116, etc. For instance, response system 406 may receive, aggregate, and analyze user evaluation data for different types of users (e.g., end users, supervisors, administrators, etc.) in different contexts (e.g., media consumer ratings, trainee or student comprehension levels, teacher effectiveness levels, gamer skill levels, etc.).

In some embodiments, the response system 406 can be further configured to receive one or several responses from the user and analyze these one or several responses. In some embodiments, for example, the response system 406 can be configured to translate the one or several responses into one or several observables. As used herein, an observable is a characterization of a received response. In some embodiments, the translation of the one or several response into one or several observables can include determining whether the one or several response are correct responses, also referred to herein as desired responses, or are incorrect responses, also referred to herein as undesired responses. In some embodiments, the translation of the one or several response into one or several observables can include characterizing the degree to which one or several response are desired responses and/or undesired responses. In some embodiments, one or several values can be generated by the response system 406 to reflect user performance in responding to the one or several data packets. In some embodiments, these one or several values can comprise one or several scores for one or several responses and/or data packets.

A content management server 102 also may include a presentation system 408. The presentation system 408 may be implemented using dedicated hardware within the content distribution network 100 (e.g., a presentation server 408), or using designated hardware and software resources within a shared content management server 102. The presentation system 408 can include a presentation engine that can be, for example, a software module running on the content delivery system.

The presentation system 408, also referred to herein as the presentation module or the presentation engine, may receive content resources from the packet selection system 402 and/or from the summary model system 404, and provide the resources to user devices 106. The presentation system 408 may determine the appropriate presentation format for the content resources based on the user characteristics and preferences, and/or the device capabilities of user devices 106. If needed, the presentation system 408 may convert the content resources to the appropriate presentation format and/or compress the content before transmission. In some embodiments, the presentation system 408 may also determine the appropriate transmission media and communication protocols for transmission of the content resources.

In some embodiments, the presentation system 408 may include specialized security and integration hardware 410, along with corresponding software components to implement the appropriate security features content transmission and storage, to provide the supported network and client access models, and to support the performance and scalability requirements of the network 100. The security and integration layer 410 may include some or all of the security and integration components 208 discussed above in Figure 2, and may control the transmission of content resources and other data, as well as the receipt of requests and content interactions, to and from the user devices 106, supervisor devices 110, administrator servers 116, and other devices in the network 100.

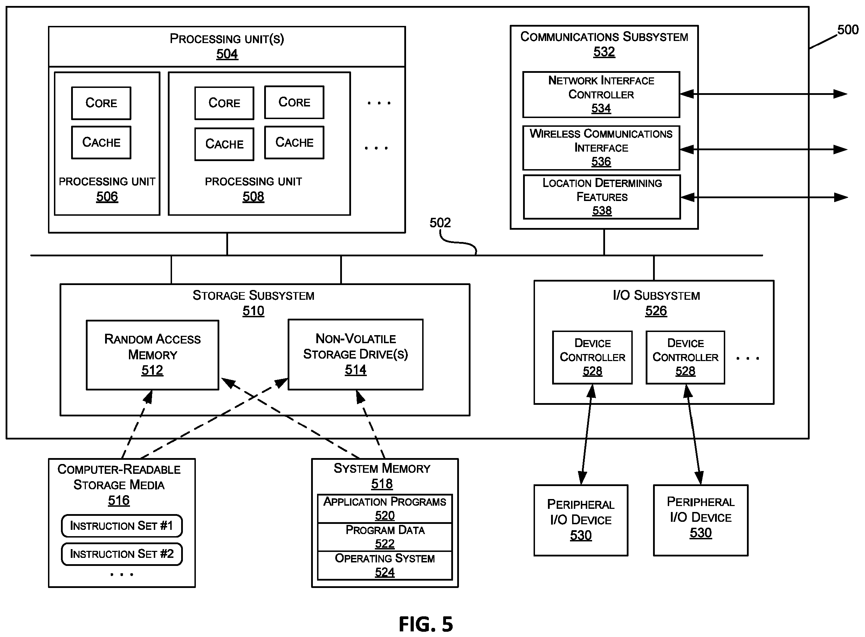

With reference now to **Figure 5****,** a block diagram of an illustrative computer system is shown. The system 500 may correspond to any of the computing devices or servers of the content distribution network 100 described above, or any other computing devices described herein, and specifically can include, for example, one or several of the user devices 106, the supervisor device 110, and/or any of the servers 102, 104, 108, 112, 114, 116. In this example, computer system 500 includes processing units 504 that communicate with a number of peripheral subsystems via a bus subsystem 502. These peripheral subsystems include, for example, a storage subsystem 510, an I/O subsystem 526, and a communications subsystem 532.

Bus subsystem 502 provides a mechanism for letting the various components and subsystems of computer system 500 communicate with each other as intended. Although bus subsystem 502 is shown schematically as a single bus, alternative embodiments of the bus subsystem may utilize multiple buses. Bus subsystem 502 may be any of several types of bus structures including a memory bus or memory controller, a peripheral bus, and a local bus using any of a variety of bus architectures. Such architectures may include, for example, an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

Processing unit 504, which may be implemented as one or more integrated circuits (e.g., a conventional microprocessor or microcontroller), controls the operation of computer system 500. One or more processors, including single core and/or multicore processors, may be included in processing unit 504. As shown in the figure, processing unit 504 may be implemented as one or more independent processing units 506 and/or 508 with single or multicore processors and processor caches included in each processing unit. In other embodiments, processing unit 504 may also be implemented as a quad-core processing unit or larger multicore designs (e.g., hexa-core processors, octo-core processors, ten-core processors, or greater.

Processing unit 504 may execute a variety of software processes embodied in program code, and may maintain multiple concurrently executing programs or processes. At any given time, some or all of the program code to be executed can be resident in processor(s) 504 and/or in storage subsystem 510. In some embodiments, computer system 500 may include one or more specialized processors, such as digital signal processors (DSPs), outboard processors, graphics processors, application-specific processors, and/or the like.

I/O subsystem 526 may include device controllers 528 for one or more user interface input devices and/or user interface output devices 530. User interface input and output devices 530 may be integral with the computer system 500 (e.g., integrated audio/video systems, and/or touchscreen displays), or may be separate peripheral devices which are attachable/detachable from the computer system 500. The I/O subsystem 526 may provide one or several outputs to a user by converting one or several electrical signals to user perceptible and/or interpretable form, and may receive one or several inputs from the user by generating one or several electrical signals based on one or several user-caused interactions with the I/O subsystem such as the depressing of a key or button, the moving of a mouse, the interaction with a touchscreen or trackpad, the interaction of a sound wave with a microphone, or the like.

Input devices 530 may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. Input devices 530 may also include three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additional input devices 530 may include, for example, motion sensing and/or gesture recognition devices that enable users to control and interact with an input device through a natural user interface using gestures and spoken commands, eye gesture recognition devices that detect eye activity from users and transform the eye gestures as input into an input device, voice recognition sensing devices that enable users to interact with voice recognition systems through voice commands, medical imaging input devices, MIDI keyboards, digital musical instruments, and the like.

Output devices 530 may include one or more display subsystems, indicator lights, or non-visual displays such as audio output devices, etc. Display subsystems may include, for example, cathode ray tube (CRT) displays, flat-panel devices, such as those using a liquid crystal display (LCD) or plasma display, light-emitting diode (LED) displays, projection devices, touch screens, and the like. In general, use of the term "output device" is intended to include all possible types of devices and mechanisms for outputting information from computer system 500 to a user or other computer. For example, output devices 530 may include, without limitation, a variety of display devices that visually convey text, graphics, and audio/video information such as monitors, printers, speakers, headphones, automotive navigation systems, plotters, voice output devices, and modems.

Computer system 500 may comprise one or more storage subsystems 510, comprising hardware and software components used for storing data and program instructions, such as system memory 518 and computer-readable storage media 516. The system memory 518 and/or computer-readable storage media 516 may store program instructions that are loadable and executable on processing units 504, as well as data generated during the execution of these programs.

Depending on the configuration and type of computer system 500, system memory 518 may be stored in volatile memory (such as random access memory (RAM) 512) and/or in non-volatile storage drives 514 (such as read-only memory (ROM), flash memory, etc.). The RAM 512 may contain data and/or program modules that are immediately accessible to and/or presently being operated and executed by processing units 504. In some implementations, system memory 518 may include multiple different types of memory, such as static random access memory (SRAM) or dynamic random access memory (DRAM). In some implementations, a basic input/output system (BIOS), containing the basic routines that help to transfer information between elements within computer system 500, such as during start-up, may typically be stored in the non-volatile storage drives 514. By way of example, and not limitation, system memory 518 may include application programs 520, such as client applications, Web browsers, mid-tier applications, server applications, etc., program data 522, and an operating system 524.

Storage subsystem 510 also may provide one or more tangible computer-readable storage media 516 for storing the basic programming and data constructs that provide the functionality of some embodiments. Software (programs, code modules, instructions) that when executed by a processor provide the functionality described herein may be stored in storage subsystem 510. These software modules or instructions may be executed by processing units 504. Storage subsystem 510 may also provide a repository for storing data used in accordance with the present invention.

Storage subsystem 510 may also include a computer-readable storage media reader that can further be connected to computer-readable storage media 516. Together and, optionally, in combination with system memory 518, computer-readable storage media 516 may comprehensively represent remote, local, fixed, and/or removable storage devices plus storage media for temporarily and/or more permanently containing, storing, transmitting, and retrieving computer-readable information.

Computer-readable storage media 516 containing program code, or portions of program code, may include any appropriate media known or used in the art, including storage media and communication media, such as, but not limited to, volatile and non-volatile, removable and non-removable media implemented in any method or technology for storage and/or transmission of information. This can include tangible computer-readable storage media such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer readable media. This can also include nontangible computer-readable media, such as data signals, data transmissions, or any other medium which can be used to transmit the desired information and which can be accessed by computer system 500.

By way of example, computer-readable storage media 516 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 516 may include, but is not limited to, Zip^{®} drives, flash memory cards, universal serial bus (USB) flash drives, secure digital (SD) cards, DVD disks, digital video tape, and the like. Computer-readable storage media 516 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 500.

Communications subsystem 532 may provide a communication interface from computer system 500 and external computing devices via one or more communication networks, including local area networks (LANs), wide area networks (WANs) (e.g., the Internet), and various wireless telecommunications networks. As illustrated in Figure 5, the communications subsystem 532 may include, for example, one or more network interface controllers (NICs) 534, such as Ethernet cards, Asynchronous Transfer Mode NICs, Token Ring NICs, and the like, as well as one or more wireless communications interfaces 536, such as wireless network interface controllers (WNICs), wireless network adapters, and the like. As illustrated in Figure 5, the communications subsystem 532 may include, for example, one or more location determining features 538 such as one or several navigation system features and/or receivers, and the like. Additionally and/or alternatively, the communications subsystem 532 may include one or more modems (telephone, satellite, cable, ISDN), synchronous or asynchronous digital subscriber line (DSL) units, FireWire^{®} interfaces, USB^{®} interfaces, and the like. Communications subsystem 536 also may include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components.

The various physical components of the communications subsystem 532 may be detachable components coupled to the computer system 500 via a computer network, a FireWire^{®} bus, or the like, and/or may be physically integrated onto a motherboard of the computer system 500. Communications subsystem 532 also may be implemented in whole or in part by software.

In some embodiments, communications subsystem 532 may also receive input communication in the form of structured and/or unstructured data feeds, event streams, event updates, and the like, on behalf of one or more users who may use or access computer system 500. For example, communications subsystem 532 may be configured to receive data feeds in real-time from users of social networks and/or other communication services, web feeds such as Rich Site Summary (RSS) feeds, and/or real-time updates from one or more third party information sources (e.g., external data source 313). Additionally, communications subsystem 532 may be configured to receive data in the form of continuous data streams, which may include event streams of real-time events and/or event updates (e.g., sensor data applications, financial tickers, network performance measuring tools, clickstream analysis tools, automobile traffic monitoring, etc.). Communications subsystem 532 may output such structured and/or unstructured data feeds, event streams, event updates, and the like to one or more data stores 104 that may be in communication with one or more streaming data source computers coupled to computer system 500.

Due to the ever-changing nature of computers and networks, the description of computer system 500 depicted in the figure is intended only as a specific example. Many other configurations having more or fewer components than the system depicted in the figure are possible. For example, customized hardware might also be used and/or particular elements might be implemented in hardware, firmware, software, or a combination. Further, connection to other computing devices, such as network input/output devices, may be employed. Based on the disclosure and teachings provided herein, a person of ordinary skill in the art will appreciate other ways and/or methods to implement the various embodiments.

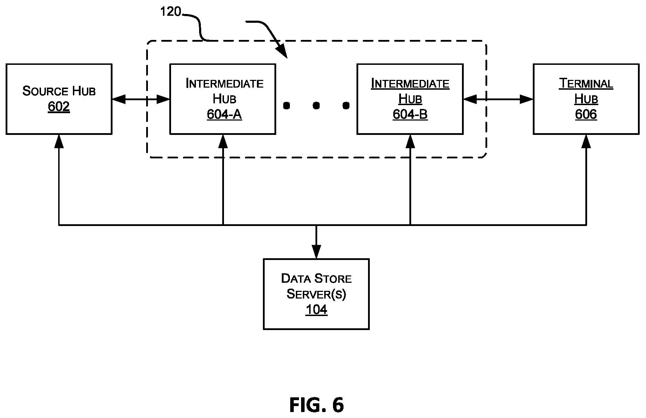

With reference now to **Figure 6****,** a block diagram illustrating one embodiment of the communication network is shown. Specifically, Figure 6 depicts one hardware configuration in which messages are exchanged between a source hub 602 and a terminal hub 606 via the communication network 120 that can include one or several intermediate hubs 604. In some embodiments, the source hub 602 can be any one or several components of the content distribution network generating and initiating the sending of a message, and the terminal hub 606 can be any one or several components of the content distribution network 100 receiving and not re-sending the message. In some embodiments, for example, the source hub 602 can be one or several of the user device 106, the supervisor device 110, and/or the server 102, and the terminal hub 606 can likewise be one or several of the user device 106, the supervisor device 110, and/or the server 102. In some embodiments, the intermediate hubs 604 can include any computing device that receives the message and resends the message to a next node.

As seen in Figure 6, in some embodiments, each of the hubs 602, 604, 606 can be communicatively connected with the data store 104. In such an embodiments, some or all of the hubs 602, 604, 606 can send information to the data store 104 identifying a received message and/or any sent or resent message. This information can, in some embodiments, be used to determine the completeness of any sent and/or received messages and/or to verify the accuracy and completeness of any message received by the terminal hub 606.

In some embodiments, the communication network 120 can be formed by the intermediate hubs 604. In some embodiments, the communication network 120 can comprise a single intermediate hub 604, and in some embodiments, the communication network 120 can comprise a plurality of intermediate hubs. In one embodiment, for example, and as depicted in Figure 6, the communication network 120 includes a first intermediate hub 604-A and a second intermediate hub 604-B.

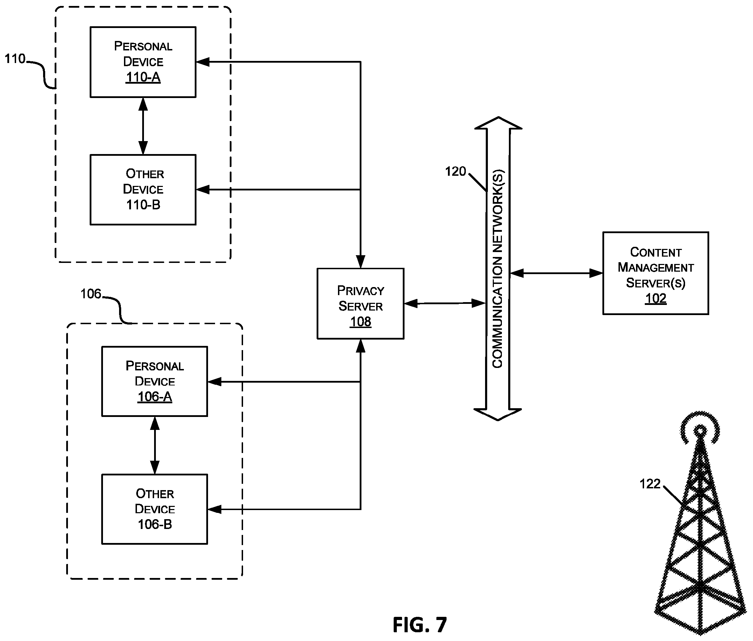

With reference now to **Figure 7****,** a block diagram illustrating one embodiment of user device 106 and supervisor device 110 communication is shown. In some embodiments, for example, a user may have multiple devices that can connect with the content distribution network 100 to send or receive information. In some embodiments, for example, a user may have a personal device such as a mobile device, a smartphone, a tablet, a smartwatch, a laptop, a PC, or the like. In some embodiments, the other device can be any computing device in addition to the personal device. This other device can include, for example, a laptop, a PC, a smartphone, a tablet, a smartwatch, or the like. In some embodiments, the other device differs from the personal device in that the personal device is registered as such within the content distribution network 100 and the other device is not registered as a personal device within the content distribution network 100.

Specifically with respect to Figure 7 in view of the devices illustrated with Figure 1, the user device 106 can include a personal user device 106-A and one or several other user devices 106-B. In some embodiments, one or both of the personal user device 106-A and the one or several other user devices 106-B can be communicatively connected to the content management server 102 and/or to the navigation system 122. Similarly, the supervisor device 110 can include a personal supervisor device 110-A and one or several other supervisor devices 110-B. In some embodiments, one or both of the personal supervisor device 110-A and the one or several other supervisor devices 110-B can be communicatively connected to the content management server 102 and/or to the navigation system 122.

In some embodiments, the content distribution network can send one or more alerts to one or more user devices 106 and/or one or more supervisor devices 110 via, for example, the communication network 120. In some embodiments, the receipt of the alert can result in the launching of an application within the receiving device, and in some embodiments, the alert can include a link that, when selected, launches the application or navigates a web-browser of the device of the selector of the link to page or portal associated with the alert.

In some embodiments, for example, the providing of this alert can include the identification of one or several user devices 106 and/or student-user accounts associated with the student-user and/or one or several supervisor devices 110 and/or supervisor-user accounts associated with the supervisor-user. After these one or several devices 106, 110 and/or accounts have been identified, the providing of this alert can include determining an active device of the devices 106, 110 based on determining which of the devices 106, 110 and/or accounts are actively being used, and then providing the alert to that active device.

Specifically, if the user is actively using one of the devices 106, 110 such as the other user device 106-B and the other supervisor device 110-B, and/or accounts, the alert can be provided to the user via that other device 106-B, 110-B, and/or account that is actively being used. If the user is not actively using another device 106-B, 110-B, and/or account, a personal device 106-A, 110-A device, such as a smart phone or tablet, can be identified and the alert can be provided to this personal device 106-A, 110-A. In some embodiments, the alert can include code to direct the default device to provide an indicator of the received alert such as, for example, an oral, tactile, or visual indicator of receipt of the alert.

In some embodiments, the recipient device 106, 110 of the alert can provide an indication of receipt of the alert. In some embodiments, the presentation of the alert can include the control of the I/O subsystem 526 to, for example, provide an oral, tactile, and/or visual indicator of the alert and/or of the receipt of the alert. In some embodiments, this can include controlling a screen of the supervisor device 110 to display the alert, data contained in alert and/or an indicator of the alert.

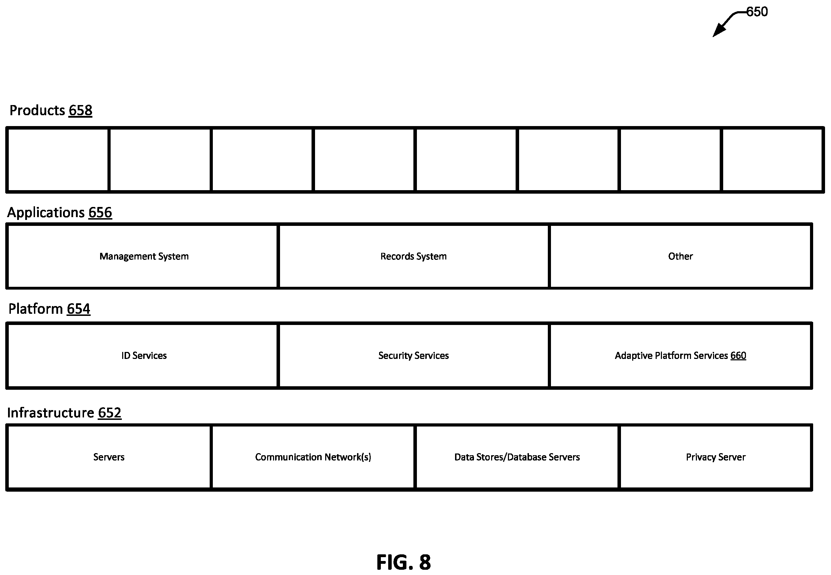

With reference now to **Figure 8****,** a schematic illustration of one embodiment of an application stack, and particularly of a stack 650 is shown. In some embodiments, the content distribution network 100 can comprise a portion of the stack 650 that can include an infrastructure layer 652, a platform layer 654, an applications layer 656, and a products layer 658. In some embodiments, the stack 650 can comprise some or all of the layers, hardware, and/or software to provide one or several desired functionalities and/or productions.

As depicted in Figure 8, the infrastructure layer 652 can include one or several servers, communication networks, data stores, privacy servers, and the like. In some embodiments, the infrastructure layer can further include one or several user devices 106 and/or supervisor devices 110 connected as part of the content distribution network.

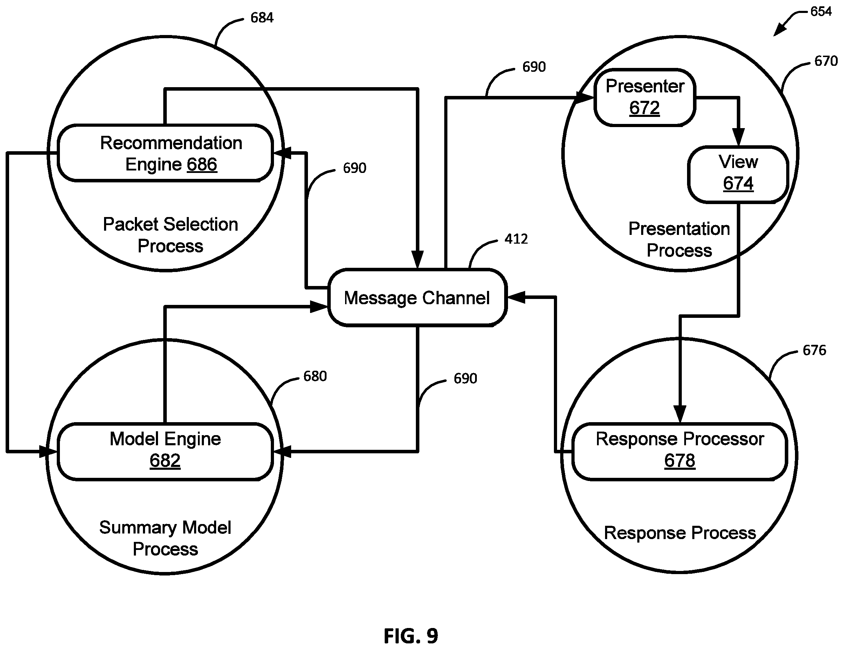

The platform layer can include one or several platform software programs, modules, and/or capabilities. These can include, for example, identification services, security services, and/or adaptive platform services 660. In some embodiments, the identification services can, for example, identify one or several users, components of the content distribution network 100, or the like. The security services can monitor the content distribution network for one or several security threats, breaches, viruses, malware, or the like. The adaptive platform services 660 can receive information from one or several components of the content distribution network 100 and can provide predictions, models, recommendations, or the like based on that received information. The functionality of the adaptive platform services 660 will be discussed in greater detail in Figures 9-11, below.

The applications layer 656 can include software or software modules upon or in which one or several product softwares or product software modules can operate. In some embodiments, the applications layer 656 can include, for example, a management system, record system, or the like. In some embodiments, the management system can include, for example, a Learning Management System (LMS), a Content Management System (CMS), or the like. The management system can be configured to control the delivery of one or several resources to a user and/or to receive one or several responses from the user. In some embodiments, the records system can include, for example, a virtual gradebook, a virtual counselor, or the like.

The products layer can include one or several software products and/or software module products. These software products and/or software module products can provide one or several services and/or functionalities to one or several users of the software products and/or software module products.

With reference now to **Figure 9-11****,** schematic illustrations of embodiments of communication and processing flow of modules within the content distribution network 100 are shown. In some embodiments, the communication and processing can be performed in portions of the platform layer 654 and/or applications layer 656. Figure 9 depicts a first embodiment of such communications or processing that can be in the platform layer 654 and/or applications layer 656 via the message channel 412.

The platform layer 654 and/or applications layer 656 can include a plurality of modules that can be embodied in software or hardware. In some embodiments, some or all of the modules can be embodied in hardware and/or software at a single location, and in some embodiments, some or all of these modules can be embodied in hardware and/or software at multiple locations. These modules can perform one or several processes including, for example, a presentation process 670, a response process 676, a summary model process 680, and a packet selection process 684.

The presentation process 670 can, in some embodiments, include one or several method and/or steps to deliver content to one or several user devices 106 and/or supervisor devices 110. The presentation process 670 can be performed by a presenter module 672 and a view module 674. The presenter module 672 can be a hardware or software module of the content distribution network 100, and specifically of the server 102. In some embodiments, the presenter module 672 can include one or several portions, features, and/or functionalities that are located on the server 102 and/or one or several portions, features, and/or functionalities that are located on the user device 106. In some embodiments, the presenter module 672 can be embodied in the presentation system 408.

The presenter module 672 can control the providing of content to one or several user devices 106 and/or supervisor devices 110. Specifically, the presenter module 672 can control the generation of one or several messages to provide content to one or several desired user devices 106 and/or supervisor devices 110. The presenter module 672 can further control the providing of these one or several messages to the desired one or several desired user devices 106 and/or supervisor devices 110. Thus, in some embodiments, the presenter module 672 can control one or several features of the communications subsystem 532 to generate and send one or several electrical signals comprising content to one or several user devices 106 and/or supervisor devices 110.

In some embodiments, the presenter module 672 can control and/or manage a portion of the presentation functions of the presentation process 670, and can specifically manage an "outer loop" of presentation functions. As used herein, the outer loop refers to tasks relating to the tracking of a user's progress through all or a portion of a group of data packets. In some embodiments, this can include the identification of one or several completed data packets or nodes and/or the non-adaptive selection of one or several next data packets or nodes according to, for example, one or several fixed rules. Such non-adaptive selection does not rely on the use of predictive models, but rather on rules identifying next data packets based on data relating to the completion of one or several previously completed data packets or assessments and/or whether one or several previously completed data packets were successfully completed.

In some embodiments, and due to the management of the outer loop of presentation functions including the non-adaptive selection of one or several next data packets, nodes, or tasks by the presenter module, the presenter module can function as a recommendation engine referred to herein as a first recommendation engine or a rules-based recommendation engine. In some embodiments, the first recommendation engine can be configured to select a next node for a user based on one or all of: the user's current location in the content network; potential next nodes; the user's history including the user's previous responses; and one or several guard conditions associated with the potential next nodes. In some embodiments, a guard condition defines one or several prerequisites for entry into, or exit from, a node.

In some embodiments, the presenter module 672 can include a portion located on the server 102 and/or a portion located on the user device 106. In some embodiments, the portion of the presenter module 672 located on the server 102 can receive data packet information and provide a subset of the received data packet information to the portion of the presenter module 672 located on the user device 106. In some embodiments, this segregation of functions and/or capabilities can prevent solution data from being located on the user device 106 and from being potentially accessible by the user of the user device 106.

In some embodiments, the portion of the presenter module 672 located on the user device 106 can be further configured to receive the subset of the data packet information from the portion of the presenter module 672 located on the server 102 and provide that subset of the data packet information to the view module 674. In some embodiments, the portion of the presenter module 672 located on the user device 106 can be further configured to receive a content request from the view module 674 and to provide that content request to the portion of the presenter module 674 located on the server 102.

The view module 674 can be a hardware or software module of some or all of the user devices 106 and/or supervisor devices 110 of the content distribution network 100. The view module 674 can receive one or several electrical signals and/or communications from the presenter module 672 and can provide the content received in those one or several electrical signals and/or communications to the user of the user device 106 and/or supervisor device 110 via, for example, the I/O subsystem 526.

In some embodiments, the view module 674 can control and/or monitor an "inner loop" of presentation functions. As used herein, the inner loop refers to tasks relating to the tracking and/or management of a user's progress through a data packet. This can specifically relate to the tracking and/or management of a user's progression through one or several pieces of content, questions, assessments, and/or the like of a data packet. In some embodiments, this can further include the selection of one or several next pieces of content, next questions, next assessments, and/or the like of the data packet for presentation and/or providing to the user of the user device 106.

In some embodiments, one or both of the presenter module 672 and the view module 674 can comprise one or several presentation engines. In some embodiments, these one or several presentation engines can comprise different capabilities and/or functions. In some embodiments, one of the presentation engines can be configured to track the progress of a user through a single data packet, task, content item, or the like, and in some embodiments, one of the presentation engines can track the progress of a user through a series of data packets, tasks, content items, or the like.

The response process 676 can comprise one or several methods and/or steps to evaluate a response. In some embodiments, this can include, for example, determining whether the response comprises a desired response and/or an undesired response. In some embodiments, the response process 676 can include one or several methods and/or steps to determine the correctness and/or incorrectness of one or several received responses. In some embodiments, this can include, for example, determining the correctness and/or incorrectness of a multiple choice response, a true/false response, a short answer response, an essay response, or the like. In some embodiments, the response processor can employ, for example, natural language processing, semantic analysis, or the like in determining the correctness or incorrectness of the received responses.

In some embodiments, the response process 676 can be performed by a response processor 678, also referred to herein as a math engine 678. The response processor 678 can be a hardware or software module of the content distribution network 100, and specifically of the server 102. In some embodiments, the response processor 678 can be embodied in the response system 406. In some embodiments, the response processor 678 can be communicatively connected to one or more of the modules of the presentation process 670 such as, for example, the presenter module 672 and/or the view module 674. In some embodiments, the response processor 678 can be communicatively connected with, for example, the message channel 412 and/or other components and/or modules of the content distribution network 100.

The summary model process 680 can comprise one or several methods and/or steps to generate and/or update one or several models. In some embodiments, this can include, for example, implementing information received either directly or indirectly from the response processor 678 to update one or several models. In some embodiments, the summary model process 680 can include the update of a model relating to one or several user attributes such as, for example, a user skill model, a user knowledge model, a learning style model, or the like. In some embodiments, the summary model process 680 can include the update of a model relating to one or several content attributes including attributes relating to a single content item and/or data packet and/or attributes relating to a plurality of content items and/or data packets. In some embodiments, these models can relate to an attribute of the one or several data packets such as, for example, difficulty, discrimination, required time, or the like.

In some embodiments, the summary model process 680 can be performed by the model engine 682. In some embodiments, the model engine 682 can be a hardware or software module of the content distribution network 100, and specifically of the server 102. In some embodiments, the model engine 682 can be embodied in the summary model system 404.

In some embodiments, the model engine 682 can be communicatively connected to one or more of the modules of the presentation process 760 such as, for example, the presenter module 672 and/or the view module 674, can be connected to the response processor 678 and/or the recommendation. In some embodiments, the model engine 682 can be communicatively connected to the message channel 412 and/or other components and/or modules of the content distribution network 100.

The packet selection process 684 can comprise one or several steps and/or methods to identify and/or select a data packet for presentation to a user. In some embodiments, this data packet can comprise a plurality of data packets. In some embodiments, this data packet can be selected according to one or several models updated as part of the summary model process 680. In some embodiments, this data packet can be selected according to one or several rules, probabilities, models, or the like. In some embodiments, the one or several data packets can be selected by the combination of a plurality of models updated in the summary model process 680 by the model engine 682. In some embodiments, these one or several data packets can be selected by a recommendation engine 686. The recommendation engine 686 can be a hardware or software module of the content distribution network 100, and specifically of the server 102. In some embodiments, the recommendation engine 686 can be embodied in the packet selection system 402. In some embodiments, the recommendation engine 686 can be communicatively connected to one or more of the modules of the presentation process 670, the response process 676, and/or the summary model process 680 either directly and/or indirectly via, for example, the message channel.

In some embodiments, and as depicted in Figure 9, a presenter module 672 can receive a data packet for presentation to a user device 106. This data packet can be received, either directly or indirectly, from a recommendation engine 686. In some embodiments, for example, the presenter module 672 can receive a data packet for providing to a user device 106 from the recommendation engine 686, and in some embodiments, the presenter module 672 can receive an identifier of a data packet for providing to a user device 106 via a view module 674. This can be received from the recommendation engine 686 via a message channel 412. Specifically, in some embodiments, the recommendation engine 686 can provide data to the message channel 412 indicating the identification and/or selection of a data packet for providing to a user via a user device 106. In some embodiments, this data indicating the identification and/or selection of the data packet can identify the data packet and/or can identify the intended recipient of the data packet.

The message channel 412 can output this received data in the form of a data stream 690 which can be received by, for example, the presenter module 672, the model engine 682, and/or the recommendation engine 686. In some embodiments, some or all of: the presenter module 672, the model engine 682, and/or the recommendation engine 686 can be configured to parse and/or filter the data stream 690 to identify data and/or events relevant to their operation. Thus, for example, the presenter module 672 can be configured to parse the data stream for information and/or events relevant to the operation of the presenter module 672.

In some embodiments, the presenter module 672 can, extract the data packet from the data stream 690 and/or extract data identifying the data packet and/or indicating the selecting of a data packet from the data stream. In the event that data identifying the data packet is extracted from the data stream 690, the presenter module 672 can request and receive the data packet from the database server 104, and specifically from the content library database 303. In embodiments in which data indicating the selection of a data packet is extracted from the data stream 690, the presenter module 672 can request and receive identification of the data packet from the recommendation engine 686 and then request and receive the data packet from the database server 104, and specifically from the content library database 303, and in some embodiments in which data indicating the selection of a data packet is extracted from the data stream 690, the presenter module 672 can request and receive the data packet from the recommendation engine 686.

The presenter module can then, provide the data packet and/or portions of the data packet to the view module 674. In some embodiments, for example, the presenter module 672 can retrieve one or several rules and/or conditions that can be, for example, associated with the data packet and/or stored in the database server 104. In some embodiments, these rules and/or conditions can identify portions of a data packet for providing to the view module 674 and/or portions of a data packet to not provide to the view module 674. In some embodiments, for example, sensitive portions of a data packet, such as, for example, solution information to any questions associated with a data packet, is not provided to the view module 674 to prevent the possibility of undesired access to those sensitive portions of the data packet. Thus, in some embodiments, the one or several rules and/or conditions can identify portions of the data packet for providing to the view module 674 and/or portions of the data packet for not providing to the view module.

**In** some embodiments, the presenter module 672 can, according to the one or more rules and/or conditions, generate and transmit an electronic message containing all or portions of the data packet to the view module 674. The view module 674 can receive these all or portions of the data packet and can provide all or portions of this information to the user of the user device 106 associated with the view module 674 via, for example, the I/O subsystem 526. In some embodiments, as part of the providing of all or portions of the data packet to the user of the view module 674, one or several user responses can be received by the view module 674. In some embodiments, these one or several user responses can be received via the I/O subsystem 526 of the user device 106.

After one or several user responses have been received, the view module 674 can provide the one or several user responses to the response processor 678. In some embodiments, these one or several responses can be directly provided to the response processor 678, and in some embodiments, these one or several responses can be provided indirectly to the response processor 678 via the message channel 412.

After the response processor 678 receives the one or several responses, the response processor 678 can determine whether the responses are desired responses and/or the degree to which the received responses are desired responses. In some embodiments, the response processor can make this determination via, for example, use of one or several techniques, including, for example, natural language processing (NLP), semantic analysis, or the like.

In some embodiments, the response processor can determine whether a response is a desired response and/or the degree to which a response is a desired response with comparative data which can be associated with the data packet. In some embodiments, this comparative data can comprise, for example, an indication of a desired response and/or an indication of one or several undesired responses, a response key, a response rubric comprising one or several criterion for determining the degree to which a response is a desired response, or the like. In some embodiments, the comparative data can be received as a portion of and/or associated with a data packet. In some embodiments, the comparative data can be received by the response processor 678 from the presenter module 672 and/or from the message channel 412. In some embodiments, the response data received from the view module 674 can comprise data identifying the user and/or the data packet or portion of the data packet with which the response is associated. In some embodiments in which the response processor 678 merely receives data identifying the data packet and/or portion of the data packet associated with the one or several responses, the response processor 678 can request and/or receive comparative data from the database server 104, and specifically from the content library database 303 of the database server 104.

After the comparative data has been received, the response processor 678 determines whether the one or several responses comprise desired responses and/or the degree to which the one or several responses comprise desired responses. The response processor can then provide the data characterizing whether the one or several responses comprises desired responses and/or the degree to which the one or several responses comprise desired responses to the message channel 412. The message channel can, as discussed above, include the output of the response processor 678 in the data stream 690 which can be constantly output by the message channel 412.

In some embodiments, the model engine 682 can subscribe to the data stream 690 of the message channel 412 and can thus receive the data stream 690 of the message channel 412 as indicated in Figure 9. The model engine 682 can monitor the data stream 690 to identify data and/or events relevant to the operation of the model engine. In some embodiments, the model engine 682 can monitor the data stream 690 to identify data and/or events relevant to the determination of whether a response is a desired response and/or the degree to which a response is a desired response.

When a relevant event and/or relevant data is identified by the model engine, the model engine 682 can take the identified relevant event and/or relevant data and modify one or several models. In some embodiments, this can include updating and/or modifying one or several models relevant to the user who provided the responses, updating and/or modifying one or several models relevant to the data packet associated with the responses, and/or the like. In some embodiments, these models can be retrieved from the database server 104, and in some embodiments, can be retrieved from the model data source 309 of the database server 104.

After the models have been updated, the updated models can be stored in the database server 104. In some embodiments, the model engine 682 can send data indicative of the event of the completion of the model update to the message channel 412. The message channel 412 can incorporate this information into the data stream 690 which can be received by the recommendation engine 686. The recommendation engine 686 can monitor the data stream 690 to identify data and/or events relevant to the operation of the recommendation engine 686. In some embodiments, the recommendation engine 686 can monitor the data stream 690 to identify data and/or events relevant to the updating of one or several models by the model engine 682.

When the recommendation engine 686 identifies information in the data stream 690 indicating the completion of the summary model process 680 for models relevant to the user providing the response and/or for models relevant to the data packet provided to the user, the recommendation engine 686 can identify and/or select a next data packet for providing to the user and/or to the presentation process 470. In some embodiments, this selection of the next data packet can be performed according to one or several rules and/or conditions. After the next data packet has been selected, the recommendation engine 686 can provide information to the model engine 682 identifying the next selected data packet and/or to the message channel 412 indicating the event of the selection of the next content item. After the message channel 412 receives information identifying the selection of the next content item and/or receives the next content item, the message channel 412 can include this information in the data stream 690 and the process discussed with respect to Figure 9 can be repeated.

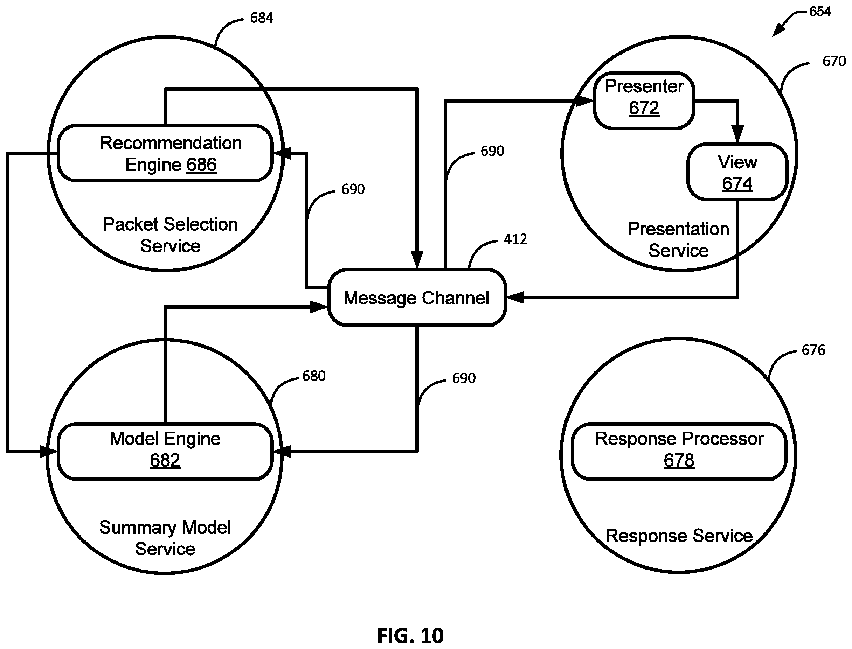

With reference now to **Figure 10****,** a schematic illustration of a second embodiment of communication or processing that can be in the platform layer 654 and/or applications layer 656 via the message channel 412 is shown. In the embodiment depicted in Figure 10, the data packet provided to the presenter module 672 and then to the view module 674 does not include a prompt for a user response and/or does not result in the receipt of a user response. As no response is received, when the data packet is completed, nothing is provided to the response processor 678, but rather data indicating the completion of the data packet is provided from one of the view module 674 and/or the presenter module 672 to the message channel 412. The data is then included in the data stream 690 and is received by the model engine 682 which uses the data to update one or several models. After the model engine 682 has updated the one or several models, the model engine 682 provides data indicating the completion of the model updates to the message channel 412. The message channel 412 then includes the data indicating the completion of the model updates in the data stream 690 and the recommendation engine 686, which can subscribe to the data stream 690, can extract the data indicating the completion of the model updates from the data stream 690. The recommendation engine 686 can then identify a next one or several data packets for providing to the presenter module 672, and the recommendation engine 686 can then, either directly or indirectly, provide the next one or several data packets to the presenter module 672.

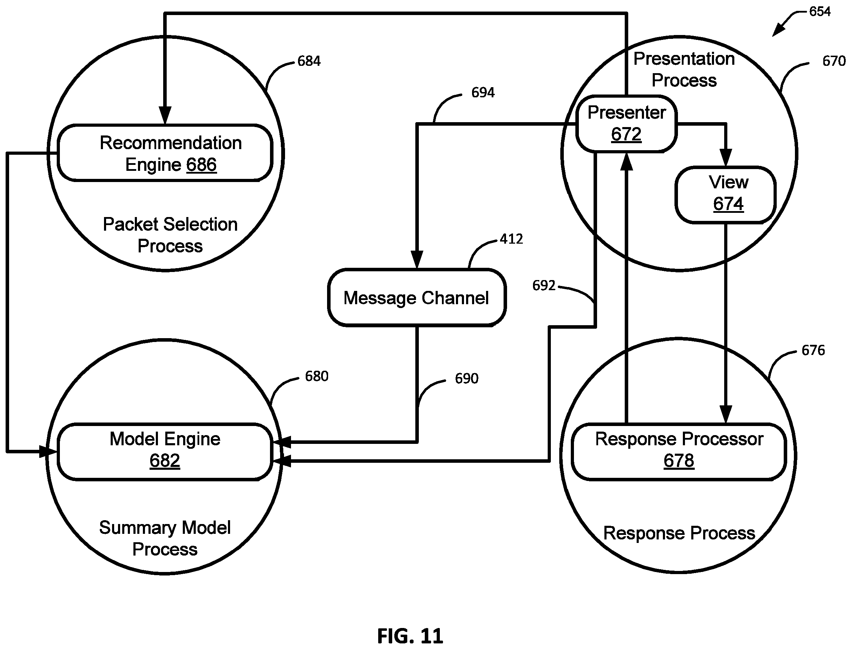

With reference now to **Figure 11****,** a schematic illustration of an embodiment of dual communication, or hybrid communication, in the platform layer 654 and/or applications layer 656 is shown. Specifically, in this embodiment, some communication is synchronous with the completion of one or several tasks and some communication is asynchronous. Thus, in the embodiment depicted in Figure 11, the presenter module 672 communicates synchronously with the model engine 682 via a direct communication 692 and communicates asynchronously with the model engine 682 via the message channel 412.

Specifically, and with reference to Figure 11, the presenter module 672 can receive and/or select a data packet for presentation to the user device 106 via the view module 674. In some embodiments, the presenter module 672 can identify all or portions of the data packet that can be provided to the view module 674 and portions of the data packet for retaining form the view module 674. In some embodiments, the presenter module can provide all or portions of the data packet to the view module 674. In some embodiments, and in response to the receipt of all or portions of the data packet, the view module 674 can provide a confirmation of receipt of the all or portions of the data packet and can provide those all or portions of the data packet to the user via the user device 106. In some embodiments, the view module 674 can provide those all or portions of the data packet to the user device 106 while controlling the inner loop of the presentation of the data packet to the user via the user device 106.

After those all or portions of the data packet have been provided to the user device 106, a response indicative of the completion of one or several tasks associated with the data packet can be received by the view module 674 from the user device 106, and specifically from the I/O subsystem 526 of the user device 106. In response to this receive, the view module 674 can provide an indication of this completion status to the presenter module 672 and/or can provide the response to the response processor 678.

After the response has been received by the response processor 678, the response processor 678 can determine whether the received response is a desired response. In some embodiments, this can include, for example, determining whether the response comprises a correct answer and/or the degree to which the response comprises a correct answer.

After the response processor has determined whether the received response is a desired response, the response processor 678 can provide an indicator of the result of the determination of whether the received response is a desired response to the presenter module 672. In response to the receipt of the indicator of whether the result of the determination of whether the received response is a desired response, the presenter module 672 can synchronously communicate with the model engine 682 via a direct communication 692 and can asynchronously communicate with model engine 682 via the message channel 412. In some embodiments, the synchronous communication can advantageously include two-way communication between the model engine 682 and the presenter module 672 such that the model engine 682 can provide an indication to the presenter module 672 when model updating is completed by the model engine.

After the model engine 682 has received one or both of the synchronous and asynchronous communications, the model engine 682 can update one or several models relating to, for example, the user, the data packet, or the like. After the model engine 682 has completed the updating of the one or several models, the model engine 682 can send a communication to the presenter module 672 indicating the completion of the updated one or several modules.

After the presenter module 672 receives the communication indicating the completion of the updating of the one or several models, the presenter module 672 can send a communication to the recommendation engine 686 requesting identification of a next data packet. As discussed above, the recommendation engine 686 can then retrieve the updated model and retrieve the user information. With the updated models and the user information, the recommendation engine can identify a next data packet for providing to the user, and can provide the data packet to the presenter module 672. In some embodiments, the recommendation engine 686 can further provide an indication of the next data packet to the model engine 682, which can use this information relating to the next data packet to update one or several models, either immediately, or after receiving a communication from the presenter module 672 subsequent to the determination of whether a received response for that data packet is a desired response.

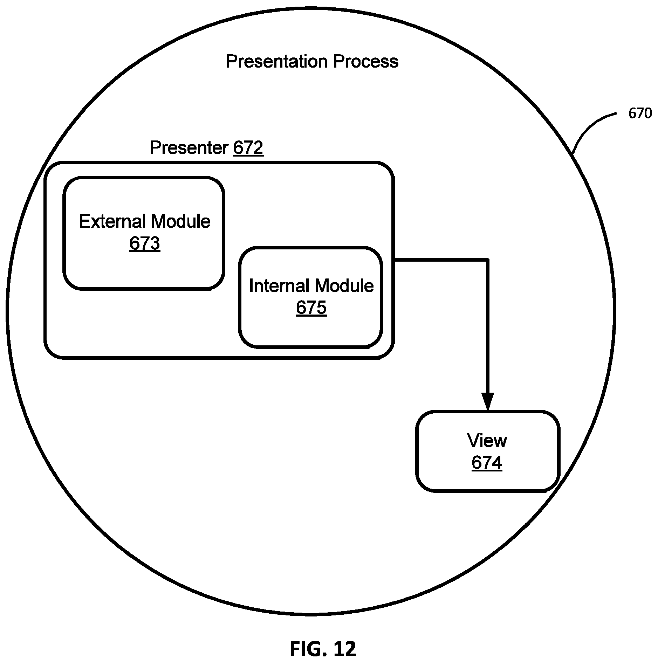

With reference now to **Figure 12****,** a schematic illustration of one embodiment of the presentation process 670 is shown. Specifically, Figure 12 depicts multiple portions of the presenter module 672, namely, the external portion 673 and the internal portion 675. In some embodiments, the external portion 673 of the presenter module 672 can be located in the server, and in some embodiments, the internal portion 675 of the presenter module 672 can be located in the user device 106. In some embodiments, the external portion 673 of the presenter module can be configured to communicate and/or exchange data with the internal portion 675 of the presenter module 672 as discussed herein. In some embodiments, for example, the external portion 673 of the presenter module 672 can receive a data packet and can parse the data packet into portions for providing to the internal portion 675 of the presenter module 672 and portions for not providing to the internal portion 675 of the presenter module 672. In some embodiments, the external portion 673 of the presenter module 672 can receive a request for additional data and/or an additional data packet from the internal portion 675 of the presenter module 672. In such an embodiment, the external portion 673 of the presenter module 672 can identify and retrieve the requested data and/or the additional data packet from, for example, the database server 104 and more specifically from the content library database 104.

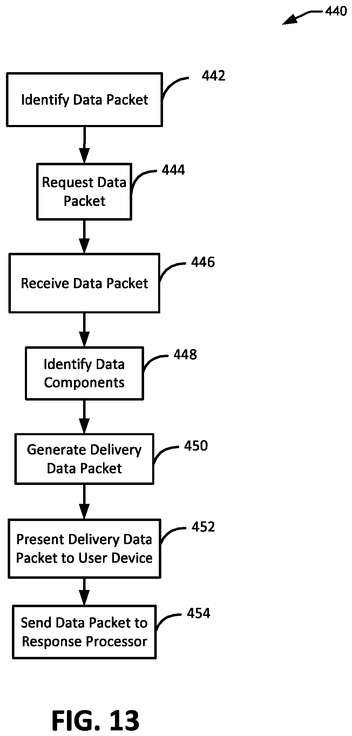

With reference now to **Figure 13****,** a flowchart illustrating one embodiment of a process 440 for data management is shown. In some embodiments, the process 440 can be performed by the content management server 102, and more specifically by the presentation system 408 and/or by the presentation module or presentation engine. In some embodiments, the process 440 can be performed as part of the presentation process 670.

The process 440 begins at block 442, wherein a data packet is identified. In some embodiments, the data packet can be a data packet for providing to a student-user. In some embodiments, the data packet can be identified based on a communication received either directly or indirectly from the recommendation engine 686.

After the data packet has been identified, the process 440 proceeds to block 444, wherein the data packet is requested. In some embodiments, this can include the requesting of information relating to the data packet such as the data forming the data packet. In some embodiments, this information can be requested from, for example, the content library database 303. After the data packet has been requested, the process 440 proceeds to block 446, wherein the data packet is received. In some embodiments, the data packet can be received by the presentation system 408 from, for example, the content library database 303.

After the data packet has been received, the process 440 proceeds to block 448, wherein one or several data components are identified. In some embodiments, for example, the data packet can include one or several data components which can, for example, contain different data. In some embodiments, one of these data components, referred to herein as a presentation component, can include content for providing to the user, which content can include one or several requests and/or questions and/or the like. In some embodiments, one of these data components, referred to herein as a response component, can include data used in evaluating one or several responses received from the user device 106 in response to the data packet, and specifically in response to the presentation component and/or the one or several requests and/or questions of the presentation component. Thus, in some embodiments, the response component of the data packet can be used to ascertain whether the user has provided a desired response or an undesired response.

After the data components have been identified, the process 440 proceeds to block 450, wherein a delivery data packet is identified. In some embodiments, the delivery data packet can include the one or several data components of the data packets for delivery to a user such as the user via the user device 106. In some embodiments, the delivery packet can include the presentation component, and in some embodiments, the delivery packet can exclude the response packet. After the delivery data packet has been generated, the process 440 proceeds to block 452, wherein the delivery data packet is provided to the user device 106 and more specifically to the view module 674. In some embodiments, this can include providing the delivery data packet to the user device 106 via, for example, the communication network 120.

After the delivery data packet has been provided to the user device 106, the process 440 proceeds to block 454, wherein the data packet and/or one or several components thereof is sent to and/or provided to the response processor 678. In some embodiments, this sending of the data packet and/or one or several components thereof to the response processor can include receiving a response from the user, and sending the response to the user to the response processor simultaneous with the sending of the data packet and/or one or several components thereof to the response processor. In some embodiments, for example, this can include providing the response component to the response processor. In some embodiments, the response component can be provided to the response processor from the presentation system 408.

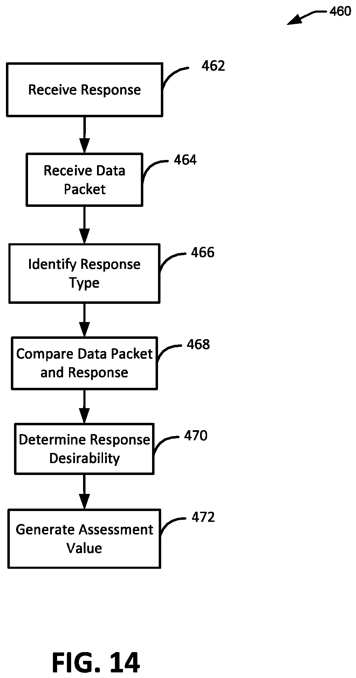

With reference now to **Figure 14****,** a flowchart illustrating one embodiment of a process 460 for evaluating a response is shown. In some embodiments, the process can be performed as a part of the response process 676 and can be performed by, for example, the response system 406 and/or by the response processor 678. In some embodiments, the process 460 can be performed by the response system 406 in response to the receipt of a response, either directly or indirectly, from the user device 106 or from the view module 674.

The process 460 begins at block 462, wherein a response is received from, for example, the user device 106 via, for example, the communication network 120. After the response has been received, the process 460 proceeds to block 464, wherein the data packet associated with the response is received. In some embodiments, this can include receiving all or one or several components of the data packet such as, for example, the response component of the data packet. In some embodiments, the data packet can be received by the response processor from the presentation engine.

After the data packet has been received, the process 460 proceeds to block 466, wherein the response type is identified. In some embodiments, this identification can be performed based on data, such as metadata associated with the response. In other embodiments, this identification can be performed based on data packet information such as the response component.

In some embodiments, the response type can identify one or several attributes of the one or several requests and/or questions of the data packet such as, for example, the request and/or question type. In some embodiments, this can include identifying some or all of the one or several requests and/or questions as true/false, multiple choice, short answer, essay, or the like.

After the response type has been identified, the process 460 proceeds to block 468, wherein the data packet and the response are compared to determine whether the response comprises a desired response and/or an undesired response. In some embodiments, this can include comparing the received response and the data packet to determine if the received response matches all or portions of the response component of the data packet, to determine the degree to which the received response matches all or portions of the response component, to determine the degree to which the received response embodies one or several qualities identified in the response component of the data packet, or the like. In some embodiments, this can include classifying the response according to one or several rules. In some embodiments, these rules can be used to classify the response as either desired or undesired. In some embodiments, these rules can be used to identify one or several errors and/or misconceptions evidenced in the response. In some embodiments, this can include, for example: use of natural language processing software and/or algorithms; use of one or several digital thesauruses; use of lemmatization software, dictionaries, and/or algorithms; or the like.

After the data packet and the response have been compared, the process 460 proceeds to block 470 wherein response desirability is determined. In some embodiments this can include, based on the result of the comparison of the data packet and the response, whether the response is a desired response or is an undesired response. In some embodiments, this can further include quantifying the degree to which the response is a desired response. This determination can include, for example, determining if the response is a correct response, an incorrect response, a partially correct response, or the like. In some embodiments, the determination of response desirability can include the generation of a value characterizing the response desirability and the storing of this value in one of the databases 104 such as, for example, the user profile database 301. After the response desirability has been determined, the process 460 proceeds to block 472, wherein an assessment value is generated. In some embodiments, the assessment value can be an aggregate value characterizing response desirability for one or more of a plurality of responses. This assessment value can be stored in one of the databases 104 such as the user profile database 301.

In some embodiments, content provisioning performed in accordance with the processes of Figures 11 through 14 can provide significant benefits over current content provisioning with a computer, especially over current content provisioning with a computer in an educational environment. In some embodiments, content provisioning as described in Figures 11 through 14 can be based on real-time and dynamic prioritization that can be based on models of one or several user attributes such as user skill level, models of one or several task attributes, such as task difficulty levels, or the like. This provides the significant benefit of accurately selecting content most suited for delivery which increases the efficiency with which content is provided to the user.

Embodiments of the present disclosure relate to systems and methods for improving content creation, content curation, input receipt, and adaptivity. Historically, education has been accomplished via direct or indirect interactions between students and one or several teachers. While this educational model can be successful, problems arise when the number of students increases with respect to the number of teachers, when students struggle to master content, and/or when a teacher must select content for providing to one or several students.

The integration of computers into the educational space has promised to solve these problems and improve learning and educational outcomes. However, the reality has fallen short of the hoped improvements. For example, while a recommendation engine may be able to select and recommend content for providing to a student legacy content that predates, in many instances, the current digital educational space is unavailable for presentation and is unknown to recommendation engines. Further, because of the volume of this legacy content, the bringing of this legacy content into advance educational systems is prohibitively expensive.

In other instances, what content may be provided to a student, receipt of responses from the student is limited in many ways. For example, while a student may interact with the user interface to input one or several numbers, letters, characters, such interfaces do not easily lend themselves for lengthy solution activity as may be required for evaluation of a math problem, or a math-based related problem. Further, while scoring engines may be able to evaluate a response to a problem, scoring engines have been unable to or have struggled in evaluating steps to solving a problem. Accordingly, improvements to recommendation engines, content curation engines, scoring engines, and/or other components or modules of a learning system are desired.

The present disclosure includes solutions to these problems. For instance, the present disclosure relates to systems and methods for content curation and/or content creation. These systems and methods can be used to bring legacy content into the digital world by, for example, identifying traits or attributes of the legacy content, grouping portions of the legacy content, identifying learning objectives of the legacy content, or the like. Some embodiments of the present disclosure further relate to the training of one or several models for content creation and/or content curation. These embodiments, can include systems and methods whereby training of a machine learning model can be automated to thereby allow closed-loop unsupervised training. Additionally, some embodiments of the present disclosure relate to systems and/or methods of content creation, according to one or several received inputs and/or systems and/or methods of content customization according to attributes extracted from one or several user profiles.

The present disclosure relates to systems and methods for receiving user input at an educational system, such as the content distribution network 100. These systems enable, for example, identification of one or several steps taken to solve a problem can be presented to the user in the form of a content item. In some embodiments, the end point can be received via, for example, handwriting on a touchscreen, equation editor, OCR, voice, eye movement, handwriting, brainwave interpretation, brain coupling, scanning, a biological response, and/or photo. In some embodiments, this can include parsing of a received digital response to identify one or several steps in solving a problem.

The present disclosure relates to scoring, adaptivity, and/or content recommendation. This can include the identification of one or several steps in response, the evaluation of these one or several steps in response, providing remediation based on the evaluation of these one or several steps, and/or providing next content based on the evaluation of these one or several steps. This can further include the generation of one or several profiles tracking and/or predicting a user's movement through a learning graph, such as a domain graph.

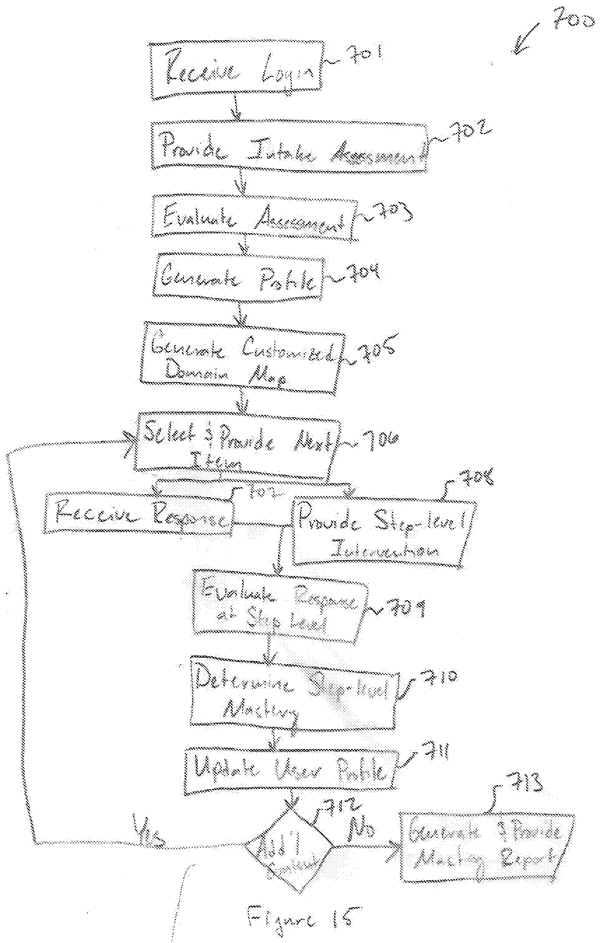

With reference now to **Figure 15****,** a flowchart illustrating one embodiment of a process 700 for automated content delivery is shown. The process 700 can be performed by all or portions of the content distribution network 100 including, for example, the user device 106, the supervisor device 110, and/or the server 102. The process 700 begins at block 701, wherein login information is received. In some embodiments, the login information can include information such as, for example, a username, password, a user identifier, biometric information characterizing user such as a photo, thumbprint, a retina scan, an Iris scan, or the like. In some embodiments, and in connection with receipt of the login information, a user can be identified in the user profile, including metadata relevant to the identified user can be retrieved from the user profile database 301. In some embodiments, this metadata can identify, for example, one or several user skill levels, learning styles, learning preferences, mastery levels, mastered attributes and/or concepts, or the like.

After the login information has been received, the process 700 can proceed to block 702, wherein an intake assessment is provided. In some embodiments, the intake assessment can comprise one or several content items, some or all of which can comprise one or several questions, they can be provided to the student. In some embodiments, these one or several content items and/or questions can be selected to facilitate identifying the current student skill level, and/or current student mastery levels of one or several attributes and/or of one or several concepts. In some embodiments, the providing of the intake assessment can include identifying one or several questions for providing to the student from the content library database 303, and providing those selected one or several questions to the student via, for example, the I/O subsystem 526 of the user device 106.

After the intake assessment has been provided, the process 700 proceeds block 703, wherein one or several responses to questions provided as part of the intake assessment are received and/or evaluated. In some embodiments, these responses and/or the intake assessment can be evaluated by the response processor 678. In some embodiments, the response processor 678 can evaluate responses according to methods disclosed in us application, and specifically according to, for example, stepwise inputs provided by the user in response to the questions of the assessment.

After the assessment has been evaluated, the process 700 proceeds to block 704 wherein the user profile for the student is generated and/or wherein the students user profile is updated based on the results of the evaluation performed in block 703. In some embodiments, this can include identifying one or several student skill levels, mastery levels, or the like. In some embodiments, the user profile can be generated and/or updated by the response processor 678, and/or the model engine 682.

A block 705, customized domain map, also referred to herein as a domain graph or learning graph is generated. In some embodiments, the generation of the customized domain graph can include retrieval of the domain graph from the database server 104 and specifically from the content library database 303. Based on the user profile generated in block 704, the domain graph can be customized for the student. This can include customization of connections between nodes of the domain graph.

After the domain graph has been customized, the process 700 proceeds to block 706, wherein a next item is selected and provided to the student. In some embodiments, the next item, which can include one or several questions, can be selected according to one or several skill levels of the student and/or to one or several difficulty levels of potential pieces of next item. In some embodiments, the next item can be selected by the recommendation engine 686 and can be provided to the user via the presentation process 670.

After the next item has been selected and provided, the process 700 can proceed to blocks 707 and 708. In some embodiments, blocks 707 and 708 can be performed simultaneously. In some embodiments, blocks 707 and 708 can be performed serially. At block 707 responses received from the student to the content provided in block 706 and a block 708, one or several interventions relevant to steps in the response is provided. In some embodiments, for example, the response can be received from the student and can be provided to the response processor 678. As used herein, an intervention can refer to any assistance provided to a student-user to facilitate the student user in providing a correct response to an item such as a question and/or non-evaluational content provided to the student-user to assist the student-user in mastering one or several skills or learning objectives. An intervention can include a hint, an explanation or demonstration of solving one or several problems or questions, a video or audio clip such as a video or audio clip of a worked example or of instruction, an autogenerated worked example such as via the math engine, one or several images and/or pictures, text, or the like. The response that is received, can comprise all or portions of the response including, for example, one or several steps, forming part of the response. The response processor 678 can, as all or portions of the response received, identify steps within the response, evaluate steps of the responses indicated in block 709, and provide feedback, and/or intervention or remediation based on the evaluation of the steps in the response. In some embodiments, this intervention and/or remediation can comprise one or several questions, hints, tips, demonstrations, examples, video clips, video files, audio files, text files, image files, or the like.

At block 710, a mastery level for the response is determined, and in some embodiments, a step level mastery for the response is determined. In some embodiments, for example, mastery for a response can be determined at multiple levels. In some embodiments, for example, mastery can be determined at a response level, and specifically can be determined based on the correctness and/or incorrectness of an answer in the response. In some embodiments, mastery can be determined at the step level. In such an embodiment, steps within the response can be identified and evaluated to determine the correctness of each of the steps within the response. In such an embodiment, each step within the response can be associated with one or several attributes or skills.

Based on the correctness or incorrectness of each step in the received response, the user's metadata can be updated for some or all of the attributes associated with steps in the response. In some embodiments, mastery can be determined for some or all of the attributes associated with the steps of the received response. In some embodiments, mastery can be determined based on attributes of the item provided to the user, and specifically based on one or several steps for solving the item provided to the user. In some embodiments, mastery can be determined based on a combination of attributes of the steps of the received response and/or attributes of the item provided to the user. Due to the multiple levels of mastery, in some embodiments, a user may provide an incorrect answer to a item, but may master one or several attributes associated with one or several steps of the response. In some embodiments, a user's response may both lead to a determination of mastery of one or several attributes and a need for remediation of one or several attributes.

This determination of the mastery level can be performed by the response processor 678 and can include identifying one or several attributes tied to one or several of the steps included in the response, the evaluation of the one or several steps included in the response, and determining a mastery probability for attributes tied to one or several steps included in the response. In some embodiments, for example, the mastery probability for attributes can be affected based on one or several steps provided as part of the response. In some embodiments, for example, mastery probability of attributes associated with the step of a response can vary based on whether this step is identified as correct, incorrect, or as including a hint or similar intervention.

After the step level, mastery has been determined, the process 700 proceeds to block 711, wherein the user profile is updated. In some embodiments, for example, the user profile can be updated to reflect mastery of attributes determined in block 710. The update of the user profile can include an updating of the user profile database 300. One of the database server 104. After the user profile has been updated, the process 700 proceeds to decision state 712 wherein it is determined if there is additional content for providing to the student. If it is determined there is additional content, then the process 700 returns to block 706 and proceeds as outlined above. Alternatively, if it is determined that there is no additional content, then the process 700 proceeds to block 713, wherein a mastery report is generated and/or provided. In some embodiments, the mastery report can comprise an alert that can be generated and sent to the student device 106, and/or to a supervisor device 110. This mastery report can, in some embodiments, comprise one or several instructions or code that can cause a recipient device to display a portion of the mastery report upon receipt. In some embodiments, this can include a display of a list of attributes in the mastery level for some or all of the attributes and a list, a display of a portion of the domain graph having nodes corresponding to attributes and edges linking the nodes in hierarchical relationships. In such an embodiment, nodes can include a graphical indicator of mastery of the associated attributes such as, for example, a color coding.

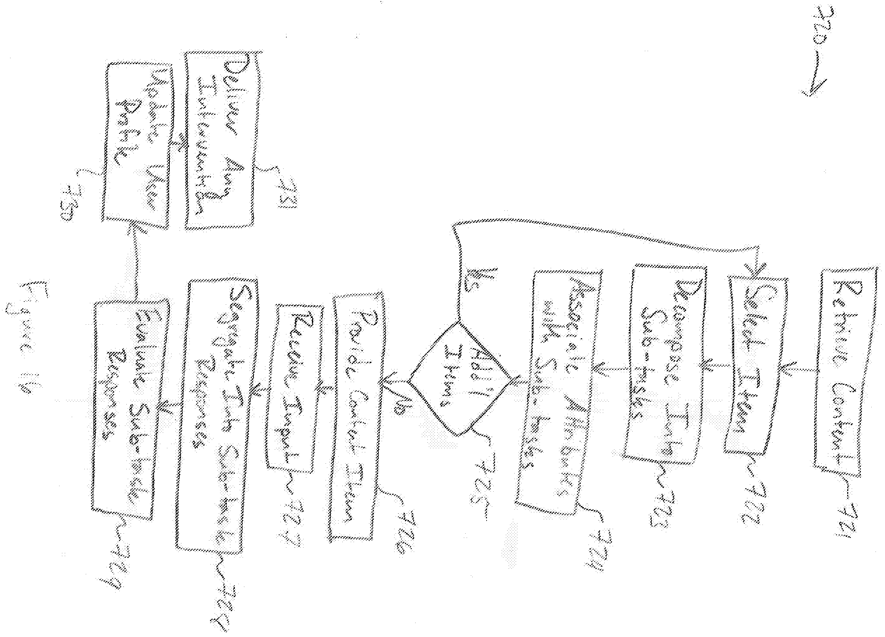

With reference now to **Figure 16****,** a flowchart illustrating one embodiment of a process 724 step-based next content presentation is shown. In some embodiments, the process 720 can be performed by all or portions of the content distribution network 100 including, for example, the processor 102. The process 720 begins a block 721, wherein content is retrieved. In some embodiments, this content can be retrieved from the database server 104 and specifically from the content library database 303. The content can comprise one or several questions. After the content has been retrieved, the process 720 proceeds to block 722 wherein an item, and/or a question from the content and/or questions retrieved in block 721 is selected. In some embodiments, the selection can be made by the processor 102 and can be made according to a correspondence between one or several attributes of the user such as, for example, user mastery of one or several attributes in the domain graph, edges linking attributes. In the domain graph, and/or one or several difficulty levels of one or several pieces of content.

In block 723, item selected in block 722 can be decomposed into one or several subtasks, also referred to herein as one or several steps. In some embodiments, these steps can be incremental movements towards a solution of the item, and in math related questions can correspond to one or several operations performed on the content of the item. In some embodiments, the item can be decomposed into one or several steps by, for example, a solver algorithm, also referred to herein as a mathematical solver and/or a solver software, which algorithm and/or software can be executed by the server 102.

In block 724, one or several attributes are associated with the item and/or associated with the steps of the item. In some embodiments, these attributes can characterize, for example, aspects of the content item and/or of the step of the content item. These can include, for example, attributes of numbers of the item such as, for example: even; odd; prime; etc. In some embodiments, the attributes can characterize one or several operations of the item such as, for example: addition; subtraction; multiplication; division; etc. In some embodiments, the attributes can characterize the operation performed to achieve the step, and/or the operations to be performed to solve the problem from the step. These attributes can be stored in the database server 104, and specifically in the content library database 303.

After the attributes have been stored, the process 720 proceeds to decision state 725, wherein it is determined if there are any addition items to analyze. It is determined that there are additional items, and the process 720 returns to block 722 and continues as outlined above. If it is determined there are no additional items, then the process 720 proceeds to block 726 wherein one or several content items are provided to a student via, for example, the user device 106. After the one or several items are provided to the student, the process 720 proceeds to block 727, wherein one or several responses to the provided one or several items are received.

After one or several responses to the provided one or several items are received, the process 720 can proceed to block 728 wherein some or all of the responses are each parsed into one or several steps, and/or subtasks. In some embodiments, the dividing of the responses into one or several steps can be performed by the server 102. After the responses have been segregated into one or several steps, and/or subtasks, the process 720 proceeds to block 729, wherein these one or several steps, and/or subtasks are evaluated. This evaluation can be performed by the response processor 678. In some embodiments, this evaluation can include identifying each response, and/or each step in the response as, or being completed with assistance of a hint or other intervention.

After the steps and/or subtasks have been evaluated, the process 720 proceeds to block 730, wherein the user profile for the student source of the response is updated. In some embodiments, the user profile can be updated to indicate mastery and/or mastery levels of attributes of the item which of change based on the responses received in block 727 and the evaluation of those responses. After the user profile has been updated, the process 720 proceeds to block 731, wherein any intervention, and/or remediation is selected and/or delivered. In some embodiments, for example, intervention, and/or remediation can be selected and/or delivered. When student mastery drops below a predetermined threshold and/or when the amount of time to achieve mastery exceeds a predetermined level. In some embodiments, the intervention can be sent in the form of one or several alerts to the user device 106 and/or to the supervisor device 110.

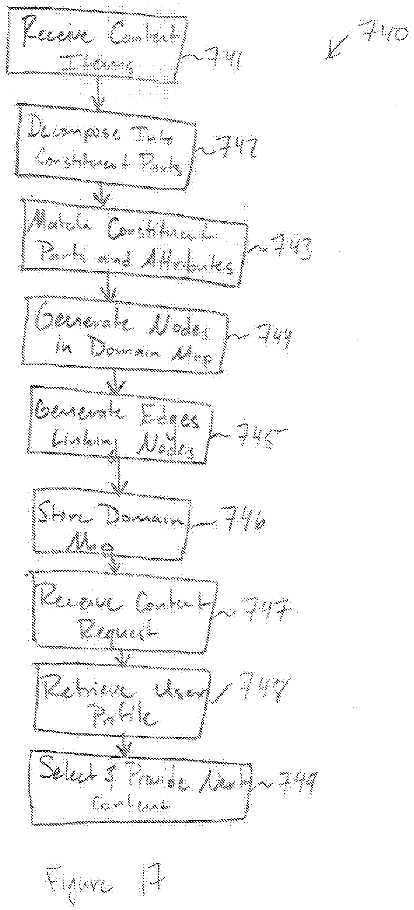

With reference now to **Figure 17****,** a flowchart illustrating one embodiment of a process 740 for automated curation and/or generation of content is shown. The process 740 can be performed by all or portions of the content distribution network 100 including the server 102. The process 740 begins at block 741, wherein one or several content items are received and/or retrieved. In some embodiments, one or several content items can be received and/or retrieved from the database server 104 and specifically from the content library database. The one or several content items can comprise, for example, one or several questions, which one or several questions can be, in some embodiments relating to mathematics and/or a math-type or math-based subject, such as, for example, algebra, calculus, don't mental math, physics, chemistry, statistics, statics, dynamics, machine design, fluid dynamics, heat transfer, circuits, or the like.

After the content items have been received and/or retrieved, the process 740 proceeds to block 742, wherein the content items, are decomposed into one or several constituent parts. In some embodiments, these constituent parts can comprise one or several steps to solving the question the content item, and the decomposition of the items can include the identification of the one or several steps for solving each of the retrieved content items. In some embodiments, for example, block 742 can include selecting one of the content items and decomposing the selected one of the content items into one or several steps for solving the question on that content item. The decomposition can be performed by sulfur operating on the server 102.

After the decomposition of the content items, the process 740 proceeds to block 743, wherein the constituent parts of content items are matched with one or several attributes. In some embodiments, these attributes can characterize, for example, aspects of the content item and/or of the step of the content item. These can include, for example, attributes of numbers of the item such as, for example: even; odd; prime; etc. In some embodiments, the attributes can characterize one or several operations of the item such as, for example: addition; subtraction; multiplication; division; etc. In some embodiments, the attributes can characterize the operation performed to achieve the step, and/or the operations to be performed to solve the problem from the step. These attributes can be stored in the database server 104, and specifically in the content library database 303.

After the constituent parts. In the attributes of the match, the process 740 proceeds to block 744 wherein nodes are generated. In some embodiments, each of the nodes can correspond to a least one of the attributes matched to constituent parts of a decomposed, content item. These notes can be part of a domain map in the nodes and/or the domain map can be stored in the database server 104, and specifically within the content library database 303. After the nodes have been generated, the process 740 proceeds to block 745, wherein edges linking the nodes are generated. In some embodiments, these edges can link the nodes in hierarchical relationships, and specifically, a single edge, can link a pair of nodes in a hierarchical relationship. In some embodiments, the edges can be generated so as to create a directed graph, which directed graph can be cyclic or acyclic. After the edges of been generated, the process 740 proceeds to block 746, wherein the domain map is stored. In some embodiments, the domain map can be stored in the database server 104 and specifically can be stored within the content library database 303.

After the domain map has been stored, the process 740 proceeds to block 747, wherein a content request is received. In some embodiments, the content request can be received by the server 102 from one of the user devices 106. The content request can identify, in some embodiments, a request for next content and/or information relating to the request next content, such as, for example, one or several attributes of the requested next content. After the content request has been received, the process 740 proceeds to block 748, wherein the user profile is retrieved. In some embodiments, the user profile can be retrieved for the user who requested content in block 747. The user profile can be retrieved from the database server 104 and specifically from the user profile database 301.

After the user profile has been received and/or retrieved, the process 740 can proceed to block 749, wherein next content is selected and/or provided. In some embodiments, the next content can be selected and/or provided based on one or several attributes, such as one or several difficulty levels, of potential next content and one or several attributes, such as a user skill level, of the user requesting the next content. The next content can be selected by the recommendation engine 686, and can be provided to the student via the user device 106.

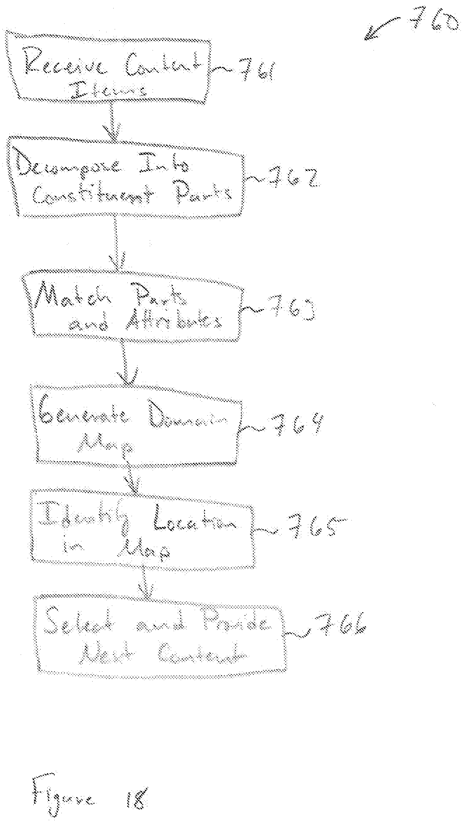

With reference now to **Figure 18****,** a flowchart illustrating one embodiment of a process 760 for content-based automated content provisioning is shown. The process 760 can be performed by all or portions of the content distribution network 100 including, for example, the server 102. The process begins at block 761, wherein one or several content items are received and/or retrieved. In some embodiments, one or several content items can be received and/or retrieved from the database server 104 and specifically from the content library database. The one or several content items can comprise, for example, one or several questions, which one or several questions can be, in some embodiments relating to mathematics and/or a math-type or math-based subject, such as, for example, algebra, calculus, don't mental math, physics, chemistry, statistics, statics, dynamics, machine design, fluid dynamics, heat transfer, circuits, or the like.

After the content items have been received and/or retrieved, the process 760 proceeds to block 762, wherein the content items are decomposed into one or several constituent parts. In some embodiments, these constituent parts can comprise one or several steps to solving the question the content item, and the decomposition of the items can include the identification of the one or several steps for solving each of the retrieved content items. In some embodiments, for example, block 762 can include selecting one of the content items and decomposing the selected one of the content items into one or several steps for solving the question on that content item. The decomposition can be performed by sulfur operating on the server 102.

After the decomposition of the content items, the process 740 proceeds to block 763, wherein the constituent parts of content items are matched with one or several attributes. In some embodiments, these attributes can characterize, for example, aspects of the content item and/or of the step of the content item. These can include, for example, attributes of numbers of the item such as, for example: even; odd; prime; etc. In some embodiments, the attributes can characterize one or several operations of the item such as, for example: addition; subtraction; multiplication; division; etc. In some embodiments, the attributes can characterize the operation performed to achieve the step, and/or the operations to be performed to solve the problem from the step. These attributes can be stored in the database server 104, and specifically in the content library database 303.

After the matching of constituent parts. In attributes, the process 760 proceeds to block 764 wherein domain graph is generated. In some embodiments, the domain graph can be generated by the creation of nodes which nodes can be connected to one or several attributes of one or several items. In some embodiments, these nodes can be connected by edges, which nodes and edges form a directed graph, which can be, for example, a directed acyclic graph or a directed cyclic graph. After the domain map has been generated, the process 760 proceeds to block 765, wherein a location of a student within the graph is identified. In some embodiments, this location can be determined based on user profile information that can be retrieved from the user profile database 301 of the database server 104. After the sins location. The domain map is determined, the process 760 proceeds to block 766, wherein next content is selected and provided to the student. In some embodiments, this next content can be selected by the recommendation engine 686 and can be provided to the student as a part of the presentation process 670.

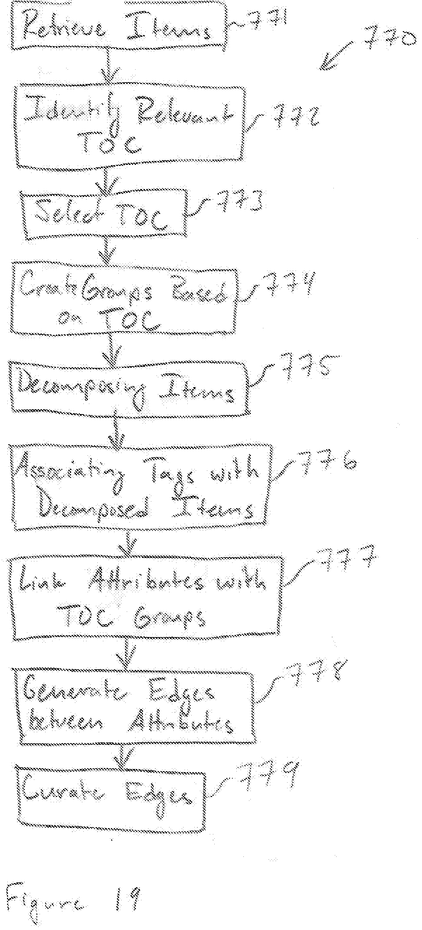

With reference now to **Figure 19****,** a flowchart illustrating one embodiment of the process 770, for automated contents-based content curation and/or creation is shown. The process 770 can be performed by all or portions of the content distribution network 100 including, for example, the server 102. The process 770 begins a block 771, wherein one or several items are received and/or retrieved. In some embodiments, the items can be received and/or received from the database server 104 and specifically from the content library database 303.

After one or several items are received and/or retrieved, the process 770 proceeds to block 772 wherein a relevant table of contents is identified. In some embodiments, the relevant table of contents can be identified based on one or several inputs received from a user via, for example, the user device 106, and/or the supervisor device 110. In some embodiments, the relevant table of contents can be identified based on analysis of the one or several retrieved items. In comparison of contents of the one or several retrieved items to one or several table of contents. In some embodiments, the table of contents most closely matching the one or several retrieved items can be identified as the relevant table of contents. The relevant table of contents can be identified by the server 102. After the relevant table of contents is been identified, the process 770 proceeds to block 773, wherein the relevant table of contents is selected.

After the table of contents is been selected, the process 770 proceeds to block 774 wherein groups are created based on the table of contents. In some embodiments, these groups can correspond to the visions of content identified in the table of contents, such as, for example, content divisions indicated by sections, chapters, subsections, or the like. In the table of contents. These groups can be created by the server 102.

After groups been created based on the table of contents, the process 770 proceeds to block 775, wherein the one or several of the items received and/or retrieved in block 701 are decomposed. In some embodiments, the decomposing of the items can include the identifying of one or several steps, or tasks for solving the one or several items. The decomposing of items can be performed by a solver executed by the server 102.

After the items of been decomposed, the process 770 proceeds to block 776 wherein one or several tags associated with the decomposed items. In some embodiments, each of the tags can identify an attribute, and can be used to link the item and/or one or several steps of the item to an attribute. In some embodiments, the tag can be applied to the items of and/or to the steps of the items by the server 102.

After the tags have been associated with the decomposed item, the process 770 proceeds to block 777, wherein attributes associated with the tags are linked to table of contents groups created in block 774. In some embodiments, for example, this can include linking an item, and/or portion of an item with multiple groups specified by the table of contents. In some embodiments, attributes and/or tags identifying attributes can be linked with table of contents groups by the server 102.

After wherein one or several edges linking attributes are generated. In some embodiments, these edges can each join a pair of attributes and can indicate a hierarchical relationship between those two attributes. After edges of been generated between the attributes, the process 770 proceeds block 779, wherein the edges generated in block 778 are curated. In some embodiments, the cure a shared of the edges can include the removal of one or several redundant edges. In some embodiments, and as a part of the step of block 779, the created domain graph can be stored in the content library database 303 or in another portion of the database server 104.

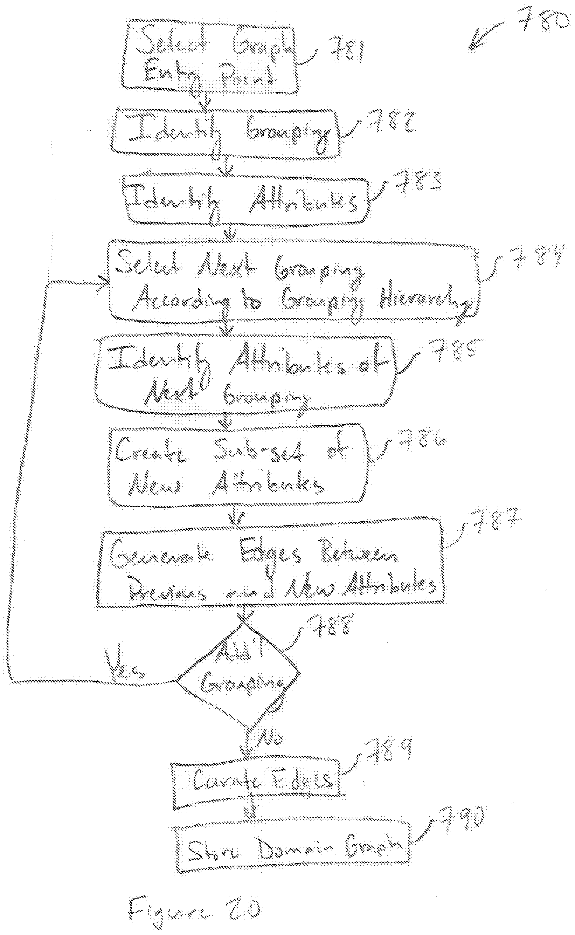

With reference now to **Figure 20****,** a flowchart illustrating one embodiment of a process 780 for generating edges within a domain graph is shown. The process 780 can be performed as a part of or in the place of the step of block 778 of Figure 19. The process 780 can be performed by all or portions the content distribution network 100 including, for example, the server 102. The process 780 begins a block 781, wherein a domain graph entry point is identified and/or selected. In some embodiments, the graph entry point can comprise a parent node to all or portions of the domain graph. In some embodiments, domain graph can comprise a single entry point or a plurality of entry points. The entry point can be identified and/or selected by the server 102.

After the domain graph entry point has been identified and/or selected, the process 780 proceeds to block 782, wherein a grouping is identified. In some embodiments, a grouping can comprise one of the groups generated based on the table of contents. And block 774 of Figure 19. The grouper grouping can be identified by the server 102. After the group has been identified, the process 780 proceeds to block 783, wherein one or several attributes of that group identified. In some embodiments, these attributes can be attributes associated with the table of contents, group, and block 777 of Figure 19. These attributes can be identified by the server 102.

At block 784, a next grouping is selected. In some embodiments, the next grouping can be selected according to a hierarchy of groupings indicated by the domain graph, such that the group identified and/or selected in block 782, is a parent group to the next group selected in block 784. In some embodiments, the hierarchy of groups can be indicated by directionality of edges connecting groups within the domain graph.

After the next group has been selected, the process 780 proceeds to block 785, wherein attributes of that next group are selected. As discussed above, these attributes can be attributes associated with the next group, a block 777 of Figure 19. After attributes of the next grouping been identified, the process 780 proceeds to block 786 wherein a subset of attributes is identified, which subset corresponds attributes that identified for the first time in the next grouping selected in block 784. In some embodiments, this subset can be determined by comparing attributes of the next group identified in block 784 to the attributes of parent groups. Attributes associated with the next group identified in block 784 and that are not associated with parent groups are identified as belonging to this subset of new attributes.

At block 787, edges between previous and new attributes are generated, which edges identify previous attributes as parents to the new attributes. These edges can be generated by the server 102. After edges of been generated between previous and new attributes, the process 780 proceeds to decision state 788, wherein it is determined if there are any additional unanalyzed groups connected to the entry point selected in block 781. If there are additional unanalyzed groups, then the process 780 returns to block 784 and proceeds as outlined above. If there are no additional groups, then, in some embodiments, the process can determine whether there is one or several additional unanalyzed entry points to the domain graph. If there are one or several unanalyzed entry points, the process 780 can return to block 781, and proceed as outlined above. In some embodiments, if it is determined that there are no additional groupings or if it is determined there no additional groupings and/or there are no additional entry point in the domain graph, then the process 780 proceeds to block 789, wherein the edges are curated. In some embodiments, the duration of the edges can include the deletion of redundant edges. As used herein, a redundant edge is an edge that directly connects two attributes in a hierarchical relationship without any, which to attributes are also connected in a hierarchical relationship via a plurality of edges, and a least one intermediate attribute. In some embodiments, for example, any redundant edge that is identified in the domain graph can be deleted. After the edges of been curated, the process 780 proceeds to block 790, wherein the domain graph is stored.

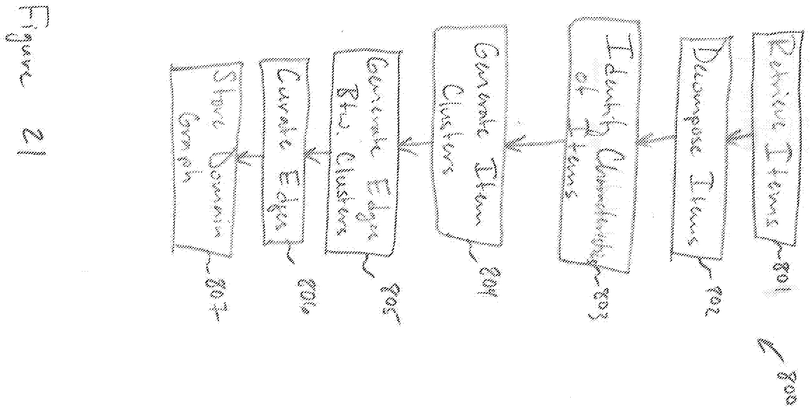

With reference now to **Figure 21****,** a flowchart illustrating one embodiment of a process 800 for automated generation of a cluster-based domain model is shown. The process 800 can enable automated curation of content in the automated formation of a domain graph. The process 800 can be performed by all or portions of the content distribution network, including, for example, the server 102. The process 800 begins a block 801, wherein one or several items are received and/or retrieved. In some embodiments, the items can be received and/or received from the database server 104 and specifically from the content library database 303.

After the item is a been retrieved, the process 800 proceeds to block 802 wherein the one or several of the items received and/or retrieved in block 801 one are decomposed. In some embodiments, the decomposing of the items can include the identifying of one or several steps, or tasks for solving the one or several items. The decomposing of items can be performed by a solver executed by the server 102. After the items of an decomposed, the process 800 proceeds to block 803, wherein characteristics of the decomposed items identified. In some embodiments, these characteristics can be identified via one or several tags associated with the items, the metadata associated with the items, the one or several tree structures of the items, or the like. In some embodiments, the identifying of these one or several attributes or characteristics can include analysis of the items to determine these one or several characteristics and/or attributes.

After the characteristics of the items of an identified, the process 800 proceeds to block 804 wherein one or several item clusters are generated. In some embodiments, the item clusters can be generated based on similarity between attributes of one or several of the items received and/or retrieved in block 701. In some embodiments, the generation of the item clusters can further include the storing of information identifying the item clusters in, for example, the database server 104 and specifically in the content library database 303. The item clusters can be generated by the server 102.

After the item clusters of been generated, the process 800 proceeds to block 805, wherein edges are generated between the clusters. In some embodiments, each of these edges can indicate a direction that identifies a prerequisite relationship, and/or a hierarchical relationship between a pair of clusters linked by that edge. In some embodiments, these edges can each comprise a vector having a direction indicative of the hierarchical relationship, and a magnitude indicative of, for example, a degree of relatedness between the clusters linked by the edge. The edges can be generated by the server 102. After the edges of been generated, the process 800 proceeds to block 806 wherein the generated edges are curated. In some embodiments, this curation can include the identification of one or several redundant edges and/or the removal of the same. After the edge seven curated, the process 800 proceeds to block 807, wherein domain graph formed of the clusters linked by the edges is stored. In some embodiments, the domain graph can be stored in the database server 104 and specifically can be stored in the content library database 303.

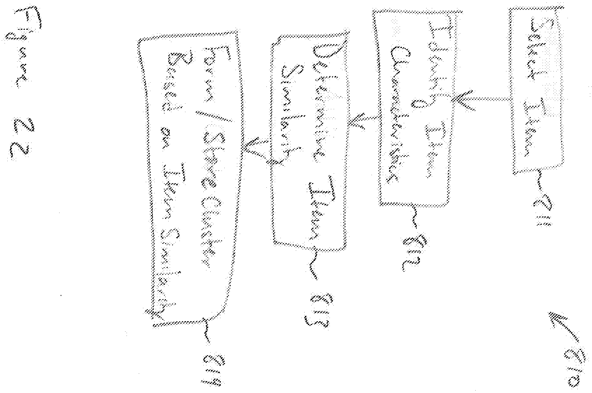

With reference now to **Figure 22****,** a flowchart illustrating one embodiment of a process 810 for generating an item clusters shown. The process 810 can be performed as a part of, or in the place of the step of block 800 for of Figure 21. The process 810 can be performed by the server 102. The process 810 begins a block 811, wherein an item is selected. In some embodiments, the selected item can be one of the items decomposed in block 802 of Figure 21. The item that is selected can, in some embodiments, be a previously unanalyzed item, and specifically can be at an item for which steps 811 through 814 have not been previously performed.

After the item has been selected, the process 810 proceeds to block 812 wherein one or several characteristics, and/or attributes of the item identified. In some embodiments, this can include the inputting of the item into a solver, and algebraic calculator, or the like. These characteristics can include aspects of the item and/or of a step of the content item. These can include, for example, attributes of numbers of the item such as, for example: even; odd; prime; etc. In some embodiments, the attributes can characterize one or several operations of the item such as, for example: addition; subtraction; multiplication; division; etc. In some embodiments, the attributes can characterize the operation performed to achieve the step, and/or the operations to be performed to solve the problem from the step. These attributes can be stored in the database server 104, and specifically in the content library database 303.

After the item characteristics have been identified, the process 810 proceeds to block 813, wherein item similarity is determined. In some embodiments, item similarity can be determined via generation of a vector for each of the items, which vector can characterize attributes of the items. In some embodiments, item similarity can be determined via generation of a vector for each of the items, which vector can characterize attributes of a tree structure representing the item and/or can characterize attributes of a combination of a tree structure representing the item and/or one or several attributes of the items. In such embodiments in which vectors are created representing items, cosine similarity analysis can be performed to determine similarity between vectors. In another embodiment, a graph similarity algorithm can be used to identify similarity between items. In some embodiments, this graph similarity algorithm can be combined with a tuned cost function, which tuned cost function can be tuned to tags representing attributes of the items. Similarity between items can be determined by the processor 102.

After similarity between items has been determined, the process 810 proceeds to block 814, wherein one or several clusters, or formed and/or stored. In some embodiments, these clusters can be formed on item similarity as determined in block 813. In some embodiments, for example, items can be grouped in a cluster when they have a similarity score exceeding a clustering threshold. In some embodiments, items can be grouped in a cluster based on the cosine similarity analysis, and/or based on results of the graph similarity algorithm. After the items have been grouped in clusters, the clusters, and/or attributes of the clusters can be stored in the database server 104 and specifically in the content library database 303.

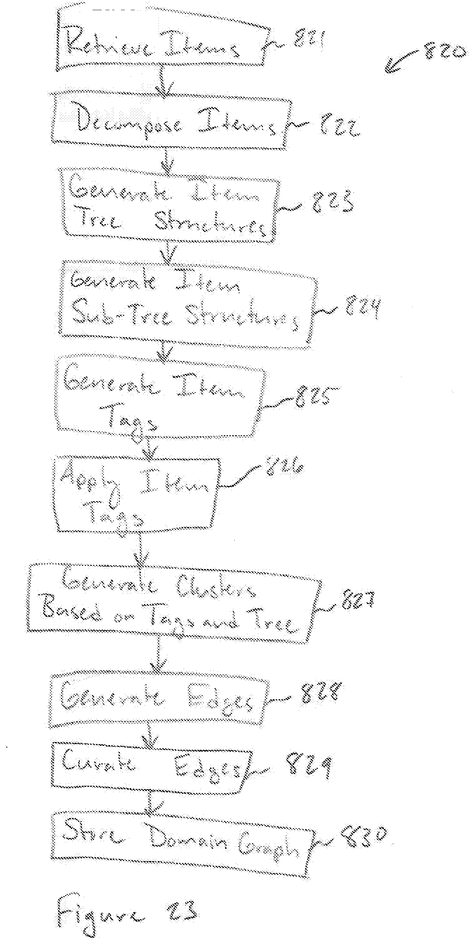

With reference now to **Figure 23****,** a flowchart illustrating one embodiment of a process 820 for automated generation of a directed graph is shown. In some embodiments, the process 820 can be performed to automatically integrate content items within a directed graph, such as, for example, a domain graph. The process 820 can be performed by all or portions the content distribution network 100 including, for example, the server 102.

The process 820 begins a block 821, wherein one or several items are received and/or retrieved. In some embodiments, the items can be received and/or received by the server 102 from the database server 104 and specifically from the content library database 303. After the item is a been retrieved, the process 820 proceeds to block 822 wherein the one or several of the items received and/or retrieved in block 801 one are decomposed. In some embodiments, the decomposing of the items can include the identifying of one or several steps, or tasks for solving the one or several items. The decomposing of items can be performed by a solver executed by the server 102.

After the items of an decomposed, the process 820 proceeds to blocks 823 and 824 wherein one or several tree structures, representative of a problem or question of each content item and/or of one or several steps to solve the problem or question of each content item is generated. These tree structures can be expression tree structures which can identify operation and/or portions of a problem in a graphical format. In some embodiments in which the tree structures comprise expression trees, the nodes and/or leaves of the expression tree can correspond to operations, variables, values, numbers, or the like. In some embodiments, these tree structures can be recursive and can include a tree representing the item and a tree representing the item as modified by steps moving towards solution of the problem or question of the content item. Specifically, in block 823, a tree structure, referred to herein as an item-level tree, is generated for each of the retrieved items. In some embodiments, each of these tree structures can comprise a graphical depiction of a question or problem associate with the content item. This graphical depiction can include a representation of numbers or variables in the question or problem and/or a representation of one or several mathematical operators included in the question or problem. The item tree structures can be, in some embodiments, by ingesting all or portions of the question or problem into a tree generator algorithm which can parse the question or problem, and thereby generate the tree.

After the tree structure for each content item has been generated, the process 820 proceeds to block 824 wherein one or several tree structures, referred to herein as step-level trees, are generated for each of the steps to solving question or problem of each content item. In some embodiments, these trees can be generated by ingesting the primary question of each content item into a solver to identify steps toward solving of the question or problem, and then ingesting an equation representation of each of the steps into a tree generator algorithm which can output a tree for that step. The trees of blocks 823 and 824 can be generated by the server 102.

After the trees of been generated, the process 820 proceeds to block 825, wherein one or several item tags are generated for each of the items, and to block 826 wherein the generated tags are applied to the item for which they were generated. In some embodiments, for example, these tags can identify attributes of the item from which they are generated and/or to which they are applied. These attributes can characterize, for example, aspects of the content item and/or of the step of the content item. These can include, for example, attributes of numbers of the item such as, for example: even; odd; prime; etc. In some embodiments, the attributes can characterize one or several operations of the item such as, for example: addition; subtraction; multiplication; division; etc. in some embodiments, these tags can be generated for and applied to an item, and/or can be generated for an applied to the step of an item. In some embodiments, the attributes can characterize the operation performed to achieve the step, and/or the operations to be performed to solve the problem from the step. These attributes can be stored in the database server 104, and specifically in the content library database 303.

At block 827, clusters are generated based on the trees generated for items and for steps and items and the tags applied to items and applied to steps of items. In some embodiments, these clusters can be generated based on similarity between the items which similarity can be calculated via, for example, a combination of vectors and cosine similarity, a graph similarity algorithm, or the like.

After the clusters been generated, edges are generated between the clusters, as indicated at block 828. Each of these edges can connect a pair of clusters in a hierarchical relationship. In some embodiments, these edges can be generated based on the hierarchy of trees for each of the items. After the edges of been generated, the process 820 proceeds block 829, wherein the generated edges are curated. In some embodiments, the curation the edges can include the elimination of one or several redundant edges. The edges can be generated and/or curated by the processor 102. After the edges of been curated, the process 820 proceeds to block 830, wherein the domain graph formed from the network of clusters linked by edges is stored. In some embodiments, the domain graph can be stored in the database server 104 and specifically in the content library database 303.

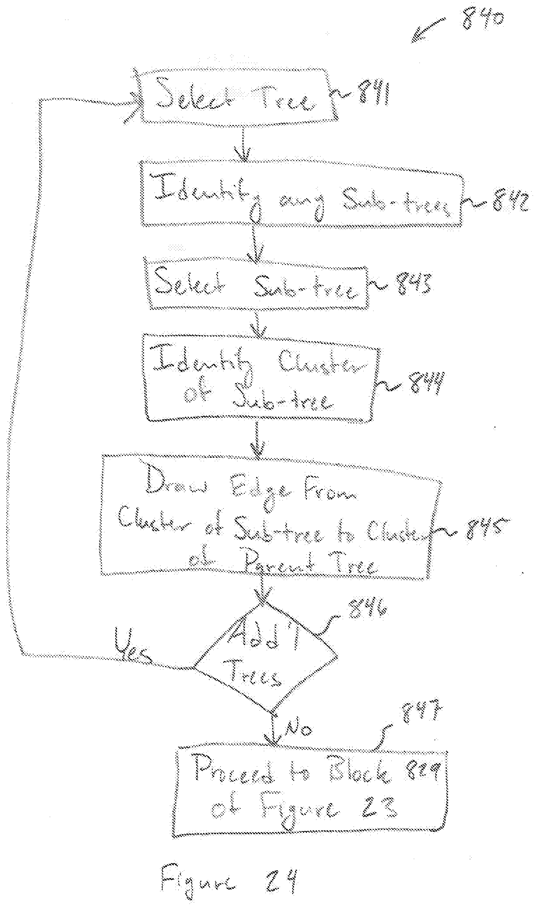

With reference now to **Figure 24****,** a flowchart illustrating one embodiment of a process 840 for generating edges is shown. The process 840 can be performed as a part of, or in the place of the step of block 828 of Figure 23. The process 840 can be performed by the processor 102, and/or by other components of the content distribution network 100. The process 840 begins at block 841, wherein a tree is selected. In some embodiments, the selected tree can be apparent tree to other trees discussed in this process 840, and can specifically be an item-level tree. The item-level tree can be selected by the processor 102.

After the tree has been selected, the process 840 proceeds to block 842, where any step-level trees or any subtrees of the selected tree are identified. In some embodiments, this can include querying the database server 104 for information relating to the selected tree, and receiving from the database server 100 for information identifying any step-level trees or subtrees of the selected tree. After subtrees of the selected tree had been identified, the process 840 proceeds to block 843, wherein a subtrees selected. The subtree can be selected by the processor 102. After the subtrees been selected, the process 840 proceeds to block 844, wherein the cluster of the subtrees identified. In some embodiments, this can include the server 102 retrieving information relating to the selected subtree from the database server 104 and specifically from the content library database 303.

After the cluster. The subtree has been identified, the process 840 proceeds to block 845, wherein an edge is drawn from the cluster of the selected sub-tree to the cluster of the parent tree selected in block 841. In some embodiments, the edge, can identify a hierarchical relationship between the sub-tree and/or the cluster of the sub-tree and the parent tree, and/or the cluster of the parent tree. In some embodiments, the edge, can identify the cluster of the parent tree as being the parent to the cluster of the sub-tree. The edges can be generated and/or drawn by the server 102.

After the edges have been drawn, the process 840 proceeds to decision state 846 wherein it is determined if there are additional trees to link and/or additional trees for which edges have not yet been generated. In some embodiments, these additional trees can be item-level trees, step-level trees, or any other tree or trees. If it is determined that there are additional trees, then the process 840 returns to block 841 and proceeds as outlined above. Alternatively, if it is determined that there are no additional trees, than the process 840 proceeds to block 847 and continues to block 829 of Figure 23.

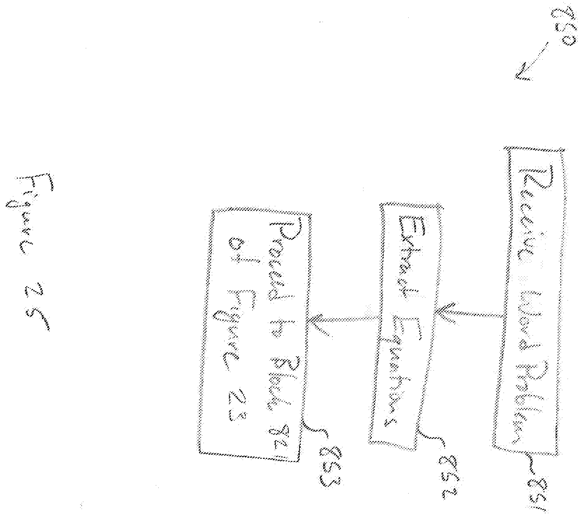

With reference now to **Figure 25****,** a flowchart illustrating one embodiment of a process 850 for automated generation of a directed graph is shown. The process 850 can be performed as a prequel to the steps of some or all of process 820 shown in Figure 23. The process 850 can be performed by the server 102. The process 850 begins a block 851, wherein a word or story problems received. In some embodiments, this can include receiving a content item that comprises a word or story item. The word or story item can be received by the server 102 from the database server 104 and specifically from the content library database 303.

After the word or story item has been received, the process 850 proceeds to block 852 wherein one or several equations are extracted from the worst for a problem. In some embodiments, this can include performing of natural language processing analysis on the item associated with the word or story problem. In some embodiments, for example, natural, image processing can include natural language understanding, parsing, or the like. Natural language processing can be used to identify values, variables, and operations embedded in the word or story problem that form the equation for solving. In some embodiments, the extraction of the equations from the word a story problem can be performed by the processor 102. After the equations have been extracted, the process 850 proceeds to block 853 and continues with block 821, of Figure 23.

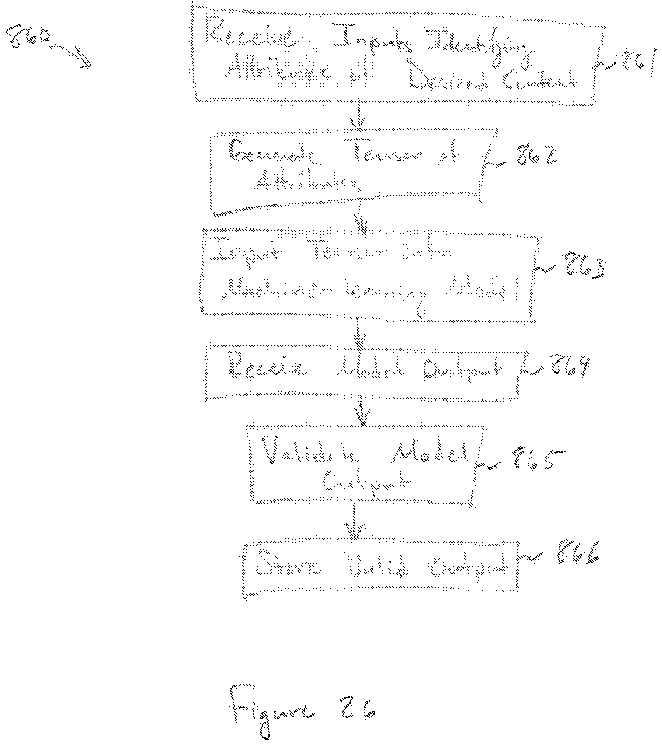

With reference now to **Figure 26****,** a flowchart illustrating one embodiment of a process 860 for automated content generation is shown. The process 860 can be performed by the content distribution network 100 or components thereof including, for example, the processor 102. The process 860 begins a block 861, wherein inputs identifying attributes of desire content are received. In some embodiments, these inputs can be received from a teacher of the server 102 via the supervisor device 110 and the communication network 120. In some embodiments, these inputs can identify one or several skills that the teacher desires his students to master.

After these inputs of been received, the process 860 proceeds to block 862 wherein a tensor of the received identified attributes is generated. In some embodiments, the tensor can comprise a vector, and in some embodiments, the tensor can comprise a matrix. The tensor can be generated by the server 102. After the tensor is been generated, the process 860 proceeds to block 863, when the tensor is inputted into a machine learning model. In some embodiments, the machine learning model can be, for example, a recursive neural network, a sequence-to-sequence, model, a decision tree, a random forest model, based neural nets, or any other desired machine-learning model. The machine learning model can be specifically trained to output a tensor corresponding to new content based on inputs indicative of desired attributes of the new content.

After the tenses been inputted into the machine-learning model, the process 860 proceeds to block 864 wherein a model output is received. In some embodiments, the model output can comprise a tensor generated by the machine-learning model, based on the inputs identifying attributes of the desired content. After the model output has been received, the process 860 proceeds to block 865, wherein a model output is validated. In some embodiments, this can include identifying attributes of the model output and determining whether the attributes of the model output correspond to the attributes identified in the input received in block 861. This evaluation can be performed by, for example, the response processor 678 of the server 102.

After the model output has been validated, the process 860 proceeds to block 866 wherein the received model output is stored. In some embodiments, the received model output can be stored when it is validated as matching the attributes identified in block 861, and in some embodiments, the received model output can be stored regardless whether it matches our fails to match the attributes received in block 861. If the model output identifies valid content such as, for example, actual math. In some embodiments, for example, the model output can comprise an equation, set of equations, a word or story prom, or the like. That is valid, and/or that is solvable, but that does not match the attributes identified in block 861. In such an embodiment, the output may be stored as a content item, the content item may be curious it according to one or several of the processes shown in Figures 19 to Figure 25. In some embodiments, such stored content can be provided to the user according methods described below for content provisioning.

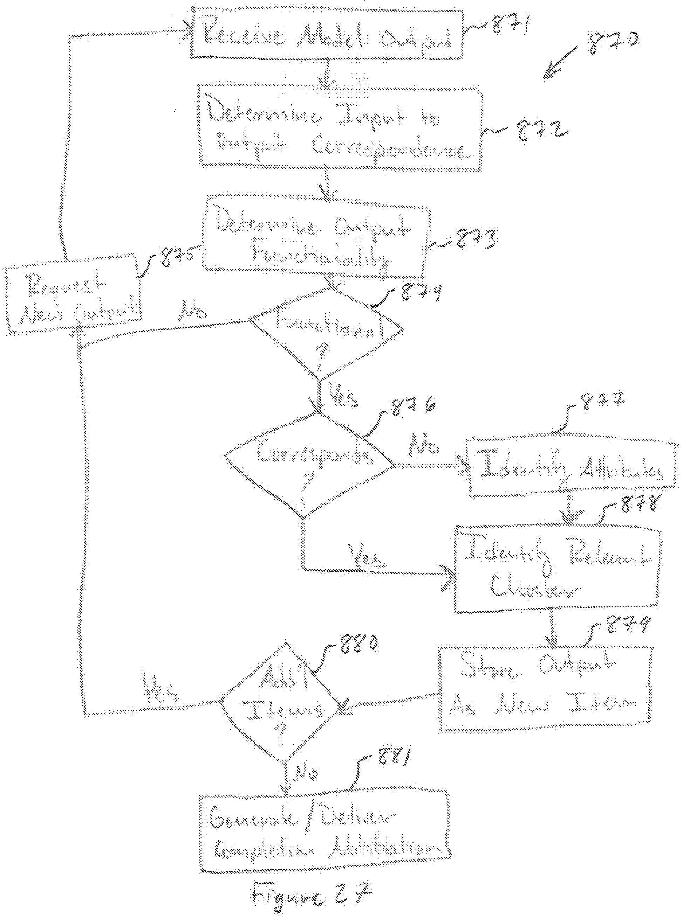

With reference now to **Figure** 27, a flowchart illustrating one embodiment of a process 870 for model output validation and content provisioning is shown. The process 870 can be performed in conjunction with all or portions of process 860 shown in Figure 26. In some embodiments, the process and 70 can be performed by all or portions of the content distribution network 100 including, for example, the response processor 678, and/or the server 102. The process 870 begins a block 871, wherein model output is received. In some embodiments, this can correspond to the step of block 864 of Figure 26. After the model output has been received, the process 870 proceeds to block 872 wherein, input-output correspondences determined. In some embodiments, this can include analyzing the received output, associating attributes and/or tags with the received output, and comparing the attributes and/or tags associated with the received output two skills and/or attributes identified in block 861. In some embodiments, this determination can be performed by the processor 102.

At block 873, the functionality of the output is determined. In some embodiments, this can include determining, in the instance of a math problem, and/or math-based problem, whether the received output identifies actual mathematics and/or identifies solvable mathematics. In some embodiments, this determination can be made by inputting the received output into a solver and determining whether the solver returns a response, a valid response, or no response. At decision state 874, it is determined whether the output is functional, and specifically whether, in the case of a math, or math-based problem, whether the output identifies actual mathematics and/or identifies solvable mathematics.

If it is determined that the output is nonfunctional, then the process 870 proceeds to block 875, wherein a new output is requested from the machine learning model. After the new output has been requested, the process returns to block 871, and proceeds as outlined above. Returning again to decision state 874, if it is determined that the output is functional, than the process 870 proceeds to decision state 876 wherein it is determined whether the output, and the input correspond and/or whether the output sufficiently corresponds to the input. If it is determined that the output does not correspond to the input identifying requested content, for generation, than the process 870 proceeds to block 877, wherein attributes of the output are identified. In some embodiments, this can include generating and apply one or several tags to the output content and/or generating apply one or several trees to the content and/or to steps in solving the content.

After attributes of the non-corresponding content have been identified and/or returning to decision state 876, if it is determined that the output content of the machine learning model corresponds or sufficiently corresponds to the inputted content request, then the process 870 proceeds to block 878, wherein the relevant cluster, and/or clusters of the output content is identified. In some embodiments, this can include identifying clusters for steps to solving the output content. The identification, the relevant cluster can be performed as described earlier in this application, and can be performed by the server 102.

After the relevant cluster or clusters have been identified, the process 870 proceeds to block 879, wherein the output is stored as a new item. In some embodiments, the output of the machine learning model can be stored as a new item associated with its relevant one or several clusters. In some embodiments, the storing of the output of the machine learning model as a new item can incorporate the output into the domain graph.. In some embodiments, the output can be stored as a new items. In the database server 104 and specifically in the content library database 303.

After the storing of the output is new item, the process 870 proceeds to decision state 880 where it is determined if additional items and/or additional outputs have been requested. If an additional item, and/or output has been requested, than the process returns to block 875 and continues as outlined above. If it is determined that no additional items have been requested, and the process 870 proceeds to block 881, and generating delivers notification indicative of completion of content generation. In some embodiments, this notification can be in the form of an alert that can be delivered to the requester of the content generation, such as, for example, the supervisor device 110. This notification can come in some embodiments, trigger the I/O subsystem 526 of the supervisor device to automatically display an indicator of completion of the request for content generation.

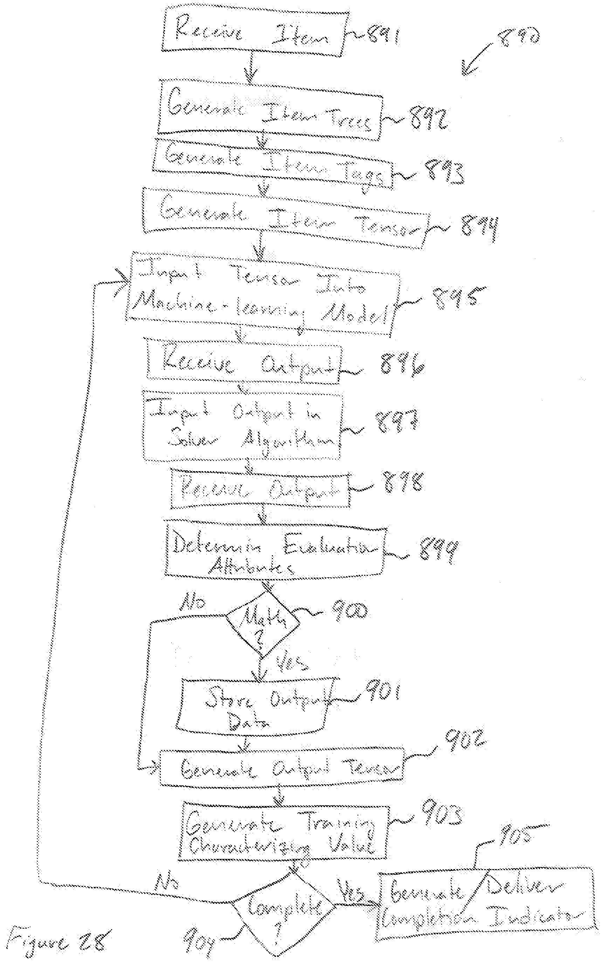

With reference now to **Figure 28****,** a flowchart illustrating one embodiment of a process 890 for closed-lube unsupervised model training is shown. In some embodiments, the process 890 can be performed as a part of the model training process to eliminate need for user evaluation and/or tagging of model outputs. The process 890 can be performed by all or portions of the content distribution network, including, for example, the processor 102. The process begins at 891, wherein an item is received. In some embodiments, the items can comprise a question such as, a math question, a math-based or math related question, or any other type of question. The item can be received by the processor 102 from the database server 104 and specifically from the content library database 303.

After the item has been received, the process 890 proceeds to block 892, wherein one or several trees, also referred to herein as solution graphs, such as one or several expression trees, characterizing the item are generated. In some embodiments, these trees can comprise one or several parent trees, one or several item-level trees, one or several step-level trees, one or several sub-trees, or the like. These trees can be generated in accordance with processes disclosed at other locations in this application. After the trees have been generated, the process 890 proceeds to block 893, wherein attributes of the item are generated. In some embodiments, this can include the generation and applying of one or several tags the item and/or to steps in solving and/or responding to the item. These attributes and/or tags can be generated and/or applied according to processes and methods disclosed, and other locations in the present application.

At block 894, an item tensor is generated. In some embodiments, the uncensored can comprise one or several values, characters, or the like that can represent the received item. In some embodiments, the tensor can include information identifying one or several trees associate with the item and/or one or several attributes or tags of the item. The tensor can be generated by ingesting the item, one or several of the trees associated with the item, and/or one or several of the attributes associated with the item into a tensor generating application. The tensor can be generated by the server 102.

After the tensor has been generated, the process 890 proceeds block 895, wherein the tensor is inputted into the machine-learning model. After the tensor as an inputted into the machine-learning model, the process 890 proceeds to block 896, wherein an output is received from the machine-learning model. In some embodiments, the output can correspond to potential new content. The output can be received from the machine-learning model, and can be inputted into a solver algorithm, and/or into a solver as indicated in block 897. In At block 898, the output of the solver algorithm is received, and a block 899 attributes of the output of the machine-learning model received in block 896 are determined and/or generated and applied. In some embodiments, the determination of these attributes can comprise generating one or several trees characterizing the output, and/or steps to solving the output, and/or one or several attributes or tags of the output. These trees, tags, and/or attributes can be determined, as disclosed elsewhere in this application.

A decision state 900, it is determined whether the output received from the machine-learning model is functional. In some embodiments, this can include determining whether the output is math and/or represents math. This determination can be made based on the output of the solver algorithm, and particularly based on whether the output of the machine-learning model received in block 896 is solvable by the solver algorithm. If the output of the machine-learning model received in block 896 is solvable by the solver algorithm, then the received output is functional. Alternatively, if the output received from the machine-learning model is unsolvable by the solver algorithm, then the output is nonfunctional.

If it is determined, the output of the machine-learning model received in block 896 is solvable, and is thus functional, then the process 890 proceeds to block 901, wherein the output data, and/or the output received in block 896 is stored. In some embodiments, this output can be stored in the content library database, and/or elsewhere in the database server 104. In some embodiments, and as a part of the storing of this output, one or several clusters can be identified for the output, and the output can be stored in and/or associate with those clusters as an item.

After the storing of output data, and/or returning again to decision state 900 if it is determined that the output of the machine learning model received in block 896 is nonfunctional, then the process 890 proceeds to block 902 wherein a tensor is generated for the output of the machine-learning model received in block 896. In some embodiments, this tensor can be the same type of tensor and/or in the same format as the tensor generated for the item in block 894. This tensor can include information characterizing whether the output was functional, and/or the attributes of the output. The tensor for the output can be generated in the same manner as item tensor was generated in block 894 above.

After the output tensor has been generated, the process 890 proceeds to 903, wherein the training characterizing value is generated. In some embodiments, the training characterizing value can indicate the degree to which the machine learning model is trained to provide desired outputs based on the inputted item tensor. More specifically, the training characterizing value can characterize the extent to which the output received in block 896 is functional, and has attributes corresponding to the attributes, including trees and/or tags of the item received in block 891. The training characterizing value can be generated by the processor 102.

After the training characterizing value has been generated, the process 890 proceeds decision state 904, wherein it is determined if training is complete. In some embodiments, this determination can be made based on the training characterizing value and whether the training characterizing value exceeds a threshold value that delineates between acceptable training levels and unacceptable training levels. If it is determined that the training is not complete, than the process returns to block 895, wherein the output tensor generated in block 102 is inputted into the machine-learning model, after which the process 890 proceeds as outlined above. Alternatively, if it is determined of training is complete, the process 890 can proceed to block 905, wherein a completion indicator is generated and delivered. In some embodiments, the completion indicator can comprise an notification and/or alert that can be generated by the server 102, and provided to the director of model training and/or the trainer of the model via a device such as the supervisor device 110. Additionally, in some embodiments, the output tensor generated at block 902 can be input into the machine learning model as indicated in block 895, which input of the output tensor generated at block 902 can facilitate further training and improvement of the machine-learning model.

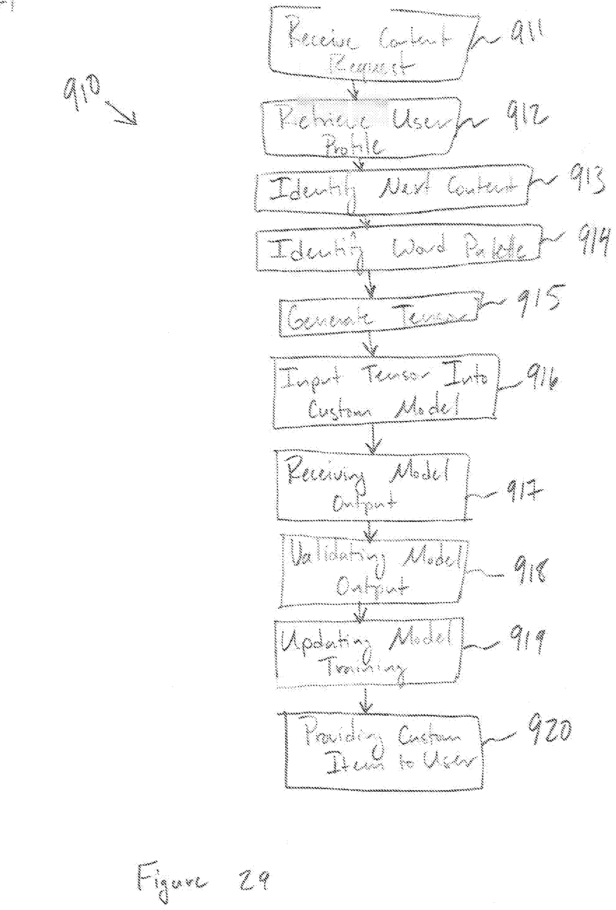

With reference now to **Figure 29****,** a flowchart illustrating one embodiment of a process 910 for generating a vertical specific content customization is shown. The process 910 can be performed by all or portions the content distribution network 100 including, for example, the server 102. The process begins at block 911, wherein a content request is received. In some embodiments, the content request can be received by the server from the user device 106 and specifically from a user using the user device 106. In some embodiments, the content request can further include information identifying the user making the content request, which information can include, for example, user name, unique user identifier, or the like.

After the content request is been received, the process 910 proceeds to block 912, wherein the user profile for the user making the content request is retrieved. In some embodiments, the user profile can include information pertaining to the user such as, for example, a skill level, a user learning style, user interests, user courses, or the like. The user profile can be retrieved by the server 102 from the database server 104 and specifically from the user profile database 301.

After the user profile has been retrieved, the process 910 proceeds to block 913, wherein next content is identified. In some embodiments, next content can be identified based on at least one of: information from the user profile; and metadata relating to content in the domain graph. In some embodiments, this can include determining the user location in the domain graph, and specifically determining mastered, and unmastered skills, attributes, clusters, or the like. In some embodiments, the determination of the user mastery can be made based on the user profile retrieved in block 912. In some embodiments, next content can be selected based on metadata of content can domain graph, which metadata can specify, for example, a difficulty of content in the domain graph. In some embodiments, the identification of next content can be performed by the recommendation engine 686, which can be a part of the processor 102.

After the next content has been identified, the process 910 proceeds to block 914 wherein a domain specific language, which can be found in, for example, a word palette is identified. In some embodiments, the domain specific language can identify one or several words, and/or one or several vocabularies relevant to a categorization of users. In some embodiments, for example, a domain specific language can be selected based on information from the user profile, such as, for example, user interests, user courses of study, user majors, minors, programs, or the like. In one embodiment, for example, the domain specific language can be identified by identifying the categorization of the user making the content request in block 911, comparing the categorization of the user to categorizations of word pallets, and selecting the domain specific language having a categorization matching the categorization of the user requesting the content in block 911. The word pallet can be identified by the server 102.

After the domain specific language has been identified, the process 910 proceeds block 915, wherein a tensor is generated. In some embodiments, the tensor can characterize one or several attributes of the identified next content and the identified domain specific language. The tensor can be generated by the server 102 and can then be inputted into a customization model. As indicated in block 916. The customization model can be a machine-learning model that is trained to generate customized content based on inputs identifying attributes of the next content and attributes of the word palette. The customization model can be stored in the model database 309.

After the tensor has been inputted into the customization model, the process 910 proceeds block 917, wherein an output is received from the customization model. After the output has been received, the process 910 proceeds block 918, wherein the output is validated. In some embodiments, this can include determining whether the output is functional, and/or corresponds to the identify next content and/or the identified domain specific language.

After the model output has been validated, the process 910 proceeds to block 919, wherein model training is updated. In some embodiments, the model training can be updated by generating an output tensor characterizing the model output and inputting the output tensor into the machine-learning model. The machine-learning model can, based on the received output tensor, adjust aspects of the machine-learning model such as weightings, strength of connection, or the like. To improve the output of the machine-learning model so the output more closely corresponds to the desired output.

After the model training has been updated, the process 910 proceeds block 920 wherein customizing is provided to the user. In some embodiments, the providing of a custom item to the user can include the forming of a custom item from the model output received in block 917. In some embodiments, the forming of the custom item can include the formatting of the output received in block 917, the generation of one or several signals directing control of the user interface of the user device 106 to display the custom item, or the like. In some embodiments, the providing of a custom item can include generating and sending of one or several control signals from the server 102 to the user device 106, which control signals tracked the user interface of the user device 160 display the custom item.

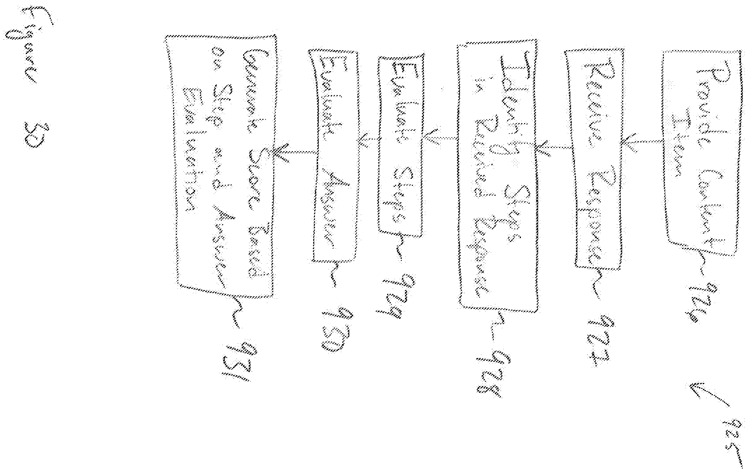

With reference now to **Figure 30****,** a flowchart illustrating one embodiment of a process 925 for multimodal input is shown. In some embodiments, the process 925 can enable the gathering of response to an item such as, for example, a question that can be a math question and/or math-based question, the parsing of that response into one or several steps leading to the solution of the item, and the evaluating of those steps. The process 925 can be performed by all or portions of the content distribution network 100 including, for example, the processor 102. The process 925, begins a block 926 wherein a content item is provided. In some embodiments, the providing of content item can include the selection of a content item for providing to the user via the recommendation engine 686. The content item can then be provided to the user via the user device 106 and specifically via the presentation service 670.

After the content item has been provided, the process 925 proceeds to block 927, wherein a response, the provided content item is received. In some embodiments, the response can be received by the server 102 from the user device. In some embodiments, the response can be received via, for example, handwriting on a touchscreen, equation editor, OCR, voice, eye movement, handwriting, brainwave interpretation, brain coupling, scanning, a biological response, and/or photo.

After the responses been received, the process 925 proceeds block 928, wherein steps in the received response identified. In some embodiments, this can include the parsing of the received response into one or several steps via, for example, image analysis, OCR, user input, or the like. In some embodiments, for example, the user may provide the response. In stepwise format, wherein each of the steps is separately provided. In such an embodiment, the identification, the steps in the received response can simply include the identification of the individual steps provided to the system by the user. The processor 102 can identify steps in the received response.

After the steps in the received response. When identified, the process 925 proceeds to block 929, wherein the identified steps are evaluated. In some embodiments, this evaluation can include determining whether the step is incorrect, correct, or whether the student received assistance in performance about step. In some embodiments, evaluating the steps can include, for each identified step, determining whether a step in the response is present in the solution graph for a problem. In some embodiments, this solution graph can be generated before the content item is provided to the user, and in some embodiments, the solution graph can be generated subsequent to receipt of the response from the user. In some embodiments, the evaluation of the steps of the response can include the mapping of one, some, or all of the steps of the response onto the solution graph. In some embodiments, this evaluation of the steps of the response can include a two part evaluation: (1) determining that a step in the response is math and/or is accurate math, and (2) determining if the step is relevant to the solution of the problem. In some embodiments, for example, a user may include a step that is accurate math. In some embodiments, math of a step may be accurate when the step is a mathematically correct variant or modification of the problem and/or of any previous step in the solution. In some embodiments, a step is relevant to the solution of the problem when the step in the response corresponds to a step in the solution graph. In some embodiments, the evaluation of the steps can be performed by the response processor 678.

At block 930 of the process 925, the answer to the content item, providing the response is evaluated. In some embodiments, the answer to the item can be the portion of the response in which the student provides the answer to the question of the content item. In some embodiments, the answer can be evaluated by the response processor 608, with information identifying the desired answer to the content item, and/or via a solver algorithm which can determine the answer to the content item, the input of the content item into the solver.

After the answer has been evaluated, the process 925 proceeds to block 931, wherein the score based on a combination of staff evaluation to answer evaluation is generated. In some embodiments, this can include the provisioning of points based on one or several correct steps and/or the provisioning of points based on the correct answer. In some embodiments, the sources of points can be combined to generate a score for the content item. This score can be generated by the response processor 678, and/or the server 102.

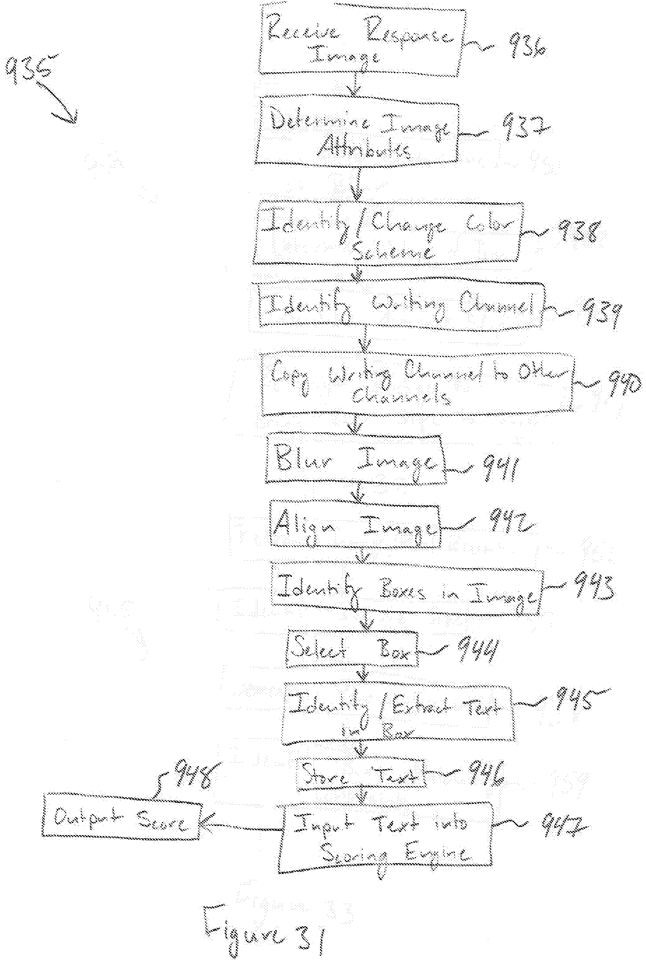

With reference now to **Figure 31****,** a flowchart illustrating one embodiment of a process 935 for step extraction is shown. In some embodiments, the process 935 relates to a specific way in which steps can be extracted from a user response, which can be, for example, a handwritten user response. The process 935 can be performed by the server 102 and specifically by the response processor 678. The process 935, begins a block 936, wherein a response image is received. In some embodiments, the response image can be a scanned image, a photographic image, a copy image, and/or digitally created image. The response image can be received, in some embodiments, by the server 102 from the user device 106.

After the response image has been received, the process 935 proceeds to block 937, wherein image attributes are determined. In some embodiments, these image attributes can include, for example, predominant colors of the image, color scheme used in the image, resolution of the image, size of the image, where the like. In some embodiments, these attributes of the image can be determined based on data, including metadata associated with the image. After the image attributes been determined, the process 935 proceeds to block 938, wherein the color scheme of the image is identified and changed.

After the color scheme has been identified and changed, the process 935 proceeds to block 939, wherein the channel of the writing is identified. In some embodiments, the channel of the writing can comprise the color of the writing. In the image. In some embodiments, the channel of the writing can be identified by identifying pixels of the writing, and sampling color from a plurality of the pixels of the writing. In some embodiments, pixels of the writing can be identified via, for example, contrast analysis of pixels in the image. The channel of the writing can be identified by the server 102.

After the channel the writing has been identified, the process 935 proceeds to block 940, wherein the writing channel is copied to other channels of the color scheme. In some embodiments, this can result in the setting of the color of background to the writing to a desired color, but particularly in the setting of the color of the background to white. After the writing channel is copied to the other channels of the color scheme, the process 935 proceeds to block 941, wherein the image is blurred. In some embodiments, the image can be blurred in one direction, such as, for example, the image can be horizontally blurred, vertically blurred, or blurred in any other desired direction.

After the image has been blurred, the process 935 proceeds to block 942 wherein the image is aligned. In some embodiments, the aligning of the image can include the changing of the orientation of the image to any desired orientation. In some embodiments, this can include reorienting the image such as one or several lines of writing, have a desired direction, orientation, and/or alignment.

After the images been aligned, the process 935 proceeds to block 943, wherein one or several boxes in the image identified. In some embodiments, these boxes can be boxes around portions of the image such as, for example, such as a round portions of the writing captured in the image. In some embodiments, these boxes can be generated according to one or several constraints such as, for example, constraints on the size of the box, constraints, and the orientation, the box come constraints on the allowability of overlap boxes, or the like. In some embodiments, the constraints for the orientation, the box can result in a high likelihood that a box will contain the writing for a single step in solving of the content item for which the response image was received. The boxes can be identified by the server 102.

After boxes in the image have been identified, the process 935 proceeds to block 944 wherein one of the identified boxes is selected. In some embodiments, the one of the identified boxes can be selected at random, and/or can be selected according to any selection criteria. In one embodiment, for example, the selection criteria can specify a preference for selecting the previously unselected box that is closest to the top of the image, closest to the bottom of the image, and/or closest to one of the sides of the image. The box can be selected by the server 102.

After the boxes been selected, the process 935 proceeds to block 945, wherein text contained within the box is identified and/or extracted. In some embodiments, this can include removing of the blurred to the area within the selected box, the identification of the writing within the selected box, where the like. In some embodiments, the identification writing within the selected box can include use of an OCR technique. In some embodiments, and subsequent to the identification extraction of text within the box, the process 935 proceeds to block 946 wherein the identified and extracted text is stored.

After the text is stored, the process 935 proceeds to block 947, wherein the extracted text is inputted into the response processor 678. In some embodiments, this can include the inputting of tanks corresponding to one of the steps of the response, the content item into the response processor 678. The response processor can score and/or evaluate the received inputted text. As indicated in block 948, the score can be outputted by the response processor 678, and in some embodiments, the score can be provided to, for example, the student via the user device 106, and/or the teacher via the supervisor device 110. In some embodiments, the outputted score can correspond to a score on a single step, a score for multiple steps, a score for a final response, the content item and/or a combined score. In some embodiments, the process 935 can be repeated until all of the steps in the received response image. In the final response to the content item have been evaluated.

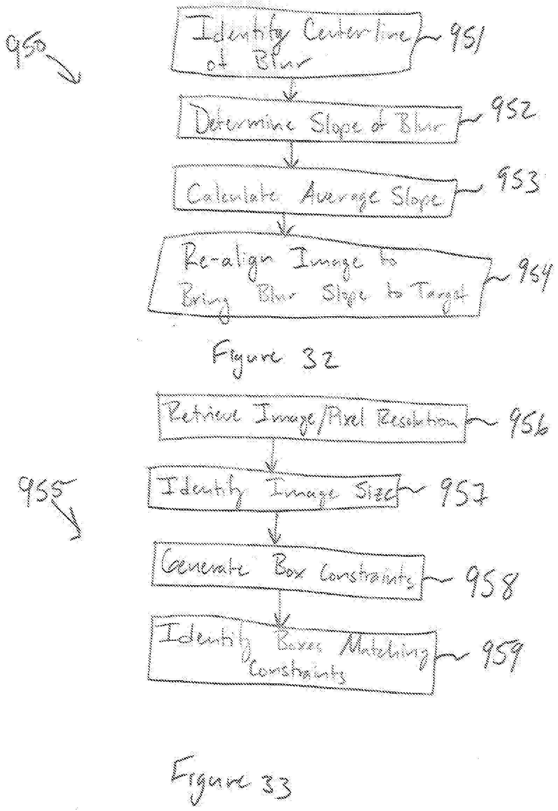

With reference now to **Figure 32,** a flowchart illustrating one embodiment of a process 950 for image alignment is shown. In some embodiments, the process 950 can be performed as a part of or in the place of step of block 942 of Figure 31. The process 950 begins a block 951, wherein a centerline for each of one or several blurs is identified. In some embodiments, for example, in which the receive response image comprises a single blur, then the process 950 can identify a centerline of that single blur. Alternatively, in embodiments in which the received response image comprises a plurality of blurs, then the process 950 can identify a centerline for each of the plurality of blurs. The centerline of the blur can be identified by the server 102.

After the centerline of the blur has been identified, the process 950 proceeds to block 952 wherein a slope of the blur is determined. In some embodiments, a single slope of the blur can characterize the slopes of all the blurs within an image, and in some embodiments, each of the blurs within the image can have an associated slope of the blur. The slope of the blur can be determined by the server 102. After the slope of the blur has been calculated, the process 950 proceeds to block 953, wherein the average slope is calculated. In some embodiments, the average slope can be the average of the slope of all of the blurs in the image, and/or the average slope of the single blur in the image. The average slope can be calculated by the server 102.

After the average slope has been calculated, the process 950 proceeds to block 954 wherein the image is realigned according to the calculated slope of the blur. In some embodiments, this can include the realigning of the image to bring the slope of the blur to a desired level, and/or within a desired range of blurs. In some embodiments, the image to the piecewise realigned wherein each of the pieces of the image, comprise at least one of the blurs. In such an embodiment, the each of the pieces of the image container blur may be realigned in a different manner, and/or to a different degree, but all of the blurs can, subsequent to the realignment, have a desired blur slope and/or have a blur slope within a desired range. In some embodiments, the image can be realigned by the processor 102.

With reference now to **Figure 33****,** a flowchart illustrating one embodiment of a process 955 for identifying boxes in the image is shown. In some embodiments, the process 955, can be performed as a part of, or in the place of the step of block 943 of Figure 31. The process 955, can be performed by the processor 102. At step 956, image/pixel resolution data is retrieved. In some embodiments, this image/pixel resolution data can identify the resolution of the pixels in the image, identify the resolution of the image, and/or identify the resolution of portions of the image. In some embodiments, the image pixel resolution information can be obtained from the metadata associated with the received response image.

After the image/pixel resolution information has been retrieved, the process 955 proceeds to block 957, wherein the image size is determined. In some embodiments, the image size can be determined and/or can be characterized based on the number of pixels in each of the directions of the image, and specifically, the number of pixels to find the length of the image and/or the width of the image. After the image size is been generated, the process 955 proceeds to block 958 wherein one or several box constraints are generated. In some embodiments, the box constraints can be generated based on the size of the image, and/or based on the resolution of the image. In some embodiments, some or all of the box constraints include pre-existing roles, such as, for example, a ruling indicating that no box may overlap another box. The box constraints can be generated by the server 102.

At block 959 of the process 955, the received image is analyzed to identify boxes within the image and matching box constraints. In some embodiments, these boxes can be identified based on the box constraints which can be retrieved from the database server 104. After the boxes is been identified, the process 955, can return to the process 935 of Figure 31, and can proceed with box 944 of the process 935.

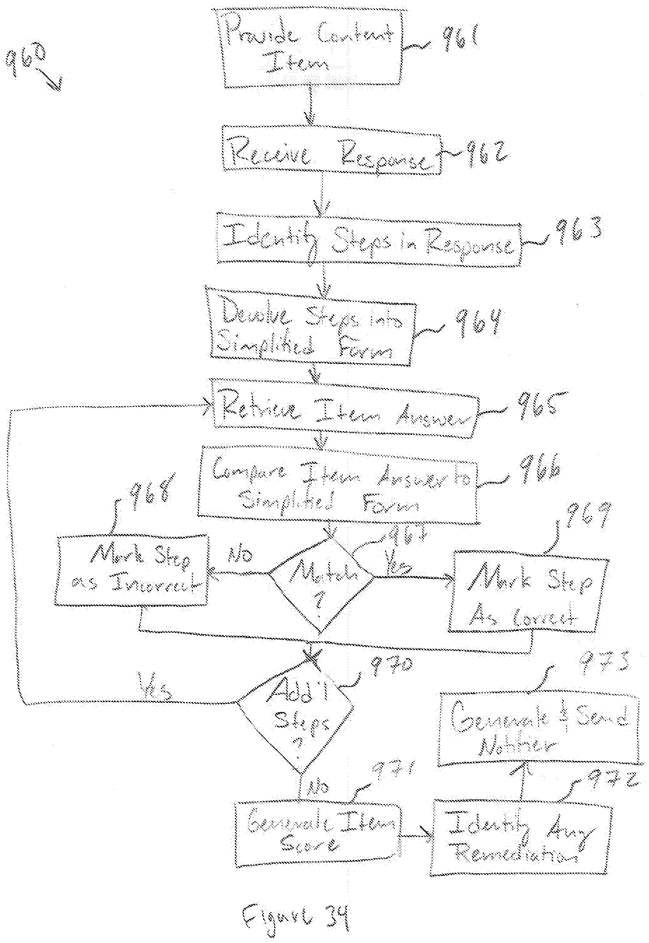

With reference now to **Figure 34****,** a flowchart illustrating one embodiment of a process 960 for automated scoring is shown. The process 960 can be performed by all or portions of the content distribution network, including, for example, the server 102. The process 960 begins a block 961, wherein a content item is provided to the user. In some embodiments, the content item can be selected based on, for example, user data associated with the student to whom the content is being provided, data associated with the content being provided, and inputs provided by the teacher. In some embodiments, the provided content can be selected by the recommendation engine 686.

After the content is been provided, the process proceeds to block 962 wherein a response is received. In some embodiments, the response is received by the server from the user device 106 via, for example, communication network 120. After the responses been received, the process 960 proceeds to block 963, wherein steps in the response are identified. In some embodiments, these steps can be identified according to one of the processes disclosed in other figures, and/or paragraphs herein.

After the steps have been identified, the process 960 proceeds to block 964 wherein, some or all of the steps are devolved into simplified form. In some embodiments, this can include inputting the steps into a solver that can automatically simplify and/or solve the steps identified in the response. After the steps of been devolved into simplified form, the process 960 proceeds to block 965, wherein answer data to the provided content item is received and/or retrieved. In some embodiments, the answer data can be retrieved from the database server 104 and specifically from the content library database 303.

After the item answer is been retrieved, the process 960 proceeds block 966 wherein the item answer is compared to the simplified form for each of the some or all of the steps that were devolved into simplified form. In some embodiments, the step of block 966 can include selection of one of the steps in the comparison of the simplified form of that selected step to the item answer.

After the comparison of the simplified form of the step and the item answer, the process 960 proceeds to decision state 967, wherein it is determined if there is a match between the item answer and the simplified form for each of the steps. If it is determined that there is not a match between the item answer and simplified form of the step, then the process 960 proceeds to block 968 wherein the selected step is marked as incorrect. In some embodiments, if the step is marked as incorrect, an indicator of the incorrect step can be generated and provided to the student via the user device 106. Returning again to decision state 967, if it is determined that there is a match between the item answer, and the simplified form of the selected step, then the process 960 proceeds to block 969, wherein the selected step is marked as correct. In some embodiments, if the selected step is marked as correct, an indicator of the correct step can be generated and provided to the student via the user device 106.

After the marking of the step as either correct or incorrect, the process 960 proceeds to decision state 970, wherein it is determined if there are additional steps, and specifically additional, unselected steps for evaluation. If it is determined that there are additional steps, than the process 960 returns to block 965, and proceeds as outlined above. If it is determined that there are not additional steps, then the process 960 proceeds to block 971, wherein an item score is generated. In some embodiments, the generation of the item score can include a comparison of the item answer. The answer provided in the response to determine if the item was answer correctly or incorrectly. In some embodiments, the result of the evaluation item response can be combined with the results of the evaluation of the steps to generate a score for the item.

After the item score is been generated, the process 960 proceeds to block 972 wherein any desired remediation is identified. In some embodiments, for example, the item score may be sufficiently low that remediation is desired, and/or scores associated with one or several steps may be sufficiently low such that remediation is desired. In such embodiments, the remediation can be identified by determining the attributes associated with the low score and identifying, via the domain graph, one or several content items that are prerequisites to the attributes associated with a need for remediation. In some embodiments, remediation can comprise the presentation of one or several of these content items that are prerequisites to the attributes associated with a need for remediation.

After any remediation has been identified, the process 960 proceeds to block 973, wherein the notifier including information indicative of the item score is generated and sent. In some embodiments, this notifier can be sent in the form of an alert that can be received by the user device 106, and/or the supervisor device 110 can trigger the launching of a portion of the user interface which displays the item score. In some embodiments, the notifier can further comprise the identified remediation including one or several content items identified as the remediation.

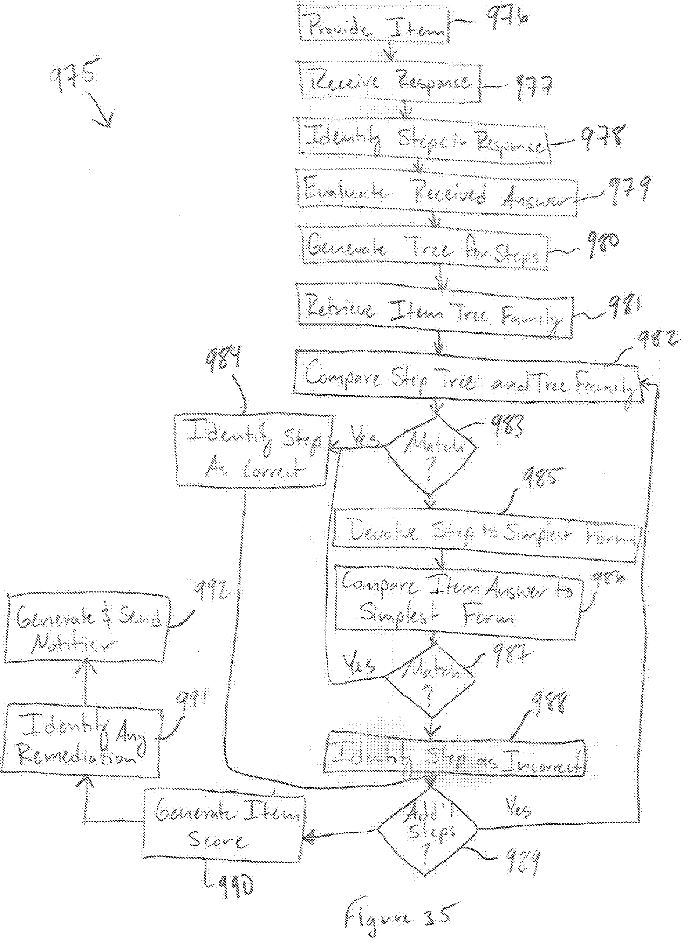

With reference now to **Figure 35****,** a flowchart illustrating one embodiment of a process 975 for structure-based response evaluation and/or scoring is shown. The process 975, can be performed by all or portions the content distribution network 100 including the server 102 and/or, the response processor 678. The process begins a block 976 wherein an item is provided to the user and the process 975. In proceeds to block 977, wherein a response to the provided item is received. After the responses been received, the process 975 proceeds to block 978, wherein steps in the response are identified.

After the steps in response been identified, the process 975 proceeds to block 979, wherein the received answer is evaluated. In some embodiments, this can include a comparison of the received answer to the item answer, which can be retrieved from the database server 104 and specifically from the content library database. In some embodiments, the result of the evaluation the received answer can be to identify the received answer is correct, identify the received answer is incorrect, or identify the received answer is being facilitated by system provided assistance, such as one or several hints. In some embodiments, a score can be associated with the received answer indicative of whether the received answer was correct, incorrect, or facilitated by provided assistance, and this score can be stored in the database server 104 and specifically in the user profile database 301.

After the received answer has been evaluated, the process 975 proceeds to block 980 wherein the trees generated for some or all of the steps identified in block 978. In some embodiments, these trees can be generated with tree generation software, and/or tree generation algorithms by inputting each of the steps and/or inputs corresponding to each of the steps into the tree generation software, and/or tree generation algorithm. After trees of been generated for each of the steps, the process 975 proceeds to block 981, wherein an item tree family is retrieved for the item provided in block 976. In some embodiments, the item tree family can comprise a plurality of trees including a tree associated with the item, and a tree associated with each of the potential steps towards solving the problem provided in the item and/or a tree associated with each of the common potential steps toward solving the problem provided in the item. In some embodiments, the item tree family can be retrieved from the database server 104 and specifically from the content library database 303.

After the item tree family has been retrieved, the process 975 proceeds to block 982, wherein a step is selected and the tree of the selected step is compared to the item tree family. In some embodiments, this can include a comparison of the tree of the selected step to each of the trees in the item tree family to determine if there is a match between the selected step tree, and any of the trees in the item tree family. At decision state 983, it is determined if there is a match between the selected step tree, and any of the trees in the item tree family.

If it is determined that there is a match between the selected step in one of the trees in the item tree family, then the process 975 proceeds to block 984 and identifies the selected step as correct. Returning again to decision state 983, if it is determined that there is not a match between the selected step and any of the trees in the item tree family, then the process 975 proceeds to block 985, wherein the selected step is evolved to its simplified form. In some embodiments, this can be performed by a solver by ingesting the step into the solver. At block 986, the output of the solver and/or the simplified form of the selected step is compared to the item answer for the content item provided in block 976. If it is determined at decision state 987, that there is a match between the item answer in the simplified form of the selected step, than the process 975 returns to block 984 when the selected step is identified as correct.

Alternatively, and returning to decision state 987, if it is determined that there is not a match between the item answer in the simplified form of the selected step, then the process 975 proceeds to block 988, wherein the selected step is identified as incorrect. In some embodiments, and as a part of either marking identifying the selected step as correct or incorrect, the process 975, can include determining whether assistance was provided in association with the selected step. If it is determined that assistance was provided in association with the selected step, then this step can be identified as being associated with assistance. Thus, in some embodiments, a step may be identified as incorrect, correct, incorrect with assistance, correct with assistance, or with assistance. In some embodiments, the identification of the step as incorrect, correct, incorrect with assistance, correct with assistance, or with assistance can be made in the database server 104 and specifically in the user profile database 301.

After one of blocks 984 and 988, the process 975 proceeds to decision state 989, wherein does determined if there are additional steps for evaluation, and specifically whether there are additional steps associated with the item provided in block 976 for evaluation. If it is determined that there are additional steps for evaluation, then a next step and/or one of the previously unselected steps can be selected and the process 975 returns to block 982 and proceeds as outlined above. Alternatively, if it is determined that there are no previously unselected steps for the item provided in block 976, then the process 975 proceeds to block 990, wherein an item score is generated. In some embodiments, the item score can be generated based on a combination of the evaluation results including for some or all of the steps, for example, whether one or several steps are identified as incorrect, correct, incorrect with assistance, correct with assistance, or with assistance, and the evaluation the received answer performed in block 979. In some embodiments, the item score can be generated by the response processor 678.

After the item score is been generated, the process 975 proceeds to block 991, wherein any remediation is identified. In some embodiments, for example, the item score may be sufficiently low that remediation is desired, and/or scores associated with one or several steps may be sufficiently low such that remediation is desired. In such embodiments, the remediation can be identified by determining the attributes associated with the low score and identifying, via the domain graph, one or several content items that are prerequisites to the attributes associated with a need for remediation. In some embodiments, remediation can comprise the presentation of one or several of these content items that are prerequisites to the attributes associated with a need for remediation.

After any remediation has been identified, the process 975 proceeds to block 992, wherein the notifier including information indicative of the item score is generated and sent. In some embodiments, this notifier can be sent in the form of an alert that can be received by the user device 106, and/or the supervisor device 110 can trigger the launching of a portion of the user interface which displays the item score. In some embodiments, the notifier can further comprise the identified remediation including one or several content items identified as the remediation.

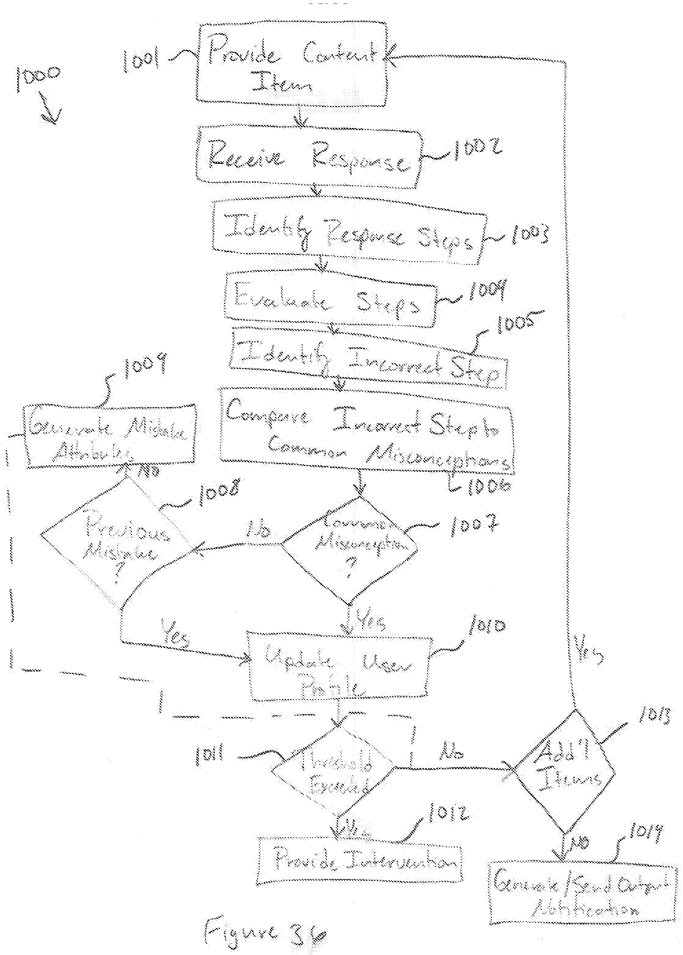

With reference now to **Figure 36****,** a flowchart illustrating one embodiment of a process 1000 for automated misconception identification is shown. The process 1000 can be performed by all or portions the content distribution network, including, for example, the server 102 and specifically the response processor 678, the model engine 682, and/or, the recommendation engine 686. The process 1000 begins a block 1001, wherein a content item is provided to a user, and specifically is provided to a student via the user device 106. After the content item has been provided, the process 1000 proceeds to block 1002, wherein a response to the provided content item is received. In some embodiments, the response to the provided content item can be received by the server 102 from the user device 106 via the communication network 120. After the responses been received, the process 1000 proceeds block 1003, wherein steps in the received response identified. These steps can be identified in the received response. As described with respect to other processes disclosed herein. After steps in the received response. When identified, the process 1000 proceeds to block 1004, wherein the steps are evaluated. In some embodiments, this can include recursively performing the following steps unto all of the steps identified in the received response have been evaluated. These steps can include: Identifying the steps in the received response; selecting one of the steps the received response; evaluating the selected step; in the received response; and associating evaluation data with the selected step in the received response. Evaluation the steps can be performed by the server 102 and specifically by the response processor 678.

After the steps have been evaluated, the process 1000 proceeds block 1005, wherein an incorrect step is identified. In some embodiments, the incorrect step can be identified based on the evaluation, the steps performed in block 1004. After the incorrect step is that identified, the process 1000 proceeds to block 1006, wherein the incorrect step is compared to common misconceptions. In some embodiments, this can include generating a tree for the incorrect step and/or tagging the incorrect step with tags characterizing one or several attributes of the incorrect step and comparing the tree, and/or tags of the incorrect step with one or several trees and/or tags associated with one or several common misconceptions. In some embodiments, the trees and/or tags associated with common misconceptions can be retrieved from the database server 104 and specifically from the evaluation database 308, and/or the content library database 303.

After the incorrect step has been compared to one or several common misconceptions, the process 1000 proceeds block 1007, wherein it is determined if the incorrect step corresponds to a common misconception. If the incorrect step does not correspond to a common misconception, than the process 1000 proceeds to decision state 1008 where it is determined if the user has previously made this same mistake and/or the same type of mistake. In some embodiments, this can again be determined based on a tree, and/or tags associated with the incorrect step and trees and/or tags associated with one or several previous mistakes made by the user. In some embodiments, the determination of whether the incorrect step corresponds to a previous mistake can include a comparison of the trees and/or tags of the incorrect step with trees and/or tags associated with previous mistakes.

If the incorrect step is not associated with the previous mistake, then the process 1000 proceeds block 1009 and mistake attributes and/or mistake profile is generated. In some embodiments, the mistake attributes and/or the mistake profile can comprise the tree, and/or tags indicative of attributes associated with the incorrect step. The mistake attributes can be stored in the database server and specifically in the user profile database. In some embodiments, and as a part of the generating mistake attributes, account can be associated with the mistake, so that the frequency of the mistake can be tracked by incrementing the count every time a similar or the same mistake is identified.

Returning again to decision state 1007, if it is determined that the incorrect step is the result of a common misconception, or returning again to decision state 1008, if it is determined that the incorrect step is incorrect. By way of a previous mistake, then the process 1000 proceeds to block 1010, wherein the user profile of the user from whom the responses received in block 1002 is updated. In some embodiments, this can include incrementing a count associated with the common misconception and/or with the previous mistake. In some embodiments, the updating of the user profile can include the updating of portions of the user profile database 301.

After the user profile has been updated, the process 1000 proceeds to decision state 1011, wherein it is determined if an intervention threshold has been exceeded. In some embodiments, this can include a comparison of the count associated with the common misconception and/or the previous mistake to an intervention threshold. This intervention threshold can be retrieved from the database server 104 and specifically from the threshold database 309. The intervention threshold can delineate between instances in which an intervention is desired and instances in which an intervention is undesired. In some embodiments, the determination of whether the intervention threshold has been exceeded can include a comparison of data associate with the previous mistake and/or the common misconception such as, for example, the count associated with those with the intervention threshold. If it is determined that an intervention is desired, the process 1000 proceeds to block 1012, wherein intervention is selected, generated, and/or provided. In some embodiments, the intervention can be selected, generated, and/or provided, according to processes or steps disclosed, and other locations herein.

Returning again to decision state 1011, if it is determined that an intervention is not desired, then the process 1000 proceeds to decision state 1013, wherein it is determined if there are additional items to provide to the user. If there are additional items, then the process 1000 returns to block 1001, and proceeds as outlined above. Alternatively, if it is determined that there are no additional items, then the process 1000 proceeds to block 1014 and generates and sends an output notification indicative of the of a task, test, assignment, or the like. In some embodiments, this notification can be in the form of the alert they can be sent to the user device 106 and/or to the supervisor device 110. This notification can include information indicative of the performance of the student in responding to the items, mastery level of the student, interventions provided to the student, this is provided to the student, or the like.

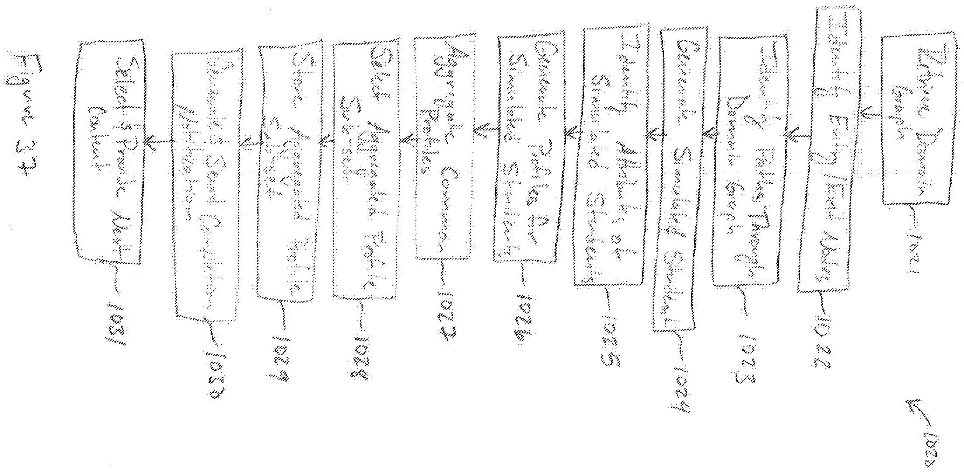

With reference now to **Figure 37****,** a flowchart illustrating one embodiment of a process 1020 for automated next content recommendation is shown. In some embodiments, the process 1020 can be performed by all or portions of the content distribution network 100 including, for example, the server 102. The process begins a block 1021, wherein the domain graph is retrieved and/or receive. In some embodiments, the domain graph can comprise one of the domain graphs generated according to other processes or steps disclosed herein. The domain graph can be received and/or retrieved from the database server 104 and specifically from the content library database 303.

After the domain graph has been received and/or retrieved, the process 1020 proceeds to block 1022 wherein entry and/or exit nodes in the domain graph are identified. In some embodiments, an entry node is identified as a node that has no parents in the next node is identified as a node that has no children. In some embodiments, the step of block 1022 can identify some of the entry and/or exit nodes in the domain graph and/or can identify all of the entry and/or exit nodes in the domain graph. The entry, and/or exit nodes can be identified by the server 102.

After the entry and/or exit nodes of an identified, the process 1020 proceeds to block 1023, wherein paths through the domain graph are identified. As used herein, a path through the domain graph can include a sequence of edges and nodes arranged in a hierarchical order that extends from an entry node to an exit node. In some embodiments, some or all of the potential paths through the domain graph can be identified. These path can be identified by the server 102.

After the passive and identified to the domain graph, the process 1020 proceeds to block 1024 wherein a simulated student is generated. In some embodiments, the simulated student can be generated by a random number generator and/or by the server 102. In some embodiments, a plurality of simulated students, and specifically a large number of simulated students, such as, for example, at least 500 simulated students at least, 1,000 simulated students, at least 5000 simulated students at least 10,000 simulated students, at least 20,000 simulated students, at least 50,000 simulated students, at least 100,000 simulated students, at least 200,000 simulated students, at least 500,000 simulated students, and/or any other or intermediate number of simulated students. After the simulated student has been generated, the process 1020 proceeds to block 1025, wherein one or several attributes of the simulated student are identified. In some embodiments, these attributes can include the one or several paths that the simulated student is on, a number of paths to the simulated student is on, and/or the progress of the simulated student through that path.

After attributes of simulated students have been identified, the process 1020 proceeds to block 1026 wherein profiles for the simulated students are generated. In some embodiments, a single profile can characterize a student's progress along one of the paths in the domain graph. In some embodiments, these profiles can include information relating to student progress along a path and the mastery and/or non-mastery of nodes within the domain graph. Thus, at least one profile is generated for each of the simulated students, and in embodiments one or several the simulated students are on a number of paths, the number of profiles generated for single simulated student can match the number of paths that that simulated student is on. After the profiles have been generated, the process 1020 proceeds to block 1027, wherein profiles are aggregated. In some embodiments, for example, as the number simulated students increases, one or several of the profiles generated for some of simulated students will match one or several profiles generated for others of the simulated students. In some embodiments, an account can be associated with each profile, and/or age group, a profiles, which account can characterize the number of times in that profile was generated for simulated students. The profiles can be aggregated by the server 102.

After the profiles of been aggregated, the process 1020 proceeds to block 1028 wherein a subset of the aggregated profiles is selected. In some embodiments, the subset can comprise the most common of the profiles and/or profiles, associate with the highest count. In some embodiments, for example, the selection of the subset of aggregated profiles can comprise relatively ranking the aggregated profiles to determine the relative frequency with which each of the aggregated profiles occurs. In some embodiments, the subset can comprise the top 5% of the aggregated profiles, at least the top 10% of aggregated profiles, at least top 15% of aggregated profiles, at least the top 20% of aggregated profiles, at least top 30% of aggregated profiles, at least top 40% of aggregated profiles, at least top 50% of aggregated profiles, at least the top 60% of aggregated profiles, at least top 70% of aggregated profiles, at least top 80% of aggregated profiles, at least the top 10 aggregated profiles, at least top 20 aggregated profiles, at least top 50 aggregated profiles, at least the top 100 aggregated profiles, at least the top 200 aggregated profiles, at least the top 500 aggregated profiles, at least the top 1000 aggregated profiles, at least the top 5000 aggregated profiles, it leased the top 10,000 aggregated profiles, at least at the top 50,000 aggregated profiles, and/or any other or intermediate number or percent of aggregated profiles. The subset of aggregated profiles can be selected by the server 102.

After the subset of aggregated profiles is been selected, the process 1020 proceeds to block 1029, wherein the subset of aggregated profiles is stored. In some embodiments, the subset of aggregated profiles can be stored in the database server 104 and specifically in the content library database 303, and/or the model database 309. After the aggregated profiles subset has been stored, the process 1020 proceeds to block 1030, wherein a completion notification is generated and/or sent. In some embodiments, the completion notification can be generated by the server and can be sent to the device of the individual creating the domain graph. In some embodiments, the notification can be sent to, for example, the supervisor device 110. The notification can include code configured to trigger. User interface of the recipient device to display information indicative of the completion of the generation of the domain graph and/or any attributes of the domain graph.

After the completion notification is been generated and/or sent, the process 1020 proceeds to block 1031, wherein next content is selected and/or provided. In some embodiments, this next content is selected and/or provided according to the stored subset of aggregated profiles. In some embodiments, for example, attributes of the student for whom the next content is being selected can be compared to attributes of profiles in the subset of profiles to determine next content. In some embodiments, this next content can be selected by the recommendation engine 686 and can be provided to the student via the user device 106.

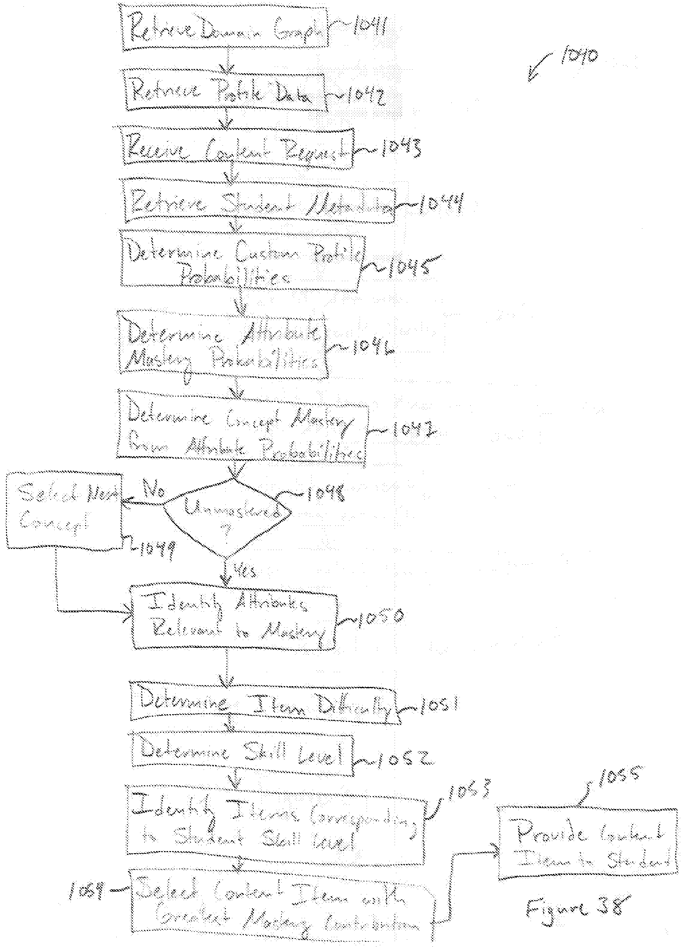

With reference now to **Figure 38****,** a flowchart illustrating one embodiment of a process 1040 for customized next content recommendation is shown. In some embodiments, the process 1040 can be performed by the content distribution network 100 and specifically by the server 102. The process 1040 begins at block 1041, wherein a domain graph is received and/or retrieved. After the domain graph is received, the process 1040 proceeds to block 1042 wherein profile data is retrieved. In some embodiments, the profile data Correspond to the profiles generated, aggregated, selected, and stored in blogs 1026 to 1029 of Figure 37. After the profile data has been received and/or retrieved, the process 1040 proceeds to block 1043, wherein a content request is received, and specifically wherein a content request is received from a user via a user device 106.

After the content request is been received, the process 1040 proceeds to block 1044, wherein metadata for the requester of the content is retrieved. In some embodiments, this metadata can be retrieved from the user profile database 300. One of the database server 104. This metadata can identify attributes of the student requester the content such as, for example, one or several skill levels of the student, mastery levels, learning preferences, preferred or most effective learning styles, or the like. The student metadata can be retrieved common some embodiments, by the server 102.

After the student metadata has been retrieved, the process 1040 proceeds block 1045, wherein one or several custom profile probabilities are determined. In some embodiments, this can include determining a probability of the student being on each of some or all of the profiles for which profile data was received in block 1042. In some embodiments, these probabilities can be determined based on user metadata identifying nodes in the domain graph that have been mastered by the student and/or nodes in the domain graph that are on mastered by the student. This mastery information for the student can be compared to mastery information associated with each of some or all the profiles to identify the profile the most closely matches the students mastery data, and/or to calculate probabilities that, based on the students mastery data, the student is on each of the some or all of the profiles. The custom profile probabilities can be calculated by the server 102, and/or the recommendation engine 686.

After the custom profile probabilities, and been determined, the process 1040 proceeds to block 1046 wherein attribute mastery probabilities are determined. In some embodiments, attribute mastery probability can be determined by calculating attribute mastery probabilities for each attribute of each profile for which a profile probability is calculated, and adding attribute mastery probabilities for the same attribute across all of the profiles for which a profile probability was calculated. After the attribute mastery probabilities have been calculated, the process 1040 proceeds to block 1047, wherein concept mastery is determined based on attribute mastery probabilities. In some embodiments, concept mastery is determined for the concept corresponding to a location of the user in the domain graph. This location of the user in the domain graph can be determined based on the user metadata received and/or retrieved in block 1044. In some embodiments, for example, a concept can be associated with a plurality of attributes. In such an embodiment, the concert mastery can be determined as, for example, the some of the attribute mastery probabilities of attributes associated with that concept. In some embodiments, mastery probabilities can be determined by, for example, the server 102 and specifically, the model engine 682, and/or the recommendation engine 686.

After termination of concept mastery from attribute mastery probabilities, the process 1040 proceeds to decision state 1048 wherein it is determined if the concept of the user's current location in the domain graph is mastered or unmastered. In some embodiments, this determination can include selecting a concept, and determining if the concept mastery is sufficiently high to designate the concept as mastered. If it is determined that the concept is mastered, then the process 1040 proceeds to block 1049, and select the next concepts. In some embodiments, the next concept is a child concept of the determined mastered concept. In some embodiments, this child concept is the child concept identified as the most likely based on the profile probabilities and/or the attribute mastery probabilities calculated in blogs 1045 and 1046.

After the next concept has been selected, and/or returning to decision state 1048, if it is determined that the concept of the user's location the domain graph is on mastered, then the process 1040 proceeds to block 1050, wherein attributes relevant to mastery of the concept are determined. In some embodiments, this can include identifying key attributes for mastery of the concept, which key attributes may be, in some embodiments, associated with the concept. In some embodiments, for example, and as discussed above, attributes may be grouped together. These groupings of attributes can correspond to a concept. In some embodiments, determining attributes relevant to mastery of the concept can include determining attributes that are associated with the concept.

After attributes relevant to mastery concept, and been determined, the process 1040 proceeds to block 1051, wherein items associated with the identified attributes are determined, and wherein the difficulty of those items is determined. In some embodiments, the difficulty of these items can be determined based on metadata associated with the items, which metadata can be stored in the database server 104 and specifically in the content library database 303. After the item difficulty has been determined, the process 1040 proceeds to block 1052, wherein the user skill level is determined. In some embodiments, the user skill level can be determined based on information contained in the student metadata retrieved in block 1044, and in some embodiments, the user skill level can be contained in the student metadata retrieved in block 1044. After the user skill level has been determined, the process 1040 proceeds to block 1053, wherein items having a difficulty level corresponding to the student skill level are identified. In some embodiments, this can include identifying items that have a difficulty level closely corresponding to the skill level of the student.

After these items corresponding to the student skill level have been identified, the process 1040 proceeds to block 1054 wherein the content item having the greatest mastery contribution is identified and selected. In some embodiments, this can include identifying the content item that has a difficulty level adequately matching the student skill level, and that contains the most attributes associated with the concept that the student is currently trying to master and/or the concept at which the student is currently located in the domain graph. After the content item with the greatest mastery contribution is selected, the process 1040 proceeds to block 1055, wherein the content item is provided to the student.

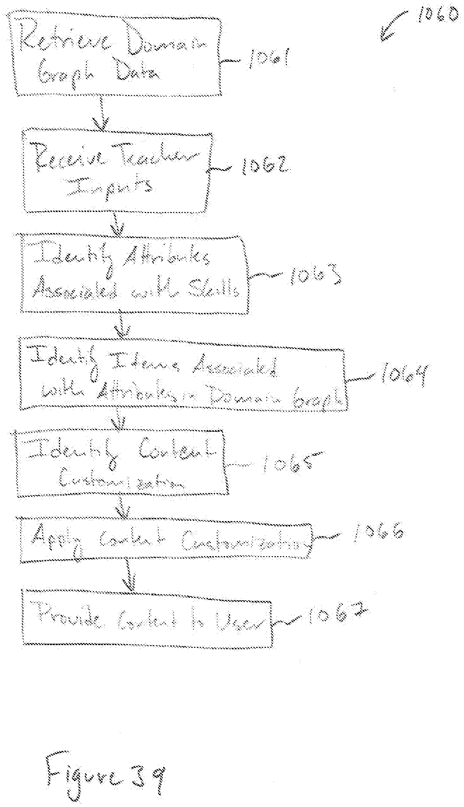

With reference now to **Figure 39****,** a flowchart illustrating one embodiment of a process 1060 for customized directed graph creation based on teacher inputs is shown. In some embodiments, the process 1060 can include the generation and/or customization of the domain graph according to inputs received from the teacher, which inputs can identify, for example, one or several skills and/or attributes that the teacher desires that students master. The process 1060 can be performed by all or portions of the content distribution network 100 including, for example, the processor 102.

The process 1060 begins a block 1061, wherein domain graph data is retrieved. In some embodiments, this domain graph data can comprise the domain graph and/or data relevant to the domain graph. The domain graph data can be retrieved from the database server 104 and specifically from the content library database 303. After the domain graph data has been retrieved, the process 1060 proceeds to block 1062 wherein one or several teacher inputs are received. In some embodiments, these teacher inputs can identify one or several skills for mastery. These teacher inputs can be received by the supervisor device 110 and can be provided to the server 102 via the communication network 120.

After the teacher inputs have been received, the process 1060 proceeds to block 1063, wherein attributes associated with the skills received as a teacher inputs are identified. In some embodiments, this identification can be performed based on information contained in the database server 104 and specifically in the content library database linking skills to attributes. In some embodiments, each of the attributes can correspond to a node within the domain graph, which node may be associated with one or several concepts, and which node may be associated with one or several sub nodes. Each corresponding to a content item. After attributes associated with the skills provided by the teacher have been identified, the process 1060 proceeds to block 1064 wherein items associated with the attributes are identified. In some embodiments, this can include identifying the sub nodes to the nodes of the attributes in the domain graph.

After content items associated with the attributes of an identified, the process 1060 proceeds to block 1065, wherein content customization is identified for one or several of the items identified in block 1064. In some embodiments, for example, a content item may be solvable via a plurality of paths, only some of which paths may correspond with skills identified by the teacher. In such an embodiment, the content item can be customized to direct student solution to paths that correspond with skills identified by the teacher. This can include manipulation of portions of the content item to increase the difficulty of solution paths that do not correspond with skills identified by the teacher, and/or the Association of instructions with the content item, directing solution along paths corresponding to skills identified by the teacher. The content customization can be determined by the model engine 682, and/or the recommendation engine 686. After the content customization has been identified, the process 1060 proceeds to block 1066 wherein the content customization is applied, and then to block 1067, wherein content is provided to the user. In some embodiments, the content provided to the user can include the content customization to direct solution of activity to paths corresponding with skills identified by the teacher.

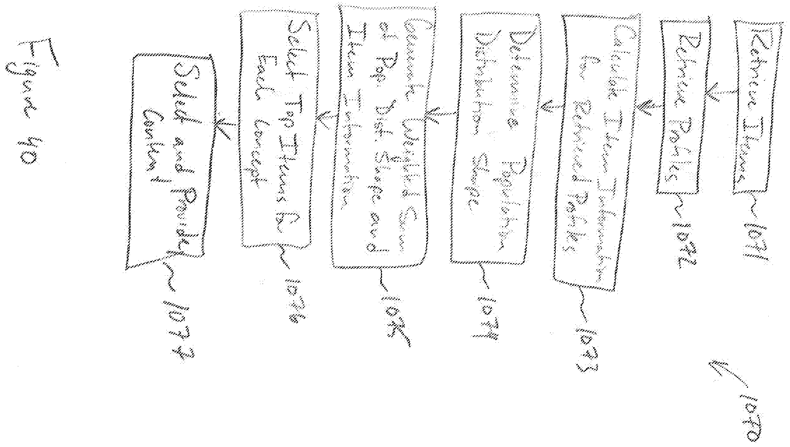

With reference now to **Figure 40****,** a flowchart illustrating one embodiment of a process 1070 for selecting the most informative items in a diagnostic pool for a diagnostic test with no historical data is shown. The process 1070 can be performed by all or portions of the content distribution network, including the server 102 and specifically, the recommendation engine 686. The process begins a block 1071, wherein items are retrieved. In some embodiments, the items are potential items for providing as part of the diagnostic test and the items can be retrieved from the database server and specifically from the content library database 303. After the items have been retrieved, the process 1070 proceeds block 1072, wherein one or several profiles are retrieved and/or received. In some embodiments, the profiles can be retrieved from the database server 104 and specifically from the content library database 303 and/or the model database 309.

After the profiles of been retrieved, the process 1070 proceeds block 1073, wherein item information is calculated for all items and for all profiles. In some embodiments, this item information can include information identifying difficulty, attributes, tree structures, or the like. After the item information has been calculated, the process 1070 proceeds to block 1074 wherein the population distribution shape is determined. In some embodiments, this can include specifying the shape of the population distribution of possible profiles. After the population distribution shape has been determined, the process 1070 proceeds to block 1075, wherein awaited some of the population distribution shape and item information is calculated and/or generated. After the weighted sum of the population distribution shape and item information is calculated and/or generated, the process 1070 proceeds to block 1076 wherein top items are selected. In some embodiments, top items can be selected for each concept that is covered by the diagnostic test. After the top items of been selected, the process 1070 proceeds to block 1077, wherein content is selected and provided to a student as a part of a diagnostic test. In some embodiments, the content can be selected from the top items identified for each concept.

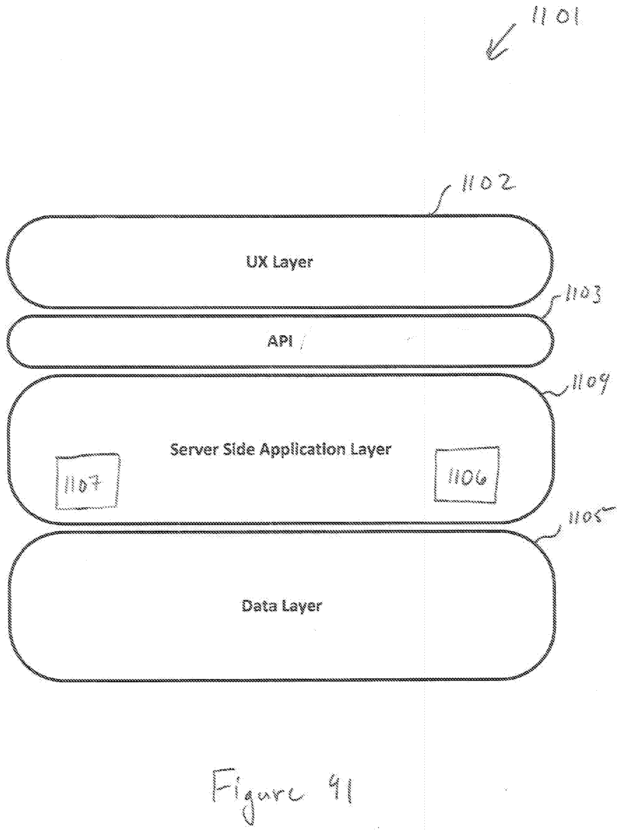

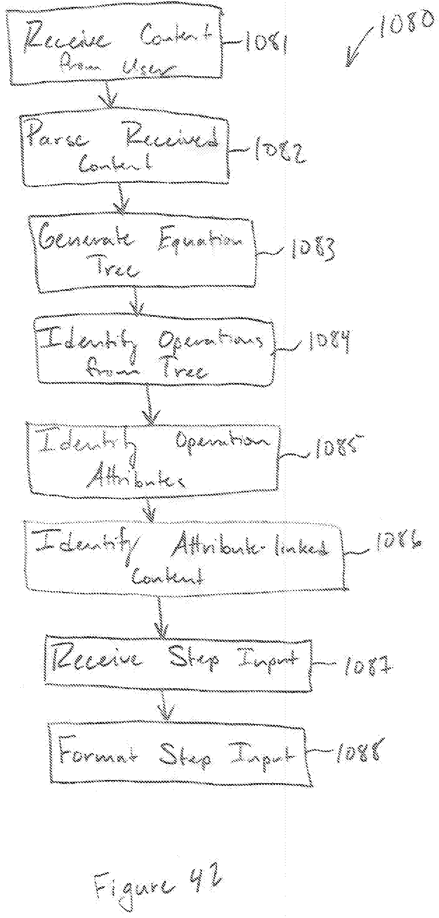

With reference now to **Figure 41****,** a schematic illustration of one embodiment of a software stack 1101 is shown. In some embodiments, this software stack 1101 can be applied to all methods disclosed in this application, and in some embodiments, this software stack 1101 can be used in performing the processes disclosed in Figures 42 through 60. The software stack can include a user interface (UX) layer 1102, an API layer 1103, a server side application layer 1104, and a data layer 1105. In some embodiments, the UX layer 1102 can interact with one or several user devices 106 and/or supervisor devices 110 to generate a provide a user interface to the users via their devices 106, 110. In some embodiments, these devices 106, 110 can access the UX layer 1102 via a persona profile. In some embodiments, each user can have a unique persona profile that can be customized according to user preference, device 106, 110 used by the user, or the like. The persona profile can be locally stored on the device 106, 110 of the user and/or in the database server 104 and specifically in the user profile database 301.

The API layer 1104 can include one or several API's through which devices 106, 110 can interact with the other layers and/or components in the software stack 1101. In some embodiments, the API layer can further include one or several API's through which layers and/or modules within the software stack 1101 interact.

The server side application layer 1104 can include one or several applications for evaluating responses, for parsing received inputs, for recommending next content, or the like. In some embodiments, for example, the server side application layer 1104 can include the recommendation engine 686, the model engine 682, the response processor 678, and/or one or several components of the presentation service 670 including, for example, the presenter module 672. In some embodiments, the server side application layer 1104 can further include a parser module 1106 that can parse received inputs and/or can generate one or several expression trees for each received input. In some embodiments, the server side application layer 1104 can include a translation module 1107. In some embodiments, the translation module can convert one or several received inputs into a language and/or format compatible with the response processor 678, which response processor can comprise the mathematical solver. In some embodiments, this can include for example, receiving an expression tree from the parser module 1106 and identifying equation blocks within the tree. In some embodiments, an equation block can comprise one or several values, variables, and/or numbers linked by an operation.

The data layer 1105 can include all or portions of the database server 104 including, for example, the content library database 303. The data layer 1105, and specifically the content library database 303 can include information associated with attributes and/or skills such as, for example, hints and/or remedial content associated with each skill and/or attribute. The data layer 1105 can be accessed, in some embodiments, via an API in the API layer 1103.

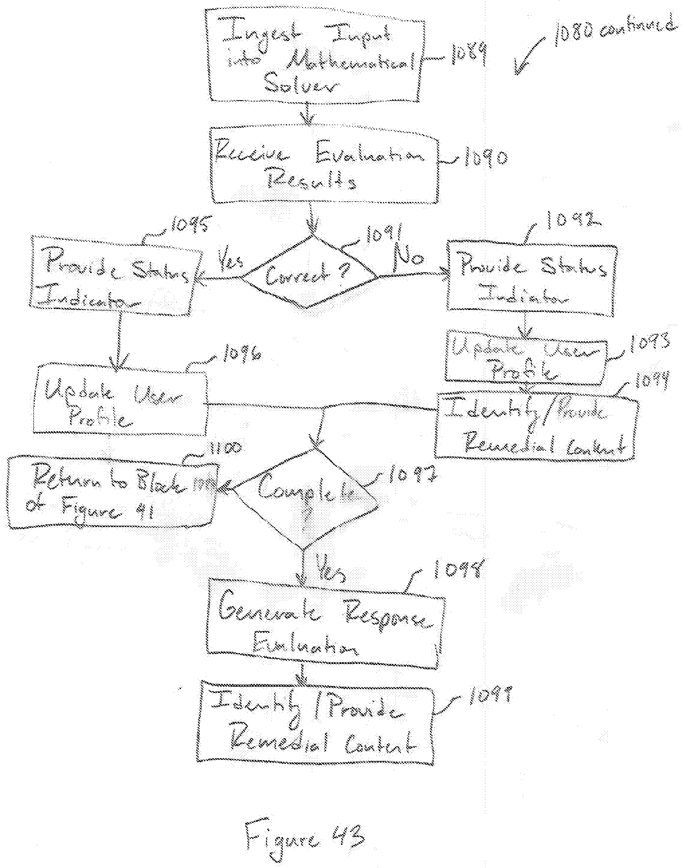

With reference now to **Figures 42** and **43****,** flowcharts illustrating one embodiment of a process 1080 for step-wise response evaluation and remediation is shown. The process can be performed by all or portions of the CDN 100, and can be specifically performed by the server 102 and/or the recommendation engine 686. In some embodiments, the process 1080 can be performed using all or portions of the software stack 1101. In some embodiments, the process can be performed using content received from the user, and specifically from the student-user, and in some embodiments the process 1080 is performed in real time using an expression tree that is generated subsequent to receipt of the content from the student-user, and is not pre-generated.

In some embodiments, the process 1080 can be preceded by a selection of one or several categories corresponding to content provided by the user as a part of the process 1080 and/or selection of one or several categories and one or several subcategories corresponding to the content provided by the users part of the process 1080. In some embodiments, the user can identify one or several categories and/or subcategories that characterize content that the user will provide for use in the process 1080. The selection of category, and/or of one or several subcategories can be used as a part of the process 1082, accurately link attributes identified in content received from the user to one or several skills or attributes. This can include, for example, determining a general skill level of the user based on the identified one or several categories and/or subcategories and matching operations and skills and/or attributes based on that general skill level of the user. In some embodiments, these one or several categories and/or one or several subcategories can be selected by the user via interaction with the user interface of the user device 106.

The process 1080 begins at block 1081, wherein content is received from the user. The content can comprise one or more expressions or equations that can be entered in the field of the user interface. The received content can comprise a problem in a first state, which first state is an unsolved state. In some embodiments, the content input can identify content for step-wise response evaluation. In some embodiments, the content can be entered the user interaction with the user device 106, such as, for example, entering the content via an equation editor, via typing, via use of a mouse, or trackpad, the voice recognition, via touchscreen, via download, or the like. In some embodiments, the entry in the content can include user interaction with the user interface layer 1102 which can communicate with components in the server side application layer 1104 via one or several APIs in API layer 1103.

After user content has been received, the process 1080 proceeds to block 1082, wherein the received content is parsed. In some embodiments, the received content can be parsed by, for example, the parser module 1106, and the server side application layer 1104. In some embodiments, the parsing of the received content can include identification of one or several symbols or characters indicative of one or several operations, one or several values, one or several variables, one or several parameters, or the like.

After the received content has been parsed, the process 1080 proceeds to block 1083, wherein an expression tree is generated. In some embodiments, the expression tree can be generated by the parser module 1106 and can comprise a structural representation of the received content and specifically a structural representation of the result of the parsing of the received content. The expression tree can comprise a plurality of nodes and/or a plurality of leaves. In some embodiments, at least some of the nodes identify operations within the received content, and at least some of the leaves and/or nodes identify values, variables, and/or parameters of the received content. In some embodiments, the expression tree can be generated in real time subsequent to and/or immediately subsequent to the receipt of the content from the user.

After the expression tree hasbeen generated, the process 1080 proceeds to block 1084, wherein operations in the expression tree are identified. In some embodiments, this can include distinction between nodes that identify operation, and those notes identify a variable, a parameter, value, or the like. After operations from the expression tree have been identified, the process 1080 proceeds to block 1085, wherein attributes and/or skills associated with those operations are identified. In some embodiments, this can include querying a database that can be located in, for example, the data layer 1105 for skills and/or attributes associated with one or several operations identified from the expression tree. In some embodiments, these queries can be limited, and/or restricted and/or the response to the queries can be limited, and/or restricted based on one or several categories and/or one or several subcategories identified by the user prior to starting of the process 1080. In some embodiments, a response to the query can be received, which response can include information identifying one or several skills and/or attributes associated with some or all of the operations identified from the expression tree.

After the operation attributes have been identified, the process 1080 proceeds to block 1086 wherein attribute link content is identified. In some embodiments, the attribute link content can comprise supplemental content, hints, suggestions, and/or remediations that can be provided in connection with the content received from the user. In some embodiments, this content can be identified from the database server 104 and specifically from the content library database 301 that can be, in some embodiments, stored within the data layer 1105.

At block 1087, a step input is received. In some embodiments, this step input can be received by the server 102 from the user device 106 and specifically can be received by the user interface, they are 1102 of the server 102 from the user device 106. This step input can comprise a partial response to the problem contained in the content received from the user in block 1081. Specifically, the step input can comprise an input indicative of a step in solving the problem of the received content. In some embodiments, the step input can be associated with a performed operation transforming the problem in the received content from the first state to a subsequent state. The step input can be received by the user interface layer 1102 and can be provided to the server side application layer 1104 via one or several of the APIs in the API layer 1103.

After the step input has been received, the process 1080 proceeds to block 1088, wherein the step input to the translation module 1107, which can translate the step input into a language and/or format compatible with the response processor 678, which response processor can comprise the mathematical solver. After the step input is been formatted, the process proceeds to block 1089 of. Figure 43, when the step input is ingested into the response processor 678 which can include the mathematical solver. In some embodiments, this can include communication via the translation module 1107 and the response processor 678 via one or several APIs stored within the API layer 1103. In some embodiments, the step input can be ingested as a single piece, or is discrete pieces created from the received step input by, for example, the translation module 1107.

After the step input has been ingested into the response processor 678, the step input can be evaluated. In some embodiments, this evaluation can determine whether the step is correct or is incorrect, and/or can determine the degree to which the step as correct or incorrect. In some embodiments, the evaluating of the received step input can comprise identifying the operation performed in transforming the problem from the first state the subsequent state and identifying one or several attributes of that performed attribution.

After the step input has been ingested into the response processor 678, and/or the mathematical solver, the process 1080 proceeds block 1090, wherein evaluation results are received. In some embodiments, these evaluation results can be received from the response processor 678 and/or the mathematical solver. In some embodiments, these evaluation results can identify whether the step as correct, incorrect, whether assistance was used and/or received by the user. In providing the response step, or the like.

After the evaluation result to been received, the process 1080 proceeds to decision state 1091, wherein it is determined whether and/or the degree to which the received step input was correct. This determination can be made based on the evaluation results, received in block 1090. If it is determined that the response is incorrect, then the process 1080 proceeds to block 1092, wherein a status indicator indicative of the incorrect response is provided. In some embodiments, this can include a modification of a portion of the user interface provided to the user to indicate that the step as incorrect. As indicated at block 1093, in some embodiments, the determination that the received step input was incorrect can result in updating of the user profile to indicate the incorrect response. In some embodiments, this can include decreasing the mastery level associated with skills and/or attributes linked with the operation of the step input. The user profile can be updated in the database server 104 and specifically in the user profile database 301. As indicated in block 1094, in some embodiments, the determination of an incorrect response can result in the identifying and/or providing of remedial content to the user. In some embodiments, this remedial content can be identified based on skills and/or attributes associated with the operation of the incorrect step input. This remedial content can be identified from the attribute-link content identified in block 1086. In some embodiments, this content can be automatically provided based on the received step input, and in some embodiments, the remediation content can be provided in response to a received user request for a hint, supplemental content, and/or remediation. In embodiments in which the remediation content is provided in response to a user request, the remediation content can be provided at any point during the process 1080.

Returning again to decision state 1091, if it is determined that the step input is correct, then the process 1080 proceeds to block 1085, wherein a status indicator indicative of the correct response is provided. In some embodiments, this can include a change to a portion of the user interface to indicate that the received step input is correct. In some embodiments, if it is determined that the received step input is correct, user profile data of the user from whom the step input was received can be updated. In some embodiments, this can include increasing the mastery level associated with skills and/or attributes linked with the operation of the step input. The user profile can be updated in the database server 104 and specifically in the user profile database 301.

After updating the user profile, and/or after providing remedial content, the process 1080 can proceed to decision state 1097, wherein it is determined if the problem associate with the received content of block 1081 has been completely solved. In some embodiments, this can include determining whether further steps are required to solve the problem. If it is determined that the problem is not complete, than the process proceeds to block 1100 and returns to block 1087, of Figure 42. Returning again to decision state 1097, if it is determined that the problem is completed, then the process 1080 proceeds to block 1098, wherein a response evaluation is generated. In some embodiments, this can include retrieving information identifying evaluation for each of the step, inputs provided as a part of responding to the problem of the received content. In some embodiments, the response evaluation can be based on the number of correct steps, the number of incorrect steps, and/or the number of steps for which assistance was provided to the user. This response evaluation can be used to update the user profile the user, and specifically to update mastery levels of skills and/or attributes associated with steps in responding to the problem of the received content.

After the response evaluation has been generated, the process 1080 proceeds block 1099, wherein remedial content is identified and provided. In some embodiments, the remedial content can be identified and/or provided based on skills and/or attributes associated with one or several steps incorrectly responded to by the user. The remedial content can be identified by the recommendation engine 686, which can be located in the server-side application layer 1104, and the remedial content can be provided to the user via the presentation service 670, located in the server-side application layer.

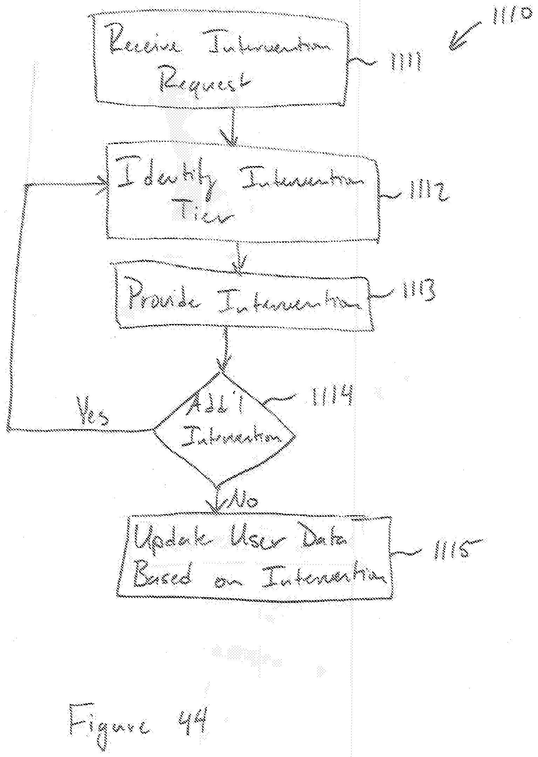

With reference now to **Figure 44****,** a flowchart illustrating one embodiment of a process 1110 for identifying and/or providing remedial content is shown. The process 1110 can be performed in connection with some or all of the steps of the process 1080. The process 1110 begins a block 1111, wherein an intervention request is received. In some embodiments, the intervention request can be received from the user via an interaction with the user interface and the user interface layer 1102 indicative of an desire for an intervention, hint, remediation, or the like. After the intervention request is been received, the process 1110 proceeds to block 1112, wherein an intervention tier is identified. In some embodiments, this can include identifying potential remediation content, which potential remediation content can be content associated with skills and/or attributes for which the user is requesting intervention. In some embodiments, remedial content, and/or an intervention can come in one of at least three tiers. These tiers can include a first tier directed to high-level theory associated with the skills and/or attributes of the step for which the user is requesting intervention, a second tier directed to a specific explanation of the process for applying the theory to the specific step for which intervention is requested, and a third wherein the step is automatically solved and the solution process is shown and explained. In some embodiments, the intervention tier can be identified based on the user profile indicating previous interventions provided in the skills and/or attributes associated with those previous interventions. In some embodiments, for example, the first time a user requests an intervention for a skill, an attribute and/or for a step, the provided intervention is a first tier intervention, the second time a user requests an intervention for a skill, an attribute, and/or for a step, the provide intervention is a second tier intervention, and the third time a user requests an intervention for a skill, an attribute, and/or for a step, the provided intervention is a third tier intervention. Thus, in some embodiments, the tier of the intervention can increase as further assistance is requested by the user. Similarly, in evaluating the step for which intervention is received, the degree of correctness of the response can decrease with provided intervention and can decrease as the tier of the intervention increases.

After the intervention tier has been identified, the process 1110 proceeds to block 1113, wherein an intervention is selected and provided. In some embodiments, the intervention can be selected from the identified intervention tier, and the intervention can be provided to the user via the user device. After the intervention has been provided, the process 1110 proceeds to decision state 1114 wherein it is determined if an additional intervention is requested. If an additional intervention is requested and/or is desired, then the process 1110 returns to block 1112, and proceeds as outlined above. If an additional intervention is not requested, than the process 1110 proceeds to block 1115, wherein user data, and/or user profile is updated based on the provided intervention. In some embodiments, the user data, and/or user profile can be updated in the database server 104 and specifically in the user profile database 301.

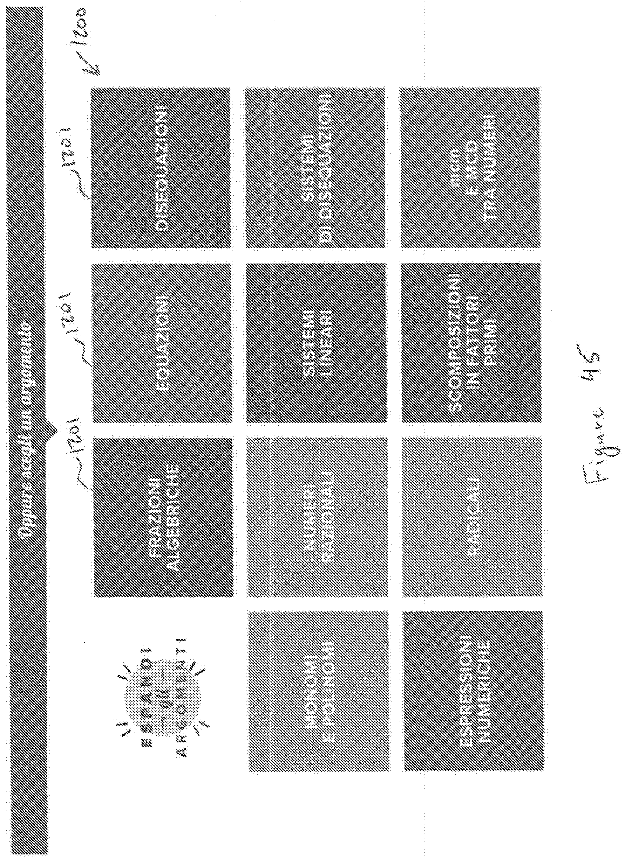

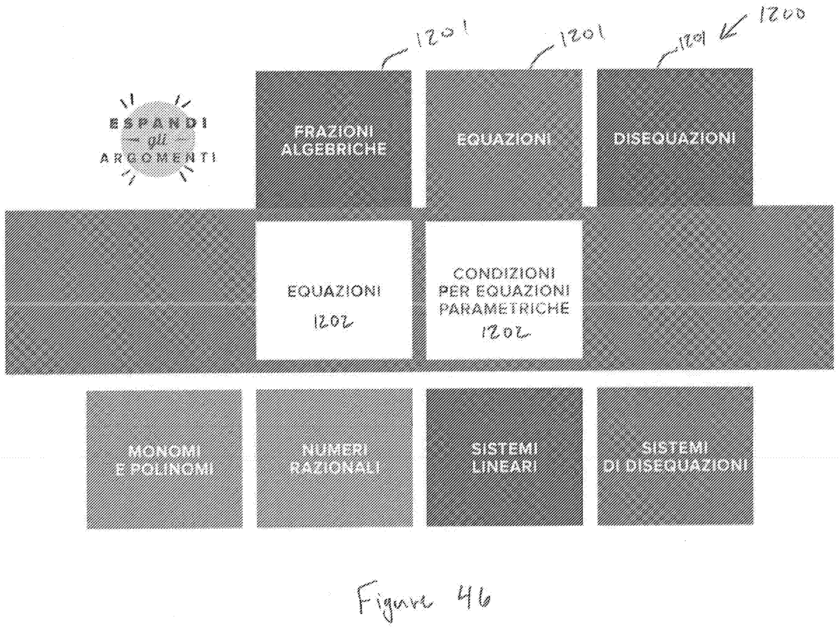

With reference now to Figures 45 through 53, embodiments of the user interface for stepwise response evaluation and remediation are shown. In some embodiments, the user can progress through the user interface according to the steps in process 1080. In **Figure 45****,** one embodiment of the user interface including a category window 1200 is shown. In some embodiments, the category window 1200 displays a plurality of categories 1201, which can be selected, along with one or several subcategories, before the performing of process 1080. The category window 1200 and the categories 1201 are also shown in **Figure 46****.** As further seen in Figure 46, selection of a category 1201 can result in the display of one or several subcategories 1202 associated with that category, one or more of which one or several subcategories 1202 can then be selected by the user.

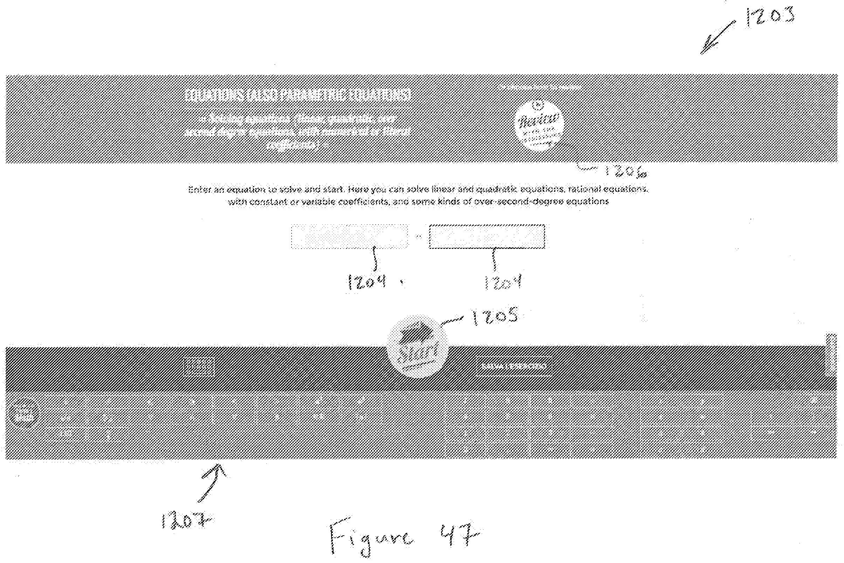

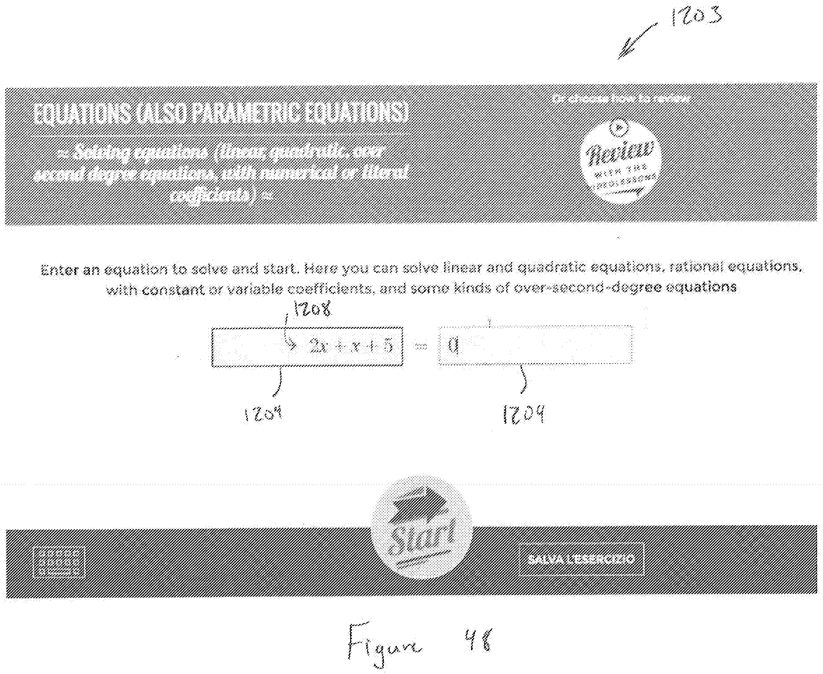

**Figure 47** depicts one embodiment of the content receipt window 1203, which can include content input frames 1204 in which the content of block 1081, of Figure 42 can be received, a start button, which can trigger a parsing and generation of an expression tree based on content entered into the content input frames 1204, an input button 1205, an intervention button 1206, and an equation editor 1207. In some embodiments, manipulation of the intervention button can result in the providing of remedial and/or supplemental content they can be associated with content inputted into the content input frames 1204. In some embodiments, the equation editor, 1207 can be used to enter content into the content input frames 1204. An additional embodiment of the content receipt window 1203 is shown in **Figure 48****.** In Figure 48, content 1208 is entered into the content input frames.

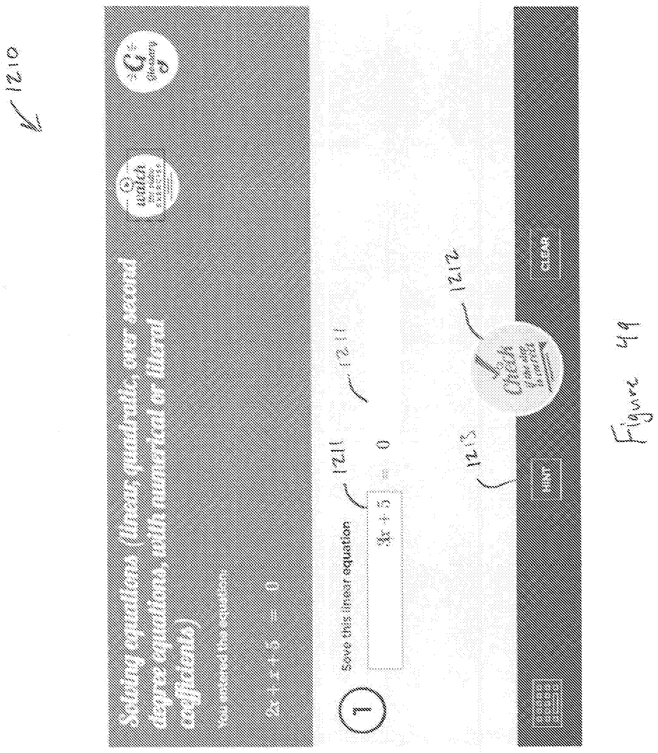

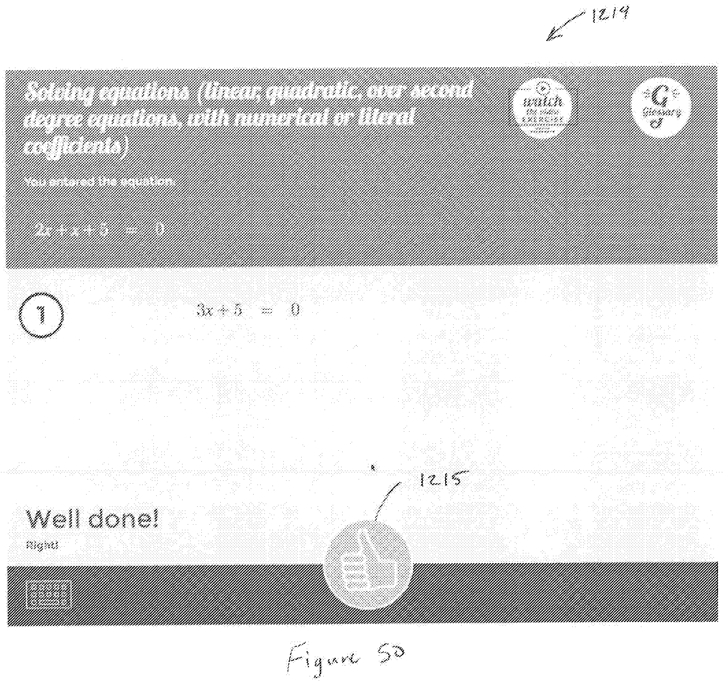

After the content has been inputted into the content input frames 1204 and the input button, 1205 has been manipulated, the user interface can advance to a step input window 1210 as indicated in **Figure 49****.** The step input window 1210 can include step input panels 1211, step completion button 1212, and assistance button 1213. In some embodiments, manipulation of the assistance button can result in the providing of an intervention according to the process 1110 of Figure 44. In some embodiments, the step input can be inputted by the user into step input panels 1211, and the step completion button 1212 can be manipulated to signal completion of the inputting of the step input. After the manipulation of the step completion button 1212, the step input can be evaluated and the user interface can be updated with an indication of the result of the evaluation of the step input, which result can show the step input was correct, was incorrect, and/or can show the degree to which the step input was correct. In **Figure 50****,** the step evaluation output window 1214 is shown, which includes a status indicator 1215, which can indicate the correctness, incorrectness, and/or degree of correctness of the received step input. In the embodiment of Figure 50, the status indicator 1215 indicates that the received step input was correct.

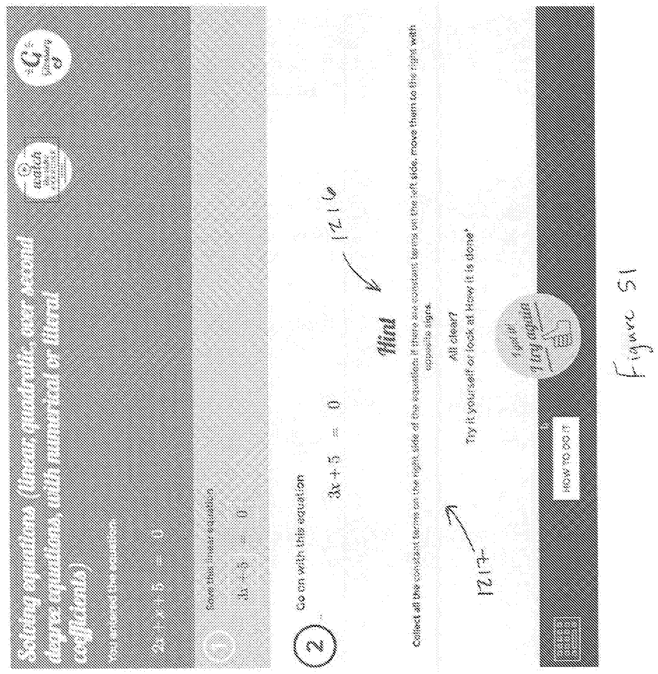

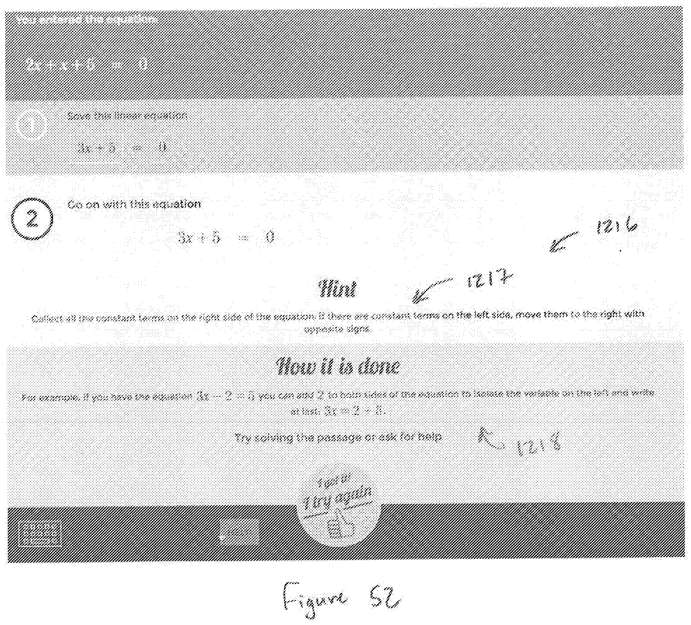

Further step inputs can be provided until the problem associate with the received content is solved. In some embodiments, this can include one or several user requests for hints. In some embodiments, a requested hint can be provided to the user in a hint window 1216. This hint can be a first level hint 1217 as shown in the hint window 1216 of **Figure 51****,** a second level hint 1218 as shown in the hint window 126 of **Figure 52****,** and/or a third level hint. As depicted in Figures 51 and 52, in some embodiments in which higher tier hints are provided, the hint window 1216 can display the lower tier hints in addition to the highest tier hint. Thus, the hint window 1216 of Figure 52 includes the first level hint 1217 and the second level hint 1218.

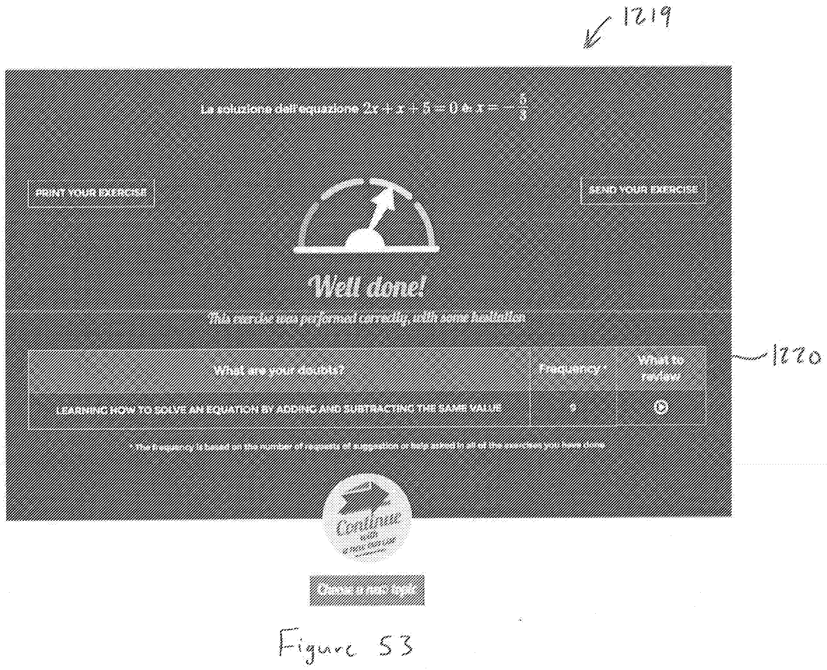

After all of the steps to solve the problem associated with the received content have been completed, the response evaluation window 1219 can be generated as shown in **Figure 53****.** In some embodiments, the result of the response evaluation can be displayed in the response window 1219. Specifically, the response window 1219 can include a graphical depiction of the evaluation, the response, and/or of the steps, forming, the response to the received content. This graphical indication can be in the form of a gauge. In some embodiments, the response evaluation window 1219 can include an intervention panel 1220, which can identify one or several skills or attributes for remediation, can identify a frequency of assistance requested. In connection with the one or several skills or attributes, and can provide a link content for this remediation.

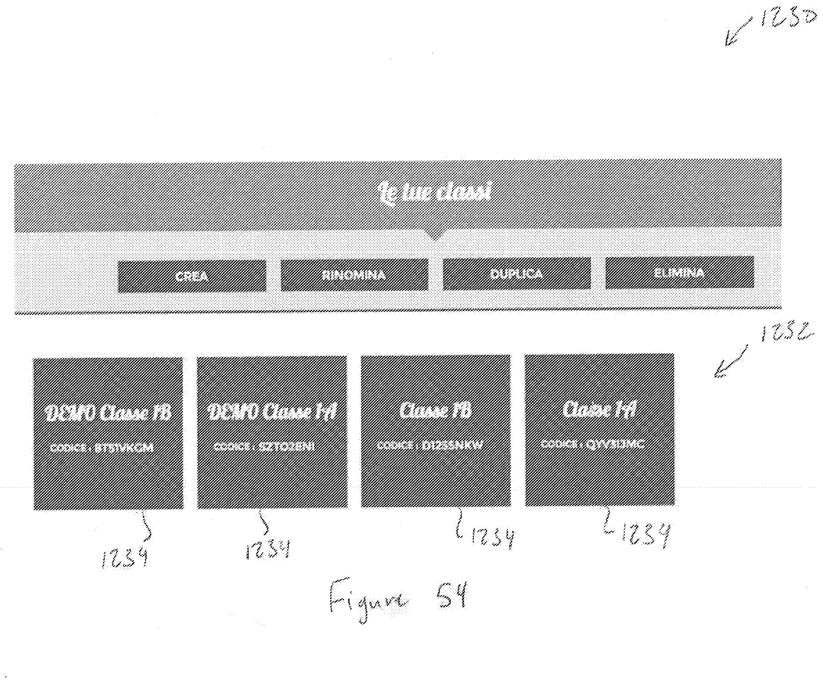

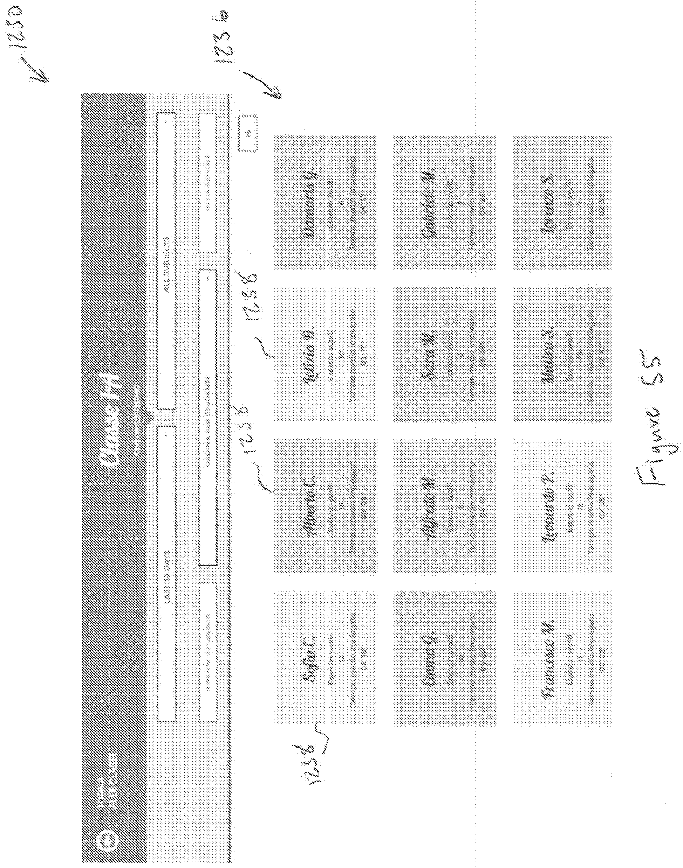

With reference now to Figures 54 through 60, screenshots of an embodiment of a teacher interface 1230 or shown. As seen in **Figure 54****,** the teacher interface 1230 can include a class display window 1232, which can include icons 1234, representing classes taught by a teacher. In one of these icons is selected, the teacher interface 1230 proceeds to the course window 1236 shown in **Figure 55****,** wherein student icons 1238 identifying individual students and the selected class, or shown. In some embodiments, the student icons 1238 can include information relevant to the student, the student's progress, and difficulties the student as having. In some embodiments, these icons can be color-coded based on the student's progress, and/or the student skill level.

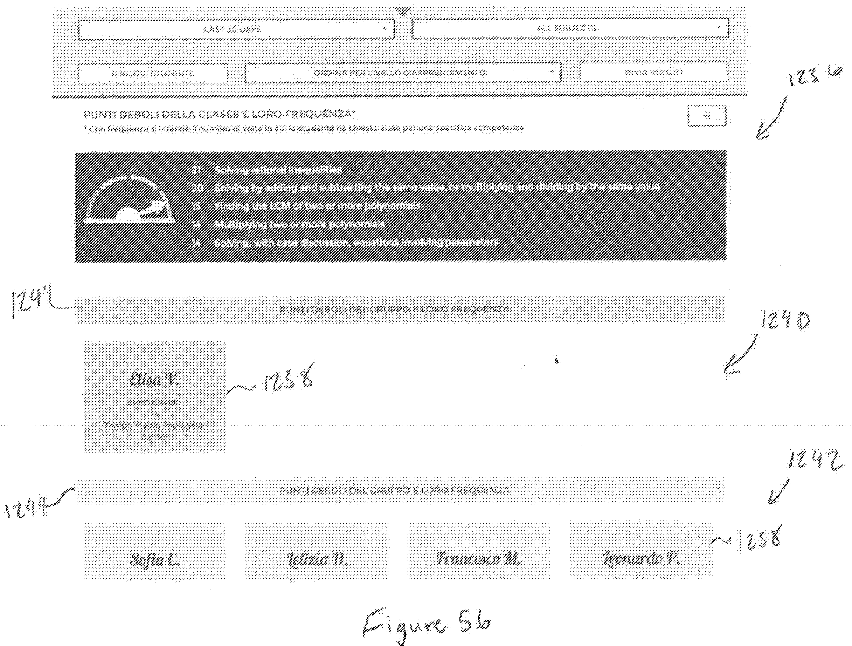

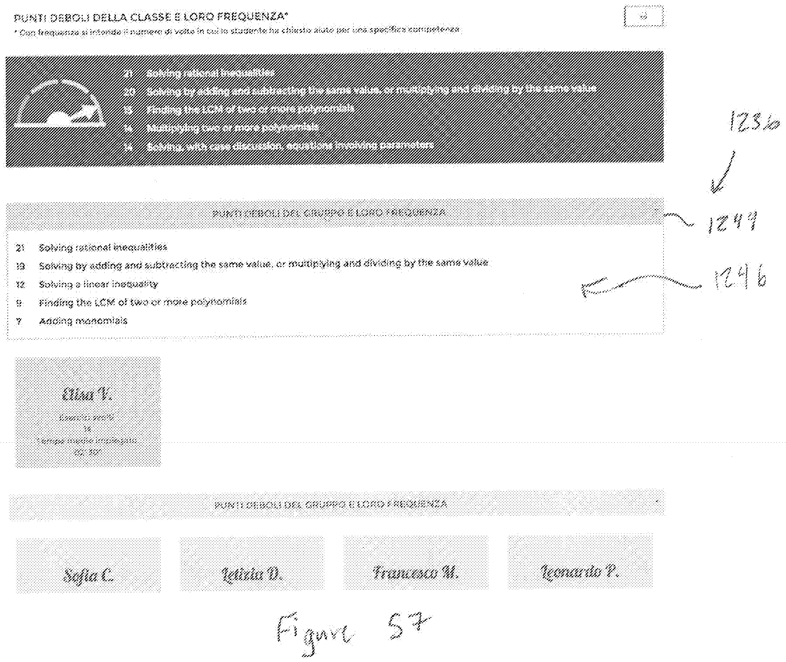

As seen **Figure 56****,** the course window can be controlled so as to group display students in groups according to an attribute of the student. Specifically, as seen in Figure 56, the student icons 1238 are grouped into a first group 1240, and into a second group 1242. Each of these groups is associated with a group bar 1244 identifying the group to which associated student icons 1238 belong. As seen in **Figure 57****,** wherein the group bar 1244 is manipulated, the group bar 1244 can expand to identify one or several skills and/or attributes 1246 with which students in the group associated with the manipulated group bar 1244 are struggling.

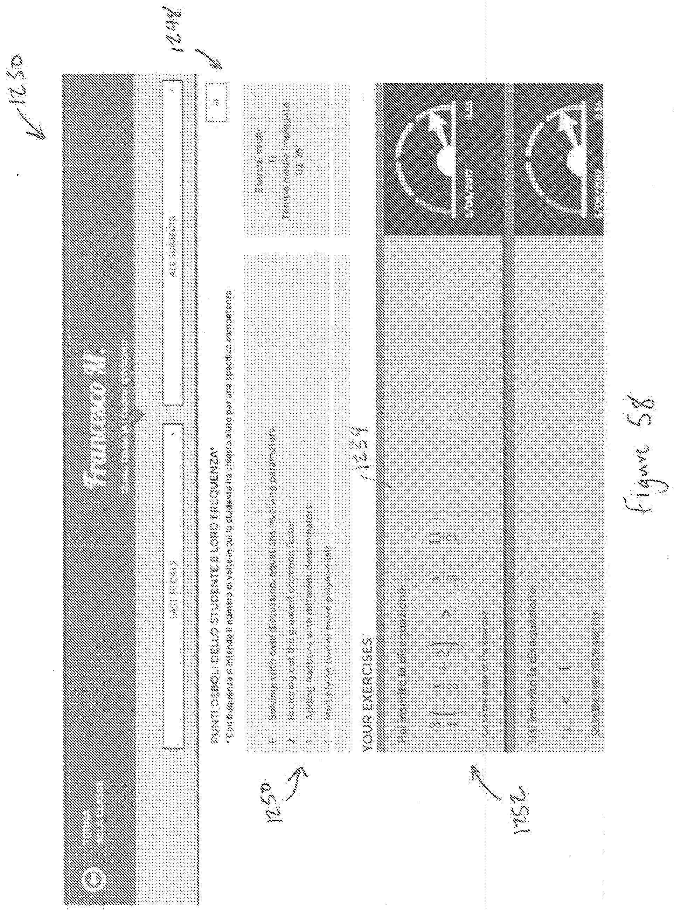

Manipulation of one of the student icons 1238 results in the teacher interface 1230 displaying a student window 1248, that includes information relevant to the student associated with the manipulated one of the student icons 1238. This information can include a challenge window 1250 that can identify one or several skills or attributes with which the student is struggling, and an exercise window 1252, identifying one or several exercises and/or pieces of content that the student has completed. In the embodiment of **Figure 58****,** each of these one or several exercises and/or pieces of content are represented by a manipulable content field 1254. The content field 1254 can include information relating to the piece of content and the result of the evaluation of the response provided to that piece of content.

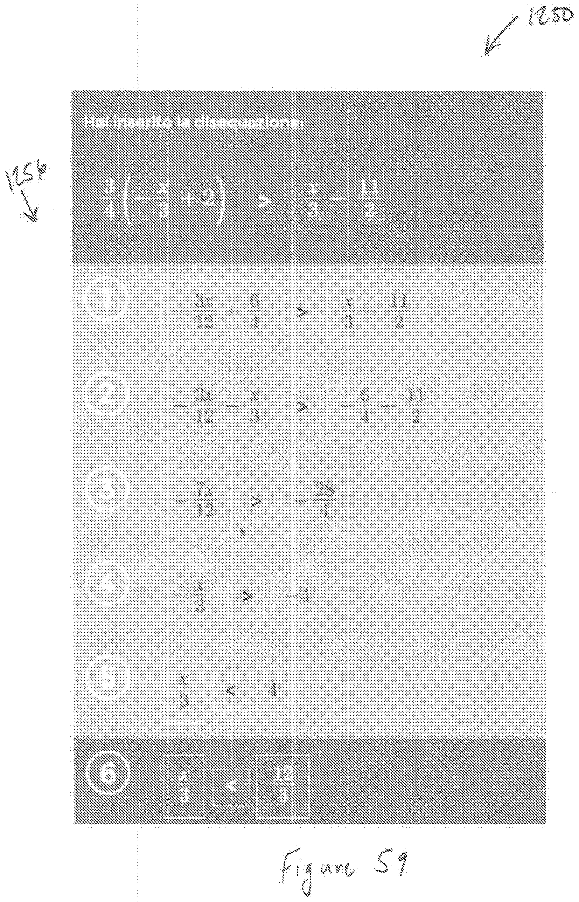

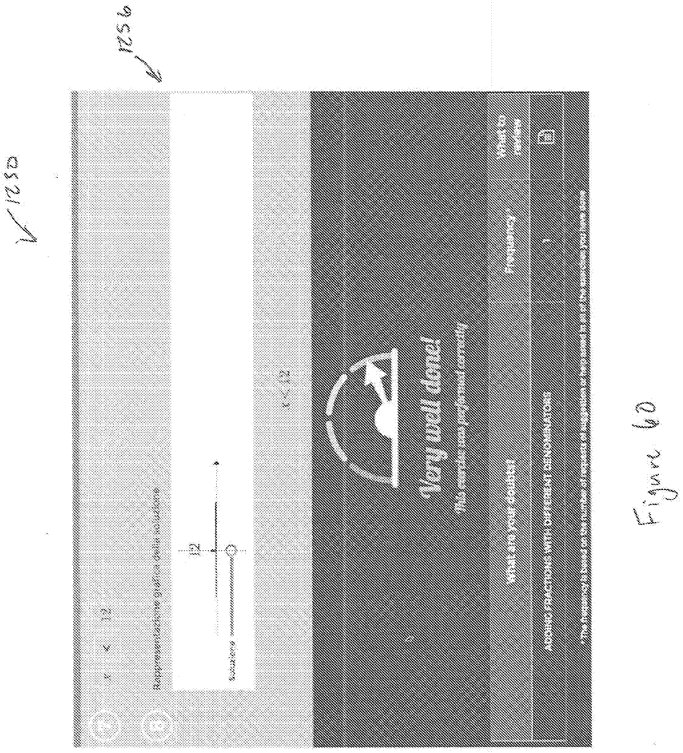

Manipulation of one of the content fields 1254 results in the teacher interface 1230 displaying an item window 1256 as shown in **Figures 59** and **60****.** The item window 1256 displays detailed information for the selected one of the content items, and specifically identify steps provided by the student and the result of an valuation of each of those steps. The item window 1256, further displays a graphical indicator of the response evaluation, and information identifying one or several skills or attributes for which improved performances desired.

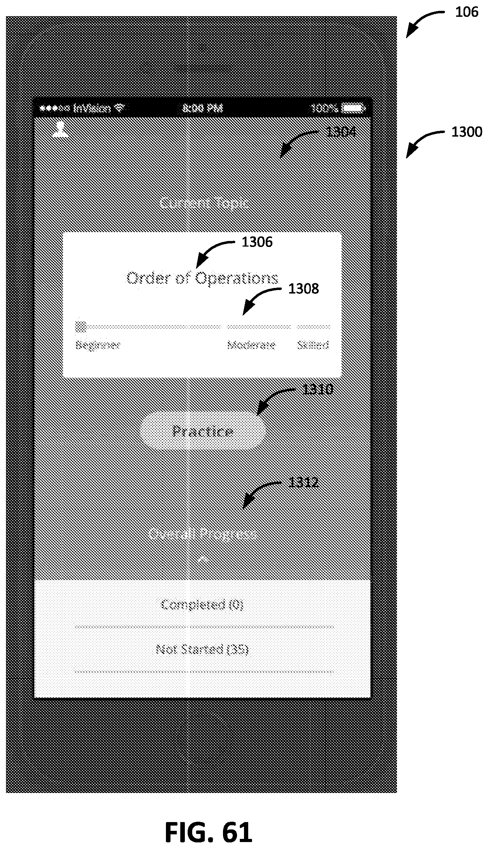

With reference now to Figures 61 through 73, embodiments of a user experience with a user device 106 delivering content is shown. The user device 106 can be any device, and specifically, as shown in Figure 61, the user device 106 can comprise a computing device such as a hand-held computing device, and specifically such as a smartphone or tablet. The user of the user device 106 can use the user device 106 to access content to facilitate learning and/or mastery of all or portions of the accessed content, of one or several learning objectives, or the like. In some embodiments, the content accessed by the user via the user device 106 can be math content, and specifically can be developmental math content, advanced math content such as, for example, calculus, differential equations, linear algebra, trigonometry, or the like.

The user can access the content with the user device 106 via a user interface 1300 that can be displayed to the user of the user device 106 via the I/O subsystem 526 of the user device 106, which I/O subsystem 526 can include, for example, the user interface input and output devices 530, which can include, for example, the screen 1302. The screen 1302 can be controlled by the I/O subsystem 526 to display the user interface 1300, which user interface 1300 can be in the form of one displays, which are depicted as screenshots in Figures 61 through 73.

Figure 61 depicts one embodiment of a screenshot of the user interface 1300, and specifically of a progress screenshot 1304. The progress screenshot 1304 indicates a topic 1306 and a user's progress through the topic, exercise, and/or learning objective, and/or the user mastery level of the topic, exercise, and/or learning objective. In the embodiment of Figure 61, this mastery is depicted via a progress bar 1308, which indicates a user's progress through mastery levels of "Beginner", "Moderate", and "Skilled". The progress screenshot 1304 further includes a user-manipulable launch button 1310 configured to launch a practice session, and a progress report window 1312, wherein user progress through a topic, exercise, and/or learning objective is indicated. In some embodiments, this can include an indication of completed and/or uncompleted questions, content, or the like associated with the topic, exercise, and/or learning objective.

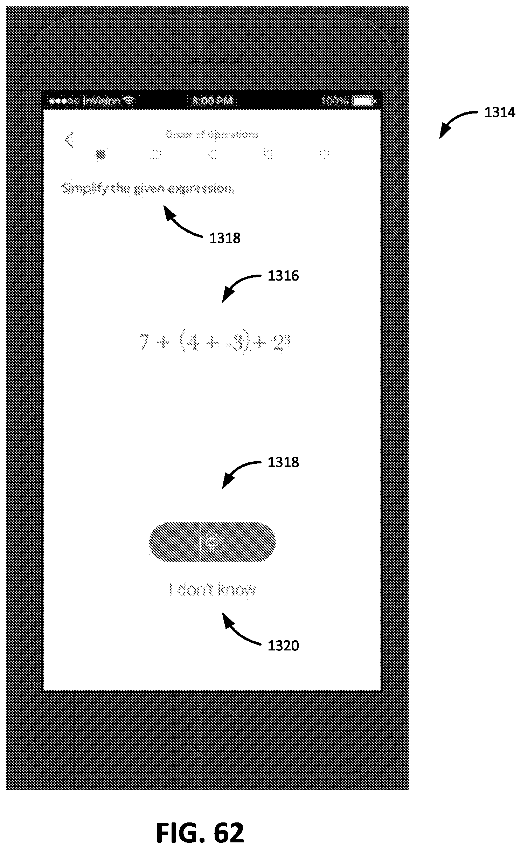

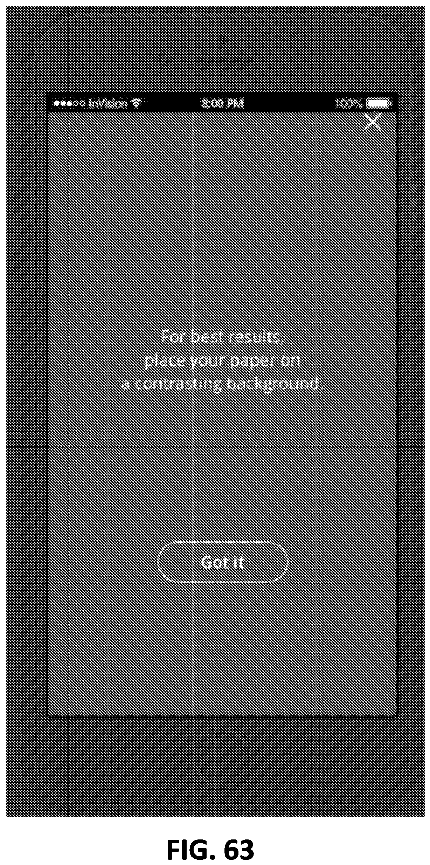

In some embodiments, manipulation of the launch button 1310 in the progress screenshot 1304 can result in the user interface 1300 advancing to a question display as shown in question screenshot 1314 of **Figure 62****.** The question screenshot 1314 can include a question 1316, which can comprise one or several characters, a text string, a video clip, an audio clip, or the like. The question 1316 can be selected according to one or several of the algorithms for content selection outlined herein. In some embodiments, the question screenshot 1314 can further include a prompt directing the user to take an action in response to the question 1316. The question screenshot 1314 can further include a photo button 1318, that when manipulated can cause the user device 106 to capture photo data, and the question screenshot 1314 can include a help button 1320, that when manipulated provides the user content assisting in the solving the question 1316. In some embodiments, manipulation of the photo button 1318 can cause the user interface 1300 to provide a prompt to the user to facilitate in the creation of the photo data. In some embodiments, this prompt, as shown in **Figure 63****,** can indicate that the best photo can be created when a paper containing solution steps and/or a solution to the question 1316 is placed on a contrasting background.

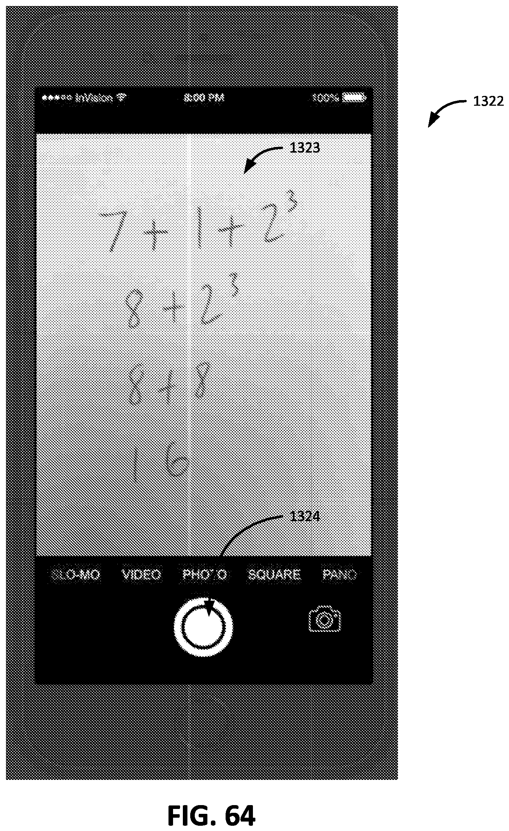

In some embodiments, manipulation of the photo button 1318 can advance the user interface 1300 to the photo screen 1322 as shown in **Figure 64****.** In some embodiments, the photo screen 1322 can provide a preview 1323 of the photo data to be generated when the shutter button 1324 is manipulated. Upon manipulation of the shutter button 1324, photo data is generated. This photo data can be evaluated, in some embodiments by the user device 106, to identify response steps and to convert these response steps to a machine readable format and/or file. In some embodiments, this can include, for example, Optical Character Recognition (OCR). In some embodiments, the identifying of these steps and/or the conversion of these response steps can be performed according to one or several of the algorithms disclosed herein.

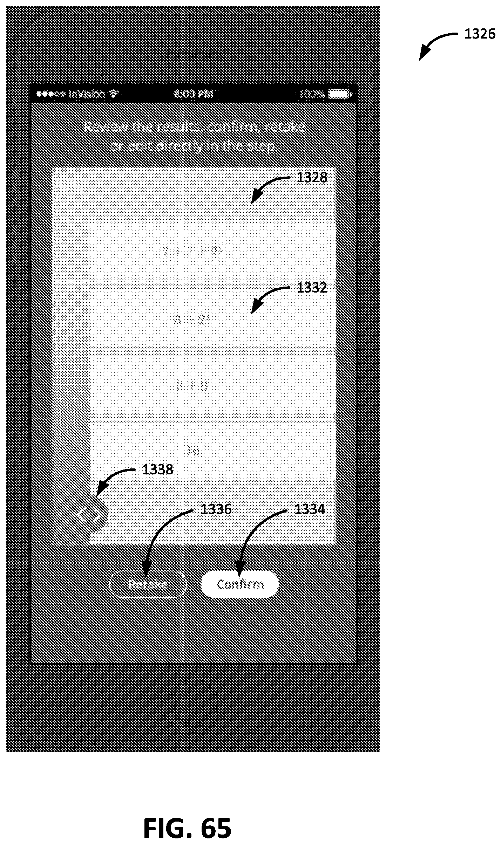

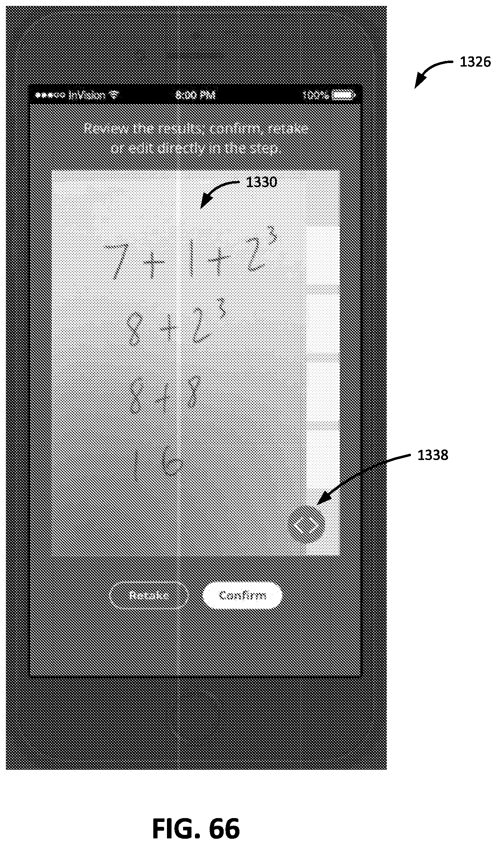

Upon conversion of the response steps, an evaluation screen 1326 can be generated and displayed to the user. The evaluation screen 1326 is shown in **Figures 65** **and** **66****,** and can include a conversion pane 1328 and a raw pane 1330. In some embodiments, the raw pane 1330, shown in Figure 66 can include the raw photo data, and in some embodiments, the conversion pane 1328, shown in Figure 65, can show the converted photo data, and specifically can show the photo data as divided into steps. In some embodiments, each of the steps can be displayed within a box 1332 in one or both of the conversion pane 1328 and the raw pane 1330. In some embodiments, the evaluation screen 1326 can further include a confirmation button 1334, that, when manipulated, generates and/or stores a confirmation of the accuracy of the conversion of the photo data. In some embodiments, the evaluation screen 1326 can further include features configured to allow the user to modify all or portions of the content of the conversion, which content can be, for example, shown in the conversion pane 1328. In some embodiments, for example, this can include features configured to allow the user to select text, which text can, in some embodiments, be shown in the conversion pane, and modify the selected text. In some embodiments, and subsequent to the selecting of text, all or portions of the text, including, for example, all or portions of the selected text can be shown in an equation editor, which equation editor can be used to modify all or portions of the selected text. The evaluation screen 1326 can further include a retake button 1336 that when manipulated enables the regenerating of the photo data.

In some embodiments, the evaluation screen 1326 can include a slider 1338 that can be manipulated to control switching between panes 1328, 1330 in the evaluation screen 1326. In some embodiments, the slider can be mode left to right and/or from right to left to move from one of the conversion pane 1328 and the raw pane 1330. Through the use of the slide 1338, the user can compare the contents of the raw pane 1330 to the contents of the conversion pane 1328 to determine the accuracy of the conversion.

In some embodiments, the accuracy of the conversion can be evaluated via use of the slider 1338, whereas in some embodiments, the accuracy of the conversion can be evaluated via the toggling between panes 1328, 1330, via the overlaying of content from the panes 1328, 1330, via the simultaneous display of the panes 1328, 1330, or the like.

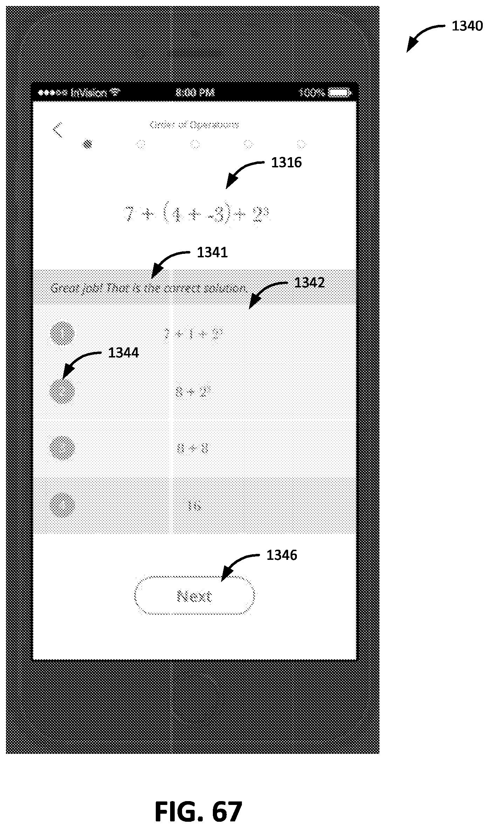

Upon confirming the accuracy of the conversion, the user interface 1300 can advance to the results screenshot 1340 as shown in **Figure 67****.** The results screenshot 1340 can display the question 1316, the correctness of the user provided answer with a correctness indicator 1341, The correctness indicator 1341 can display whether the answer provided by the user is correct or incorrect. The results screenshot can further display the answer provided by the user, and specifically, the answer captured in photo data generated by the user and broken into steps. In some embodiments, these steps can be identified in a step display 1342, which step display 1342 can display each of the steps in the solving the question. The step can be identified according to one or several algorithms disclosed herein. The results screenshot 1340 further includes stepwise correctness indicators 1344. In some embodiments each stepwise correctness indicator 1344 can be associated with one of the steps of the answer captured in the photo data. In some embodiments, the stepwise correctness indicator 1344 can indicate whether the associated step is correct and/or whether the response to the question 1316 is correct. In some embodiments, the stepwise correctness indicators 1344 can be used to indicate the incorrectness of one or several incorrect steps in the response provided by the user. Finally, the results screenshot 1340 can include an advance button 1346 that can be manipulated to cause the delivery of a next question content, or the like and/or to cause the user interface 1300 to advance to an insight screen 1348.

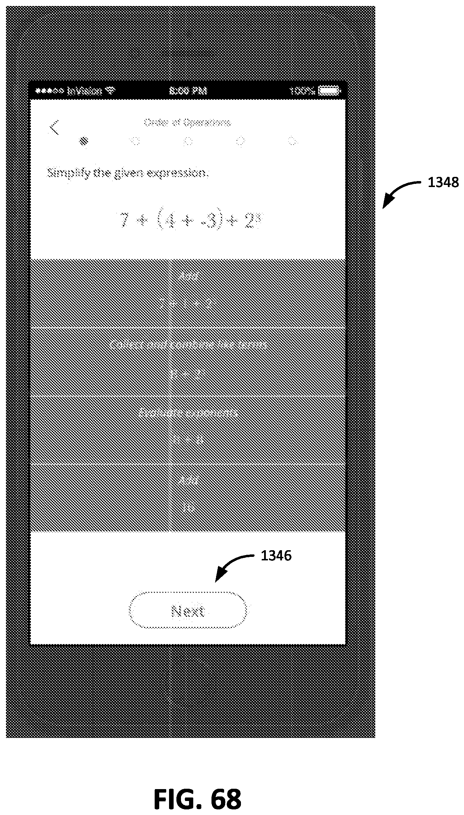

In some embodiments, the insight screen 1348 can identify the correct answer to the questions 1316, as indicated in **Figure 68****,** and can provide information identifying steps for correctly responding to the questions 1316. In some embodiments, this can include providing a listing of steps for correctly responding to the question 1316 and providing a brief explanation as to the substance of the steps. In some embodiments, the listing of steps can include, for example, correct steps performed by the user. The insight screen 1348 can further include an advance button 1346 similar to the advance buttons discussed above with respect to Figure 67.

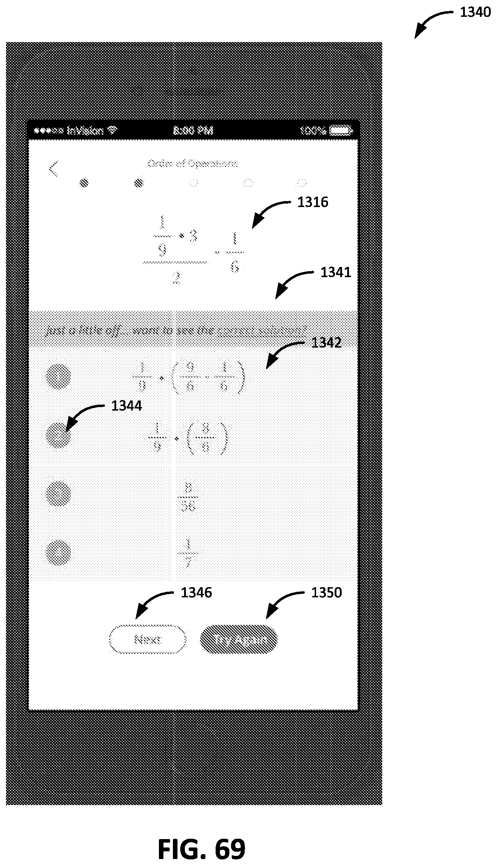

An alternative embodiment of the results screenshot 1340 is shown in **Figure 69****.** In this embodiment, the provided response is incorrect, as indicated by the correctness indicator 1341. As further seen in Figure 69, the stepwise correctness indicators 1344 indicate incorrect steps. The embodiment of the results screenshot 1340 of Figure 69 further includes an advance button 1346 similar to the advance buttons 1346 of Figures 67 and 68, and a retry button 1350 that can provide an additional chance to the user to solve the question 1316.

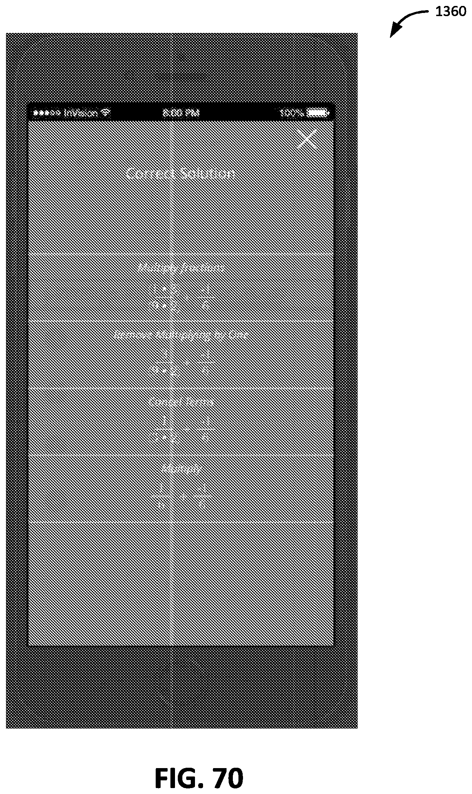

In some embodiments, a user can request the solution to a provided question 1316. In some embodiments, the user can request the solution to a provided questions 1316 subsequent to the incorrect response to the question 1316. In some embodiments, the solution can be provided via a display of the solution screenshot 1360 as shown in **Figure 70****.** In some embodiments, the solution screenshot 1360 can display the steps for solving the question 1316 and can provide an explanation of these steps. In some embodiments, the solution can be completely provided, and in some embodiments, the solution can be partly provided. In some embodiments, for example, the steps can be simultaneously provided, and in some embodiments, the steps can be provided one after another.

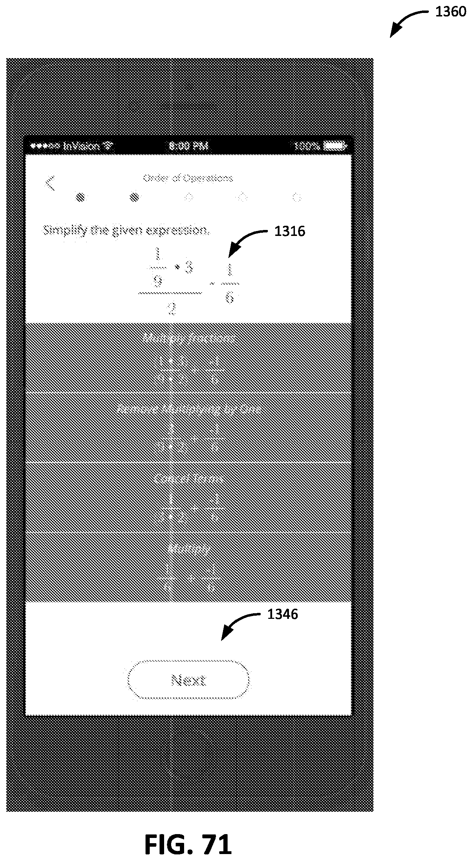

In some embodiments, the solution can be provided in the format indicated in **Figure 71****.** In this embodiment, the solution screenshot 1360 can include the question 1316 and the solution steps. In some embodiments, the solution screenshot 1360 can further include the action button 1346.

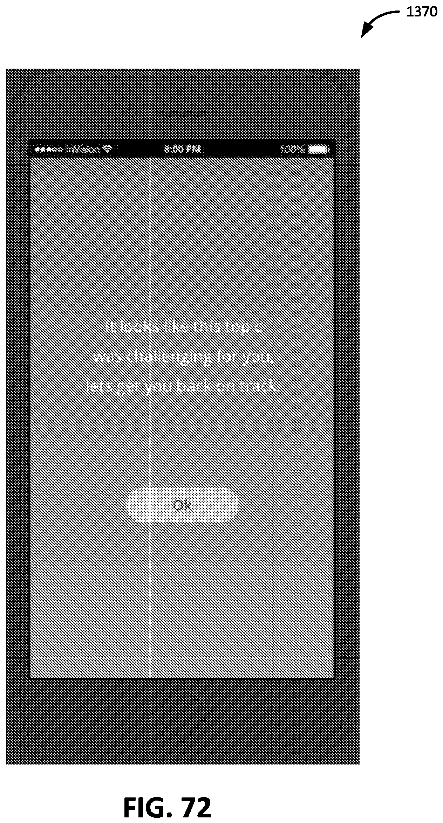

In some embodiments, and subsequent to the solution screenshot 1360, a feedback screenshot 1370 can be provided as indicated in **Figure 72** The solution screenshot 1360 can provide information relating to a mastery and/or non-mastery of the exercise, topic, and/or learning objective associated with the question 1316. In some embodiments, and based on one or more steps that the user incorrectly completed, a recommendation for further content can be provided. In some embodiments, this content can be recommended according to one of the algorithms discussed herein.

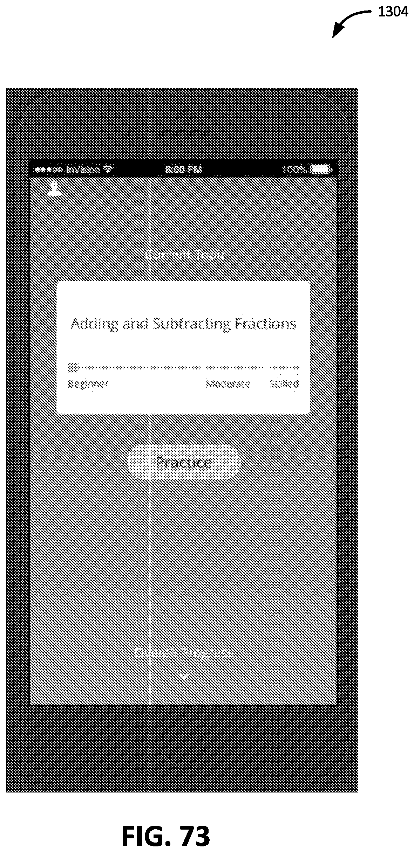

As indicated in **Figure 73****,** the identification of further content can include the generation and display of a new progress screenshot 1304. In some embodiments, the progress screenshot 1304 can be generated based on the identification of the further content.

Referencing Figures 61 through 73, in some embodiments, the content distribution network 100, and specifically the server 102 can receive a plurality of content items and/or problems and can automatically generate a domain graph for and/or with these content items and/or problems. In some embodiments, the domain graph can be generated according to one or several processes disclosed herein. User information can then be received, which user information can identify a user who is an intended recipient of one or several content items and/or problems. Content can be selected for the user and can be delivered to the user. This content can comprise one or several content items and/or problems and this content can be selected according to one or several algorithms in this application. The content can be provided to the user via the user device 106, and specifically via the presentation process 670 and/or via the communications subsystem 532. In some embodiments, the content can be selected by the server 102 and/or by the user device 106. In some embodiments, the user device 106 can launch the user interface 1300 and can provide the content, which can be a question via the question screenshot 1314.

The user can provide a response to the content via, for example, generation of photo data with the shutter button 1324 of the photo screen 1322. The response can, in some embodiments comprise a plurality of response steps, and in some embodiments, the response, including the response steps can be captured in the photo data. Via, in some embodiments, the user device 106, the raw photo data can be converted to a machine readable format and the steps can be automatically identified, separated, and/or extracted. In some embodiments, the user interface can display the raw photo data via a raw pane 1330 and the converted photo data in a conversion pane 1328, and specifically can display the converted photo data so that each step is displayed in a box 1332 in the conversion pane 1328. The user can manipulate a slider 1338 to transition between the raw pane 1330 and the conversion pane 1328 to validate the accuracy of the converted photo data.

The user device 106 can then evaluate the response, and specifically can evaluate some or all of the response steps. In some embodiments, this evaluation can be performed by the response system 406 and/or the response process 676 which, in some embodiments, can be located on the user device 106. In some embodiments, the evaluating of the response, and specifically the evaluating of the response steps can include selecting one of the response steps and determining the correctness of the selected response step. In some embodiments, determining the correctness of the response step can include determining if the response step is linkable with a solution to the question and/or determining a match between the selected response step and a database of correct response steps. In some embodiments, for example, a step of a response is linkable with a solution to a question when the response step is present in the solution graph for the problem In some embodiments, the database of response steps can comprise a tree of operations. In some embodiments, the evaluation of the response and/or of the response steps can be performed according to any of the herein disclosed algorithms.

Each of the steps can, after evaluation, be categorized as at least one of correct, incorrect, or assisted. In some embodiments, an indicator of correctness can be associated with the selected response step, which indicator can indicate the categorization of the response step as at least one of correct, incorrect, or assisted. This stepwise evaluation of the response steps can be repeated until a desired number of the response steps, such as, in some embodiments, all of the response steps have been evaluated and a correctness indicator has been associated with each of the evaluated steps.

The user interface 1300 can display evaluation results as shown in the results screenshot 1340 and can thereby provide an indicator of the correctness of some or all of the response steps. In some embodiments, the display of evaluation results can provide stepwise feedback to the user as to the correctness of some or all of the response steps.

In some embodiments, each step can be associated with at least one learning objective and/or skill. In some embodiments, the learning objective and/or skill associated with each of the response steps can be identified by, for example, the server 102 and/or the user device 106. The user's mastery level for each of the identified learning objectives and/or skills can be updated based on whether the associated response step was correct or incorrect. In some embodiments, the mastery level can be updated by the user device 106 and/or the server 102, and specifically by the summary model process 682.

Based on the determined mastery level, remediation can be selected and/or delivered to the user. In some embodiments, the remediation can comprise at least one of: additional content; and a hint. In some embodiments, the remediation can comprise step-level intervention, such that the remediation is specific to one or several steps for which the user has demonstrated insufficient mastery. In some embodiments, the step-level intervention can be provided in response to the identifying of at least one of the response steps as incorrect. Subsequent to the providing of the remediation, next content such as a next content item, problem, and/or question can be selected and provided to the user. In some embodiments, this next content can be selected and/or provided by the user device 106 and/or the server 102. In some embodiments, the next content can be selected from a set of potential next content based on the updated mastery levels of the plurality of objectives associated with the response steps and/or the objectives of the potential next content.

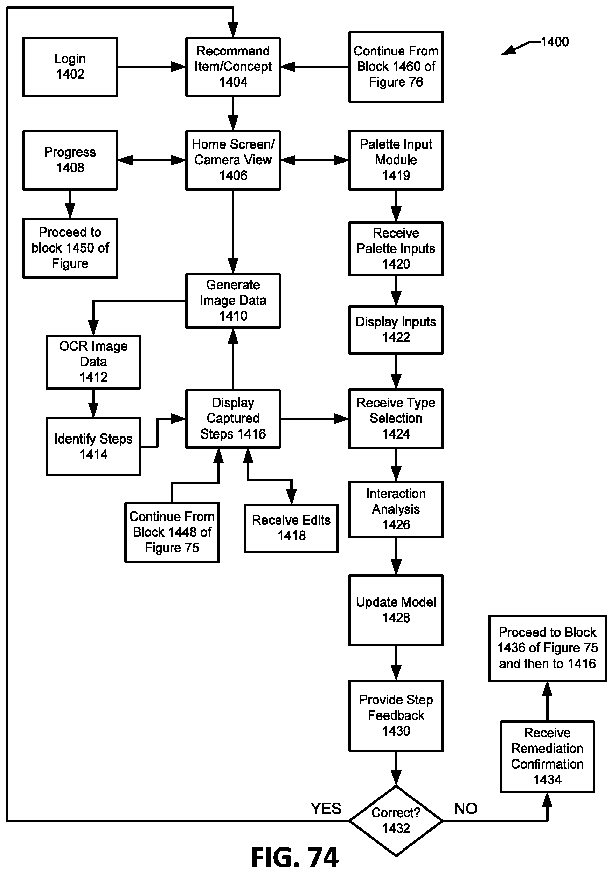

With reference now to **Figure 74****,** a flowchart illustrating one embodiment of a process 1400 for automated content evaluation is shown. In some embodiments, the process 1400 can be performed to evaluate content that is not included in the database server 104. In some embodiments, the process 1400 can be performed to automatically evaluate a solution and/or solution steps for a problem that is not contained in the database server 104. The process 1400 can be performed by all or portions of the system 100 including all or portions of the components and/or module shown in Figures 9 through 12. The process 1400 begins at block 1402, wherein user login information is received. This user login information can be received by the server 102 from the user device 106. At block 1404 a content item or concept is recommended. In some embodiments, this can include all or portions of content recommendations processes disclosed herein such as in, for examples, Figure 38 and/or 39. The content item or concept can be identified for recommendation via the recommendation engine 686. In some embodiments, the step of block 1404 further includes the delivery of the content item to the user.

After recommendation of a content item or concept, the process 1400 can proceed to block 1406, wherein the home screen and/or camera view can be displayed. At Block 1408 user progress through one or several skills can be determined. In some embodiments, a user can advance to block 1408 by indicating a desire for practice via the, user interface, and specifically via the home screen. From block 1408, the process can proceed to block 1450 of Figure

In some embodiments, the process 1400 can proceed to block 1410, wherein image data is generated. In some embodiments, image data can be generated by manipulation of one or several features of the user interface to control one or several image data generating features. In some embodiments, for example, the interface, and specifically the home screen can include one or several features and/or buttons that, when manipulated, cause the capture and/or generation of image data with one or several cameras. In some embodiments, image data can be captured showing the user response to the recommended content item. In some embodiments, for example, the user may hand-write the solution to a problem of the provided content item. This solution can show one or several steps to solving the problem. The user may generate image data of this solution to the problem.

After the image data has been generated, the process 1400 proceeds to block 1412, wherein the image data is analyzed. In some embodiments, this analysis can include the OCRing of the image data to identify words, letter, symbols, characters, and/or numbers in the image data. In some embodiments, this analysis can be performed by the server 102. After the image data has been OCRed, the process 1400 proceeds to block 1414, wherein steps in the response are identified. In some embodiments, the step of block 1414 can include some or all of the processes and/or steps depicted in Figures 31 through 33.

After the steps in the response have been identified, the process 1400 proceeds to block 1416, wherein the captured and/or identified steps are displayed. After the display of the identified steps, user inputs can be received, and specifically, user edits to the displayed steps can be received. In some embodiments, these edits can be received from the user device by the server 102. These received edits can be incorporated into the response and can affect the displayed steps of block 1416.

Returning again to step 1406, the user can provide an input indicating a desire to input response information via a palette input. In some embodiments, this palette input can be received via user manipulation of the user interface and/or via user manipulation of one or several features of the computer such as, for example, a keyboard, a mouse, a tracking pad, or the like. If the user selects response inputs via the palette input module, the process 1400 proceeds to block 1419, wherein the palette input module in generate and/or displayed. The palette input module can comprise one or several panels displayed by the user interface. The palette can include graphical representations of one or several letters, numbers, characters, symbols, or the like. In some embodiments, the manipulation of a feature associated with one of the one or several letters, numbers, characters, symbols, or the like can cause the inputting of that one of the one or several letters, numbers, characters, symbols, or the like. At block 1420, inputs are received from the palette, and these inputs are displayed at block 1422, allowing the user to edit these inputs.

At block 1424, a type selection can be received. In some embodiments, the type selection can be provided by the user via the user device 106. In some embodiments, for example, a single expression, equation, or problem can be solved in many ways. For example, from a single equation, a user can: solve the equation; simplify the equation; take the derivative; and/or find the integral. In embodiments in which the user is provided a question from the database server 104, metadata identifying the desired user action can be associated with the content item. However, in instances in which the process 1400 is used in the evaluation of content not found in the database server 104, this metadata is missing.

This lack of metadata is resolved via the receipt of the type selection. In some embodiments, for example, the user can provide a type selection. The type selection can provide metadata related to the question to allow the evaluation of the response and/or the step-wise evaluation of the response. This type selection can then be provided to the response processor 678.

At block 1426, the user interactions are analyzed. In some embodiments, this analysis can include analysis of the received inputs of block 1420 and/or the generated image data of block 1410. In some embodiments, this analysis can be performed by the response processor 678 based on the type selection received in block 1424. In some embodiments, the step of block 1426 can include the use of the response processor 678 to identify some or all of the possible steps to solving the question linked with the inputs of block 1420 and/or the image data of block 1410. In some embodiments, the response processor 678 can, after identifying some or all of the possible solution steps, map the steps of solution captured in image data in block 1410 and/or received via inputs of block 1420. Based on this mapping, the response processor 678 can identify the response as correct and/or some or all of the steps in the response as correct.

At block 1428, the user model is updated. In some embodiments, the user model can be updated by the model engine 682 based on the analysis of block 1426. In some embodiments, for example, the updating of the user profile can include updating all or portions of the user profile stored in the user profile database 301. In some embodiments, for example, the model engine 682 can update one or several skill levels associated with at least one of the steps in the response and/or with at least one of the solution steps.

At block 1430, step-wise feedback can be provided to the user. In some embodiments, this step-wise feedback can be provided based on the correctness of the response and/or the correctness of one or several steps of the response. In some embodiments, for example, some or all of the steps in the response can be identified as correct and/or incorrect. After the providing of the step feedback, the process 1400 proceeds to decision state 1432, wherein it is determined if the response was correct. In some embodiments, the response is the final step input in the image data generated in block 1410 and/or in the inputs received in block 1420. If it is determined that the response is correct, then the process 1400 can return to 1404, and recommend a new item and/or concept.

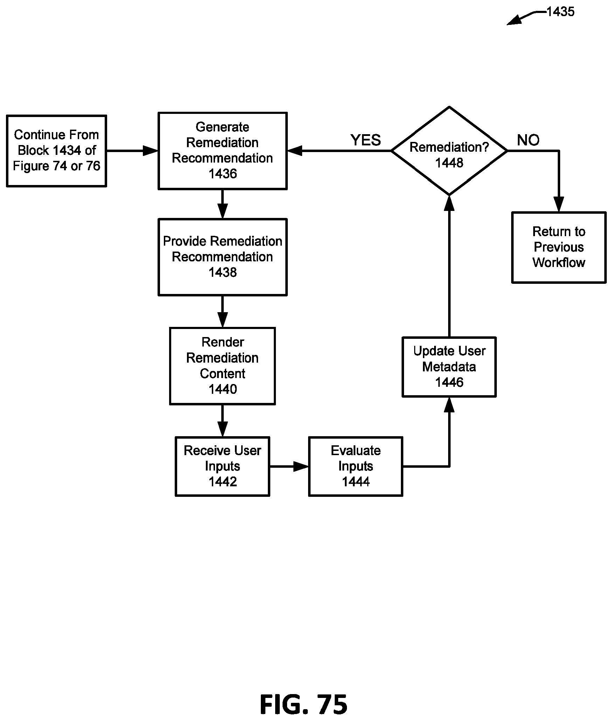

Returning again to decision state 1432, if it is determined that the response is incorrect, the process 1400 can proceed to block 1434, wherein a remediation confirmation can be received. In some embodiments, for example, in the event that the response is incorrect and/or that one or several of the steps in the response is incorrect, then remediation can be offered to the user. In some embodiments, the user can confirm the remediation and/or accept the remediation, such as is indicated in block 1434. In the event that the remediation is confirmed, then the process can proceed to block 1436 of Figure 75, and can then, upon completion of the process of Figure 75, proceed to block 1416.

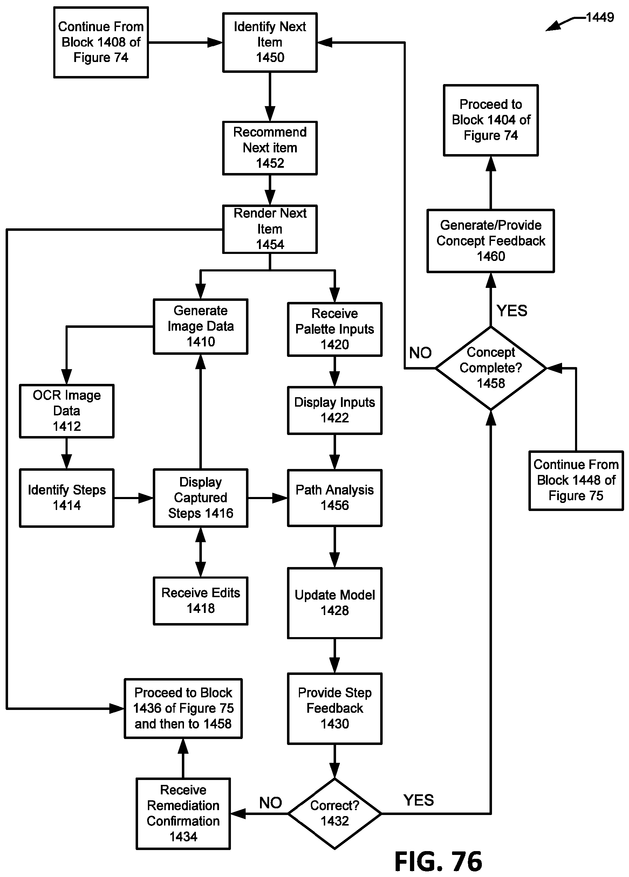

With reference now to **Figure 75****,** a flowchart illustrating one embodiment of a tutoring process 1435 is shown. The process 1435 can be performed in connection with one or both of the processes of Figures 74 and 76. The process can continue from block 1434 of one of Figures 74 or 76, and can proceed to block 1436, wherein a remediation recommendation is generated. In some embodiments, the remediation recommendation can be content selected by the recommendation engine 686 in response to the one or several incorrect steps and/or the incorrect response. The remediation recommendation can comprise content such as, for example, one or several questions, hints, solutions to the missed problem or missed step(s), text\, examples, video or audio segments, or the like. The content recommended as the remediation recommendation can be provided to the user at block 1438. The content can be provided, in some embodiments, via one or both of the presented module 672 and/or the view module 674, and the content of the remediation recommendation can be rendered as indicated in block 1440

At block 1442, one or several user inputs are received. These inputs can be received via generation of image data of the user's work, or via input via, for example, the palette. These inputs can be evaluated in block 1444 by, for example, the response processor 678. Based on the evaluation of the received inputs, the user metadata is updated as indicated in block 1446, and specifically, the user metadata is updated to reflect an increased skill level when the received inputs are correct or a decreased skill level when the received inputs are incorrect. At decision state 1448, it is determined whether to continue the remediation. If it is determined to continue the remediation, then the process 1435 returns to block 1436 and continues as outlined above. If it is determined that remediation is complete, such as when, for example, the user skill level for the one or several attributes and/or skills being remediated meets and/or exceeds a threshold level, then the process 1435 proceeds to the workflow left prior to step 1436. In some embodiments, this can include returning to block 1416 of Figure 74 or returning to block 1458 of Figure 76.

With reference now to **Figure 76****,** a flowchart illustrating one embodiment of a process 1449 for content recommendation and evaluation is shown. In some embodiments, the process 1449 can be performed by all or portions of the CDN 100, and specifically can be performed to provide practice and/or to facilitate mastery of one or several attributes and/or skills. The process 1449 begins at block 1450, wherein a next item is identified. In some embodiments, this next item can be a next question and/or can be content. In some embodiments, the next item can identified by, for example, the recommendation engine 686.

At block 1452, the next item identified in block 1450 is recommended, and in block 1454, the next item is rendered. In some embodiments, the steps of blocks 1452 and 1454 can be performed by all or portions of the CDN 100, and can specifically be performed by all or portions of the presentation process 670, and specifically by the presenter module 672 and/or the view module 674. In some embodiments, an in response to the rendering of the next item, the user can provide an input indicating a need and/or desire for tutoring. In such an embodiments, the process 1449 proceeds to block 1436 of Figure 75, and then continues to block 1458 of the process 1449.

Returning again to block 1454, the process 1449 can proceed to one of blocks 1410 and 1420. Blocks 1410 through 1422 can include steps that can, in some embodiments, be the same as the steps in Figure 74. At block 1410, image data is generated. In some embodiments, image data can be generated by manipulation of one or several features of the user interface to control one or several image data generating features. In some embodiments, for example, the interface, and specifically the home screen can include one or several features and/or buttons that, when manipulated, cause the capture and/or generation of image data with one or several cameras. In some embodiments, image data can be captured showing the user response to the recommended content item. In some embodiments, for example, the user may hand-write the solution to a problem of the provided content item. This solution can show one or several steps to solving the problem. The user may generate image data of this solution to the problem.

After the image data has been generated, the process 1449 proceeds to block 1412, wherein the image data is analyzed. In some embodiments, this analysis can include the OCRing of the image data to identify words, letter, symbols, characters, and/or numbers in the image data. In some embodiments, this analysis can be performed by the server 102. After the image data has been OCRed, the process 1449 proceeds to block 1414, wherein steps in the response are identified. In some embodiments, the step of block 1414 can include some or all of the processes and/or steps depicted in Figures 31 through 33.

After the steps in the response have been identified, the process 1449 proceeds to block 1416, wherein the captured and/or identified steps are displayed. After the display of the identified steps, user inputs can be received, and specifically, user edits to the displayed steps can be received. In some embodiments, these edits can be received from the user device by the server 102. These received edits can be incorporated into the response and can affect the displayed steps of block 1416.

Returning again to step 1406, the user can provide an input indicating a desire to input response information via a palette input. In some embodiments, this palette input can be received via user manipulation of the user interface and/or via user manipulation of one or several features of the computer such as, for example, a keyboard, a mouse, a tracking pad, or the like. If the user selects response inputs via the palette input module, the process 1400 proceeds to block 1419, wherein the palette input module in generate and/or displayed. The palette input module can comprise one or several panels displayed by the user interface. The palette can include graphical representations of one or several letters, numbers, characters, symbols, or the like. In some embodiments, the manipulation of a feature associated with one of the one or several letters, numbers, characters, symbols, or the like can cause the inputting of that one of the one or several letters, numbers, characters, symbols, or the like. At block 1420, inputs are received from the palette, and these inputs are displayed at block 1422, allowing the user to edit these inputs.

At block 1456, the user interactions are analyzed. In some embodiments, this analysis can include analysis of the received inputs of block 1420 and/or the generated image data of block 1410. In some embodiments, this analysis can be performed by the response processor 678 based on the type selection received in block 1424. In some embodiments, the step of block 1426 can include the use of the response processor 678 to identify some or all of the possible steps to solving the question linked with the inputs of block 1420 and/or the image data of block 1410. In some embodiments, the response processor 678 can, after identifying some or all of the possible solution steps, map the steps of solution captured in image data in block 1410 and/or received via inputs of block 1420. Based on this mapping, the response processor 678 can identify the response as correct and/or some or all of the steps in the response as correct.

At block 1428, the user model is updated. In some embodiments, the user model can be updated by the model engine 682 based on the analysis of block 1456. In some embodiments, for example, the updating of the user profile can include updating all or portions of the user profile stored in the user profile database 301. In some embodiments, for example, the model engine 682 can update one or several skill levels associated with at least one of the steps in the response and/or with at least one of the solution steps.

At block 1430, step-wise feedback can be provided to the user. In some embodiments, this step-wise feedback can be provided based on the correctness of the response and/or the correctness of one or several steps of the response. In some embodiments, for example, some or all of the steps in the response can be identified as correct and/or incorrect. After the providing of the step feedback, the process 1400 proceeds to decision state 1432, wherein it is determined if the response was correct. In some embodiments, the response is the final step input in the image data generated in block 1410 and/or in the inputs received in block 1420. If it is determined that the response is incorrect, the process 1400 can proceed to block 1434, wherein a remediation confirmation can be received. In some embodiments, for example, in the event that the response is incorrect and/or that one or several of the steps in the response is incorrect, then remediation can be offered to the user. In some embodiments, the user can confirm the remediation and/or accept the remediation, such as is indicated in block 1434. In the event that the remediation is confirmed, then the process can proceed to block 1436 of Figure 75, and can then, upon completion of the process of Figure 75, proceed to block 1458.

Returning again to decision state 1432, if it is determined that the response is correct, then the process 1449 proceeds to decision state 1458, wherein it is determined if the concept associated with the response is complete. In some embodiments, this can include determining mastery of one or several concepts and/or attributes are mastered. This mastery can be determined similar to other mastery determinations disclosed herein, such as, for example, the determination described in block 710 of Figure 15. If it is determined that the concept is incomplete and/or that mastery has not been achieved, then the process 1449 proceeds to block 1450 and continues as outlined above. Alternatively, if it is determined that the concept is complete and/or that mastery has been achieved, then the process 1449 proceeds to block 1460 and concept feedback is generated and/or provided. In some embodiments, this can include providing an indication to the user of the user's mastery level via, for example, the user interface. After the providing of concept feedback, the process 1449 can, in some embodiments, proceed to block 1404 of Figure 74.

A number of variations and modifications of the disclosed embodiments can also be used. Specific details are given in the above description to provide a thorough understanding of the embodiments. However, it is understood that the embodiments may be practiced without these specific details. For example, well-known circuits, processes, algorithms, structures, and techniques may be shown without unnecessary detail in order to avoid obscuring the embodiments.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof.

Also, it is noted that the embodiments may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks may be stored in a machine readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more memories for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, and/or various other storage mediums capable of storing that contain or carry instruction(s) and/or data.

While the principles of the disclosure have been described above in connection with specific apparatuses and methods, it is to be clearly understood that this description is made only by way of example and not as limitation on the scope of the disclosure.

## Claims

1. A system for automated educational content delivery and evaluation, the system comprising:
memory comprising a content library database comprising: a plurality of content items;
at least one processor configured to:
identify content based on user input;
retrieve, from the content library database, a content item included in the plurality of content items;
automatically decompose the content item into a set of constituent parts;
identify and assign attributes to each constituent part (743);
generate nodes based on the attributes of the constituent parts (744);
generate edges linking the nodes (745);
generate a learning domain graph from the nodes and corresponding edges; and store the learning domain graph (746).

2. The system of claim 1, wherein the at least one processor is configured to provide content to a user based on the domain graph by selecting next content based on connections between nodes in the domain graph.

3. The system of claim 1, wherein the content item includes a table of contents, and wherein the constituent parts include sections, subsections, or chapters.

4. The system of claim 1, wherein the content item includes a mathematical equation.

5. The system of claim 1, wherein the at least one processor is configured to generate the nodes by grouping constituent parts based on attributes by comparing a similarity score to a threshold.

6. The system of claim 5, wherein a grouping of constitute parts includes constitutes parts having the same attributes.

7. The system of claim 5, wherein the at least one processor is configured to group constituent parts by identifying attributes by generating vectors and performing similarity analysis.

8. The system of claim 7, wherein the similarity analysis includes a cosine similarity analysis or a graph similarity analysis.

9. The system of claim 1, wherein the at least one processor is configured to link the nodes by generating a hierarchical relationship between a first node and a second node.

10. The system of claim 1, wherein the at least one processor is configured to link the nodes by generating a prerequisite relationship between a first node and a second node.

11. The system of claim 1, wherein types of attributers are stored in the content library database.

12. The system of claim 1, wherein the attributes include a type of number or a mathematical operation.

13. The system of claim 1, wherein the at least one processor is configured to generate the learning domain graph by generating a tree structure of nodes.

14. The system of claim 1, wherein the content item is a story problem and the at least one processor is configured to decompose the content item by extracting equations using natural language processing, image processing, or parsing.

15. The system of claim 1, wherein the at least one processor is configured to construct a tensor of the attributes of the constituent parts.

16. The system of claim 15, wherein the tensor is a vector or a matrix.

17. The system of claim 15, wherein the at least one processor is configured to provide the tensor to a machine learning model, the machine learning model includes at least one selected from a group consisting of a recursive neural network, a sequence to sequence model, a decision tree, a random forest model, and a based neural net.

18. The system of claim 17, wherein the at least one processor is configured to validate an output of the machine learning model by evaluating the attributes of outputs as compared to the attributes of inputs.

19. The system of claim 17, wherein the at least one processor is configured to validate the output of the machine learning model by determining if the output defines a valid mathematical equation.

20. The system of claim 17, wherein the at least one processor is configured to generate a training characterizing value indicating a degree to which the machine model is trained, and when the training characterizing value does not exceed a threshold, reapplying the output to the machine learning model.

21. The system of claim 1, wherein the at least one processor is configured to select the content item based on an attribute of a user from a user profile associated with the user.

22. The system of claim 1, wherein the learning domain graph includes one or more entry point for a student corresponding to a student skill level in mastering the content item corresponding to the learning domain graph.

23. The system of claim 1, wherein the content item is selected based on input from a user, the input defining at least one attribute of the content.

## Patentansprüche

1. System zum automatisierten Senden und Bewerten von Bildungsinhalt, wobei das System Folgendes umfasst:
einen Speicher, umfassend eine Inhalts-Bibliothekdatenbank, umfassend: eine Vielzahl von Inhaltselementen;
zumindest einen Prozessor, der ausgelegt ist zum:
Identifizieren eines Inhalts basierend auf Benutzereingaben;
Abrufen eines Inhaltselements, das in der Vielzahl von Inhaltselementen enthalten ist, aus der Inhalts-Bibliotheksdatenbank;
automatisches Aufspalten des Inhaltselements in einen Satz von Bestandteilen;
Identifizieren und Zuweisen von Attributen zu jedem Bestandteil (743);
Erzeugen von Knoten basierend auf den Attributen der Bestandteile (744);
Erzeugen von Kanten, die die Knoten verbinden (745);
Erzeugen eines Lerndomänengraphen ausgehend von den Knoten und entsprechenden Kanten; und Speichern des Lerndomänengraphen (746).

2. System nach Anspruch 1, wobei der zumindest eine Prozessor ausgelegt ist, um einem Benutzer einen Inhalt basierend auf dem Domänengraphen durch Auswählen des nächsten Inhalts basierend auf Verbindungen zwischen Knoten im Domänengraphen bereitzustellen.

3. System nach Anspruch 1, wobei das Inhaltselement ein Inhaltsverzeichnis umfasst und wobei die Bestandteile Abschnitte, Unterabschnitte oder Kapitel umfassen.

4. System nach Anspruch 1, wobei das Inhaltselement eine mathematische Gleichung umfasst.

5. System nach Anspruch 1, wobei der zumindest eine Prozessor ausgelegt ist, um die Knoten zu erzeugen, indem Bestandteile basierend auf Attributen durch Vergleichen einer Ähnlichkeitsbewertung mit einem Schwellenwert gruppiert werden.

6. System nach Anspruch 5, wobei ein Gruppieren von Bestandteilen Bestandteile mit denselben Attributen umfasst.

7. System nach Anspruch 5, wobei der zumindest eine Prozessor ausgelegt ist, um Bestandteile durch Identifizieren von Attributen durch Erzeugen von Vektoren und Durchführen einer Ähnlichkeitsanalyse zu gruppieren.

8. System nach Anspruch 7, wobei die Ähnlichkeitsanalyse eine Cosinus-Ähnlichkeitsanalyse oder eine Graphenähnlichkeitsanalyse umfasst.

9. System nach Anspruch 1, wobei der zumindest eine Prozessor ausgelegt ist, um die Knoten durch Erzeugen einer hierarchischen Beziehung zwischen einem ersten Knoten und einem zweiten Knoten zu verbinden.

10. System nach Anspruch 1, wobei der zumindest eine Prozessor ausgelegt ist, um die Knoten durch Erzeugen einer erforderlichen Beziehung zwischen einem ersten Knoten und einem zweiten Knoten zu verbinden.

11. System nach Anspruch 1, wobei Typen von Attributen in der Inhalts-Bibliotheksdatenbank gespeichert sind.

12. System nach Anspruch 1, wobei die Attribute einen Typ einer Zahl oder einer mathematischen Operation umfassen.

13. System nach Anspruch 1, wobei der zumindest eine Prozessor ausgelegt ist, um den Lerndomänengraphen durch Erzeugen einer Baumstruktur von Knoten zu erzeugen.

14. System nach Anspruch 1, wobei das Inhaltselement ein Erzählungsproblem ist und der zumindest eine Prozessor ausgelegt ist, um das Inhaltselement durch Extrahieren von Gleichungen unter Verwendung von Verarbeitung natürlicher Sprache, Bildverarbeitung oder Parsen aufzuspalten.

15. System nach Anspruch 1, wobei der zumindest eine Prozessor ausgelegt ist, um einen Tensor der Attribute der Bestandteile zu konstruieren.

16. System nach Anspruch 15, wobei der Tensor ein Vektor oder eine Matrix ist.

17. System nach Anspruch 15, wobei der zumindest eine Prozessor ausgelegt ist, um den Tensor für ein Modell maschinellen Lernens bereitzustellen, wobei das Modell maschinellen Lernens zumindest eines umfasst, das aus der aus einem rekurrierenden neuronalen Netz, einem Sequenz-Sequenz-Modell, einem Entscheidungsbaum, einem Zufallswaldmodell und einem basierten neuronalen Netz bestehenden Gruppe ausgewählt ist.

18. System nach Anspruch 17, wobei der zumindest eine Prozessor ausgelegt ist, um eine Ausgabe des Modells maschinellen Lernens durch Bewerten der Attribute von Ausgaben verglichen mit den Attributen von Eingaben zu validieren.

19. System nach Anspruch 17, wobei der zumindest eine Prozessor ausgelegt ist, um die Ausgabe des Modells maschinellen Lernens durch Bestimmen, ob die Ausgabe eine gültige mathematische Gleichung definiert, validiert.

20. System nach Anspruch 17, wobei der zumindest eine Prozessor ausgelegt ist, um einen Trainingscharakterisierungswert zu erzeugen, der einen Grad angibt, zu dem das maschinelle Modell trainiert ist, und wenn der Trainingscharakterisierungswert einen Schwellenwert nicht überschreitet, die Ausgabe erneut auf das Modell maschinellen Lernens anzuwenden.

21. System nach Anspruch 1, wobei der zumindest eine Prozessor ausgelegt ist, um das Inhaltselement basierend auf einem Attribut eines Benutzers aus einem Benutzerprofil, das dem Benutzer zugeordnet ist, auszuwählen.

22. System nach Anspruch 1, wobei der Lerndomänengraph einen oder mehrere Eintrittspunkte für einen Studenten entsprechend einem Wissensniveau des Studenten zum Bewältigen des Inhaltselements entsprechend dem Lerndomänengraphen umfasst.

23. System nach Anspruch 1, wobei das Inhaltselement basierend auf einer Eingabe von einem Benutzer ausgewählt wird, wobei die Eingabe zumindest ein Attribut des Inhalts definiert.

## Revendications

1. Système d'évaluation et de distribution automatisées de contenus éducatifs, le système comprenant :
une mémoire comprenant une base de données de bibliothèque de contenus comprenant : une pluralité d'éléments de contenu ;
au moins un processeur configuré pour :
identifier un contenu sur la base d'une entrée d'utilisateur ;
récupérer, à partir de la base de données de bibliothèque de contenus, un élément de contenu inclus dans la pluralité d'éléments de contenu ;
décomposer automatiquement l'élément de contenu en un ensemble de parties constitutives ;
identifier et attribuer des attributs à chaque partie constitutive (743) ;
générer des nœuds sur la base des attributs des parties constitutives (744) ;
générer des bords reliant les nœuds (745) ;
générer un graphique de domaine d'apprentissage à partir des nœuds et des bords correspondants ; et
stocker le graphique de domaine d'apprentissage (746).

2. Système selon la revendication 1, dans lequel le au moins un processeur est configuré pour fournir du contenu à un utilisateur sur la base du graphique de domaine en sélectionnant un contenu suivant sur la base de connexions entre des nœuds dans le graphique de domaine.

3. Système selon la revendication 1, dans lequel l'élément de contenu inclut un sommaire, et dans lequel les parties constitutives incluent des sections, des sous-sections ou des chapitres.

4. Système selon la revendication 1, dans lequel l'élément de contenu inclut une équation mathématique.

5. Système selon la revendication 1, dans lequel le au moins un processeur est configuré pour générer les nœuds en regroupant des parties constitutives sur la base d'attributs en comparant un score de similitude à un seuil.

6. Système selon la revendication 5, dans lequel un groupement de parties constitutives inclut des parties constitutives présentant les mêmes attributs.

7. Système selon la revendication 5, dans lequel le au moins un processeur est configuré pour regrouper des parties constitutives en identifiant des attributs en générant des vecteurs et en effectuant une analyse de similitude.

8. Système selon la revendication 7, dans lequel l'analyse de similitude inclut une analyse de similitude de cosinus ou une analyse de similitude de graphique.

9. Système selon la revendication 1, dans lequel le au moins un processeur est configuré pour lier les nœuds en générant une relation hiérarchique entre un premier nœud et un deuxième nœud.

10. Système selon la revendication 1, dans lequel le au moins un processeur est configuré pour lier les nœuds en générant une relation préalable entre un premier nœud et un second nœud.

11. Système selon la revendication 1, dans lequel des types d'attributs sont stockés dans la base de données de bibliothèque de contenus.

12. Système selon la revendication 1, dans lequel les attributs incluent un type de nombre ou une opération mathématique.

13. Système selon la revendication 1, dans lequel le au moins un processeur est configuré pour générer le graphique de domaine d'apprentissage en générant une structure arborescente de nœuds.

14. Système selon la revendication 1, dans lequel l'élément de contenu est un problème d'histoire et le au moins un processeur est configuré pour décomposer l'élément de contenu en extrayant des équations en utilisant un traitement de langage naturel, un traitement d'image ou une analyse syntaxique.

15. Système selon la revendication 1, dans lequel le au moins un processeur est configuré pour construire un tenseur des attributs des parties constitutives.

16. Système selon la revendication 15, dans lequel le tenseur est un vecteur ou une matrice.

17. Système selon la revendication 15, dans lequel le au moins un processeur est configuré pour fournir le tenseur à un modèle d'apprentissage automatique, le modèle d'apprentissage automatique inclut au moins un choisi dans un groupe constitué d'un réseau neuronal récursif, d'un modèle de séquence à séquence, d'un arbre de décision, d'un modèle de forêt aléatoire et d'un réseau neuronal basé.

18. Système selon la revendication 17, dans lequel le au moins un processeur est configuré pour valider une sortie du modèle d'apprentissage automatique en évaluant les attributs de sorties par comparaison aux attributs d'entrées.

19. Système selon la revendication 17, dans lequel le au moins un processeur est configuré pour valider la sortie du modèle d'apprentissage automatique en déterminant si la sortie définit une équation mathématique valide.

20. Système selon la revendication 17, dans lequel le au moins un processeur est configuré pour générer une valeur de caractérisation d'entraînement indiquant un degré auquel le modèle de machine est entraîné, et lorsque la valeur de caractérisation d'entraînement ne dépasse pas un seuil, réappliquer la sortie au modèle d'apprentissage automatique.

21. Système selon la revendication 1, dans lequel le au moins un processeur est configuré pour sélectionner l'élément de contenu sur la base d'un attribut d'un utilisateur à partir d'un profil d'utilisateur associé à l'utilisateur.

22. Système selon la revendication 1, dans lequel le graphique de domaine d'apprentissage inclut un ou plusieurs points d'entrée pour un étudiant correspondant à un niveau de compétence d'étudiant dans la maîtrise de l'élément de contenu correspondant au graphique de domaine d'apprentissage.

23. Système selon la revendication 1, dans lequel l'élément de contenu est sélectionné sur la base d'une entrée provenant d'un utilisateur, l'entrée définissant au moins un attribut du contenu.
